# EUROPÄISCHE PATENTSCHRIFT

(11) **EP 3 043 881 B1**
(45) Veröffentlichungstag und Bekanntmachung des Hinweises auf die Patenterteilung: **18.07.2018**
(21) Anmeldenummer: 14781055.0
(22) Anmeldetag: 06.09.2014
(51) Int. Cl.: B01D 35/147, B01D 29/21

(54) **FILTER MIT EINEM FILTERUMGEHUNGSVENTIL UND FILTEREINSATZ DAFÜR**
FILTER WITH A BYPASS VALAVE AND A FILTER ELEMENT THEREFOR
FILTRE AVEC SOUPAPE DE CONTOURNEMENT ET CARTOUCHE FILTRANTE POUR LE FILTRE

(30) Priorität: 10.09.2013 US 201361875834 P; 04.04.2014 US 201461975121 P; 28.08.2014 DE 202014104029 U
(43) Veröffentlichungstag der Anmeldung: 20.07.2016
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2014/002400
(87) Internationale Veröffentlichungsnummer: WO 2015/036107

(56) Entgegenhaltungen:
- EP-A1- 1 616 611
- EP-A1- 2 412 417
- DE-A1- 19 644 647
- DE-A1-102010 043 836
- DE-A1-102011 005 106
- DE-U1-202007 008 483
- US-A1- 2013 228 503

## Beschreibung

Die vorliegende Erfindung betrifft einen Filter mit einem Filtergehäuse mit einem Einlass für zu filternde Flüssigkeit und einem Auslass für gefilterte Flüssigkeit, mit einem eine Rohseite und eine Reinseite des Filters voneinander trennenden austauschbaren Filtereinsatz und mit einem Filterumgehungsventil, das aus einem Ventilsitz und aus einem relativ dazu beweglich geführten, in Schließrichtung vorbelasteten Ventilkörper besteht.

Ein erster Filter der eingangs genannten Art ist aus EP 2 412 417 A1 bekannt. Ein den Ventilsitz aufweisendes Bauteil ist hier mit dem Deckel des Filtergehäuses verrastet und somit filterfest ausgeführt. Der Ventilkörper und die diesen in Schließrichtung vorbelastende Feder sind dagegen Teile des austauschbaren Filtereinsatzes. Als nachteilig wird dabei angesehen, dass der Filtereinsatz Führungsmittel für den Ventilkörper benötigt und dass dadurch seine Fertigung aufwändig ist.

Ein weiterer Filter der eingangs genannten Art ist aus US 6 579 448 B2 bekannt. Dieses Dokument zeigt einen Filter mit einem auswechselbaren Filtereinsatz und mit einem Filterumgehungsventil. Ein Ventilsitz des Filterumgehungsventils ist am Filtereinsatz, konkret an dessen oberer Endscheibe, angeordnet. Ein Ventilkörper, eine diesen in Schließrichtung vorbelastende Feder und eine Federstütze sind gehäusefest ausgebildet. Konkret ist die Federstütze an einem zentralen gehäusefesten Rohrstutzen oder Stützkörper vorgesehen.

Ein weiterer Filter ist aus US 6 685 829 B1 bekannt. Dieses Dokument zeigt einen Filter mit einem auswechselbaren Filtereinsatz und mit einem Filterumgehungsventil. Ein Ventilsitz ist am Filtereinsatz, hier konkret an dessen unterer Endscheibe, vorgesehen. Ein Ventilkörper, eine diesen in Schließrichtung vorbelastende Feder und eine Federstütze sind hier gehäusefest ausgeführt. Der Ventilkörper ist an einem zentralen gehäusefesten, jedoch axial begrenzt verschiebbaren, Rohrstutzen ausgebildet. Die Feder ist als Druckfeder zwischen dem Rohrstutzen und dem Gehäuse angeordnet.

Das Dokument DE 10 2009 021 973 A1 zeigt einen weiteren Filter mit einem auswechselbaren Filtereinsatz und mit einem Filterumgehungsventil. Der Ventilsitz, der Ventilkörper, die Feder und eine erste Federstütze des Filterumgehungsventils sind hier Teile des Filtereinsatzes. An einem filterfesten zentralen Rohrstutzen ist eine zweite Federstütze vorgesehen, die bei einem Aufsetzen des Filtereinsatzes auf den Rohrstutzen beim Einbauen des Filtereinsatzes in das Filtergehäuse das Abstützen der Feder übernimmt und deren Vorspannung erhöht.

Aus den Dokumenten US 8 123 937 B2 sind weitere Filter mit einem austauschbaren Filtereinsatz und mit einem Filterumgehungsventil bekannt. Der Ventilsitz und der Ventilkörper des Filterumgehungsventils sind hier jeweils am Filtereinsatz vorgesehen, konkret an dessen oberer Endscheibe. Eine den Ventilkörper in Schließrichtung vorbelastende Druckfeder und ein zusätzlicher Betätigungskörper, der bei eingebautem Filtereinsatz die Federkraft auf den Ventilkörper überträgt, sind gehäusefest angeordnet, konkret in einem gehäusefesten zentralen Stützkörper.

Das Dokument WO2006/112 853 A1 zeigt ebenfalls einen Filter mit einem auswechselbaren Filtereinsatz und mit einem Filterumgehungsventil. Der Ventilsitz ist hier am Filtereinsatz vorgesehen, konkret an dessen oberer Endscheibe. Ein Ventilkörper, eine diesen in Schließrichtung vorbelastende Feder und eine Federstütze sind gehäusefest ausgeführt. Konkret sind der Ventilkörper und die Feder in einem oberen Endbereich eines zentralen gehäusefesten Stützkörpers geführt. Die Federstütze ist ebenfalls an dem Stützkörper ausgebildet.

Bei Filtern der vorstehend beschriebenen Art, bei denen der Ventilsitz am auswechselbaren Filtereinsatz und der Ventilkörper filterfest ausgeführt sind, kommt es nach jedem Filtereinsatzwechsel zu einer Ventilpaarung mit zusammenwirkenden Ventilbauteilen, die nicht zuvor auf Dichtheit geprüft ist und auch nicht vorab auf Dichtheit prüfbar ist. Dies führt in der Praxis relativ häufig zu in ihrer Schließstellung undichten Filterumgehungsventilen, durch die in unerwünschter Weise ein ständiger Flüssigkeitsstrom fließt, der ungefiltert ist und der die für die eigentlich vorgesehene Verwendung der gefilterten Flüssigkeit nötige Reinheit beeinträchtigt. Die aus dem Stand der Technik gemäß den drei vorstehend zuletzt genannten Dokumenten bekannten Lösungen, neben dem Ventilsitz auch den Ventilkörper am auswechselbaren Filtereinsatz vorzusehen, erfordern einen zusätzlichen Betätigungskörper und teils sogar eine weitere Feder, was nachteilig die Zahl der Bauteile und damit den Herstellungs- und Montageaufwand erhöht. Auch werden hierdurch die Filtereinsätze konstruktiv deutlich aufwendiger und dadurch teurer, was sich bei jedem Filtereinsatzwechsel erneut bemerkbar macht. Schließlich weisen die bekannten Filter den Nachteil auf, dass es relativ aufwendig ist, den Öffnungsdruck des Filterumgehungsventils zu verändern.

Für die vorliegende Erfindung stellt sich daher die Aufgabe, einen Filter der eingangs genannten Art zu schaffen, der die Nachteile des Standes der Technik vermeidet und der insbesondere eine gute und dauerhafte Dichtheit des Filterumgehungsventils in seiner Schließstellung gewährleistet, der für seine Funktion möglichst wenige Bauteile benötigt und kostengünstig herstellbar ist und bei dem es mit geringem technischen Aufwand möglich ist, den Öffnungsdruck des Filterumgehungsventils zu verändern.

Die Lösung der Aufgabe gelingt erfindungsgemäß mit einem Filter der eingangs genannten Art, der dadurch gekennzeichnet ist, dass der Ventilsitz filterfest im Filter angeordnet ist, dass der Ventilkörper filterfest im Filter geführt ist, dass eine den Ventilkörper in Schließrichtung vorbelastende Feder filterfest im Filter geführt ist und dass der Filtereinsatz eine in dessen in das Filtergehäuse eingebautem Zustand die Feder an ihrem vom Ventilkörper abgewandten Ende abstützende und vorspannende Federstütze aufweist.

Mit der Erfindung wird vorteilhaft erreicht, dass die unmittelbar zusammenwirkenden Ventilteile bei der Herstellung des Filters auf Dichtheit geprüft werden können, weil der Ventilsitz und der Ventilkörper des Filterumgehungsventils beide filterfeste Bauteile sind und somit schon ohne einen eingebauten Filtereinsatz diese Ventilteile im Filter vorhanden sind. Vorteilhaft ist zudem, dass der Ventilsitz und der Ventilkörper des Filterumgehungsventils immer im Filter verbleiben, wenn dessen Filtereinsatz gewechselt wird, wodurch ungeprüfte und möglicherweise undichte Ventilpaarungen ausgeschlossen werden.

Ein wesentlicher weiterer Vorteil liegt darin, dass es nur einen geringen Aufwand erfordert, den Öffnungsdruck des Filterumgehungsventils zu verändern, indem einfach der Filtereinsatz hinsichtlich der Lage oder Länge der die Feder abstützenden und vorspannenden Federstütze verändert wird. Auf diese Weise kann die Feder beim Einbauen des Filtereinsatzes mehr oder weniger stark vorgespannt werden, was ein problemloses Einstellen des gewünschten Öffnungsdrucks des Filterumgehungsventils erlaubt, selbst innerhalb einer laufenden Serienherstellung.

Vorteilhaft ist auch, dass dabei das Filterumgehungsventil mit nur einer Feder auskommt und neben dem Ventilkörper keinen zusätzlichen beweglichen Betätigungskörper benötigt. Der Filtereinsatz braucht abgesehen von der Federstütze keine weiteren Teile des Filterumgehungsventils aufzunehmen oder aufzuweisen, wodurch der Filtereinsatz als Verbrauchsteil technisch einfach und preiswert bleibt.

Eine vorteilhafte Ausgestaltung des Filters sieht vor, dass das Filtergehäuse in seinem Inneren einen zentralen Rohrstutzen aufweist, dass der Ventilsitz an dem Rohrstutzen ausgebildet oder angebracht ist und dass der Ventilkörper und die Feder an dem Rohrstutzen geführt sind. In dieser Ausführung des Filters wird der zentrale Rohrstutzen für eine integrierte Unterbringung des Filterumgehungsventils genutzt, was vorteilhaft einen zusätzlichen Bauraumbedarf vermeidet.

Weiter schlägt die Erfindung vor, dass der Ventilsitz durch einen am Außenumfang des Rohrstutzens axial fest sowie dicht angeordneten Ringkörper mit mindestens einer in seiner Axialrichtung verlaufenden Durchlassöffnung gebildet ist. Das Innere des Rohrstutzens bleibt so für den Durchfluss gefilterter Flüssigkeit frei.

Damit einerseits bei Bedarf ein ausreichend großer Strömungsquerschnitt für die Umgehung des Filters zur Verfügung gestellt werden kann und um andererseits den Ringkörper ausreichend und dauerhaft stabil zu gestalten, wird vorgeschlagen, dass im Ringkörper in dessen Umfangsrichtung voneinander beabstandet mehrere Durchlassöffnungen angebracht sind.

Bevorzugt sind dabei aus strömungs- und herstellungstechnischen Gründen die Durchlassöffnungen im Querschnitt rund oder ringsegmentförmig ausgebildet.

Zur sicheren und dauerhaften Gewährleistung der gewünschten Dichtheit des Filterumgehungsventils in dessen Schließstellung ist vorgesehen, dass der durch den Ringkörper gebildete Ventilsitz aus einem elastomeren Material besteht oder zumindest an seiner den Ventilsitz bildenden Stirnseite mit einer Elastomerauflage versehen ist oder dass der Ventilkörper aus einem elastomeren Material besteht oder zumindest an seiner dem Ventilsitz zugewandten Seite mit einer Elastomerauflage versehen ist.

Entsprechend der zuvor beschriebenen Gestaltung des Ventilsitzes ist zweckmäßig der Ventilkörper durch einen auf dem Außenumfang des Rohrstutzens geführten und axial verschiebbaren Ringventilkörper gebildet. Damit ist der Ventilkörper technisch einfach und doch sicher in Axialrichtung verschiebbar geführt und kann sich so zwischen seiner am Ventilsitz anliegenden Schließstellung und einer vom Ventilsitz beabstandeten Öffnungsstellung bewegen.

Um im Laufe der Einsatzzeit des Filters möglicherweise durch eine relative Rotation von Ventilkörper und Ventilsitz entstehende Undichtigkeiten des Filterumgehungsventils in seiner Schließstellung zu vermeiden, sieht eine weitere Ausgestaltung der Erfindung vor, dass eine den Ventilkörper auf dem Außenumfang des Rohrstutzens axial verschiebbar führende Führung eine Sperre gegen ein Verdrehen des Ventilkörpers in Umfangsrichtung relativ zu dem Rohrstutzen bildet. Eine derartige Sperre kann beispielsweise durch eine oder mehrere in Axialrichtung verlaufende Nuten am einen der beiden Bauteile und eine oder mehrere darin verlaufende Rippen am anderen der beiden Bauteile technisch einfach realisiert werden.

Um ein verkantungs- und klemmfreies Führen des Ventilkörpers auf dem Rohrstutzen, ein sicheres Abdichten des Filterumgehungsventils in seiner Schließstellung und eine sichere und exakte Anlage der Feder am Ventilkörper zu gewährleisten, ist bevorzugt vorgesehen, dass der Ventilkörper im Querschnitt L-förmig mit einem in Axialrichtung verlaufenden längeren L-Schenkel und einem in Radialrichtung nach außen oder nach innen weisenden kürzeren L-Schenkel ausgebildet ist, wobei eine dem Ventilsitz zugewandte Stirnseite des kürzeren L-Schenkels eine mit dem Ventilsitz zusammenwirkende Fläche des Ventilkörpers bildet, wobei eine von dem Ventilsitz abgewandte Stirnseite des kürzeren L-Schenkels eine Anlagefläche und der Außenumfang oder Innenumfang des längeren L-Schenkels eine Zentrierfläche für die Feder bildet und wobei der Innenumfang des Ventilkörpers eine Führungsfläche zum Führen des Ventilkörpers auf dem Außenumfang des Rohrstutzens bildet.

Die Federstütze für die den Ventilkörper des Filterumgehungsventils in Schließrichtung vorbelastende Feder ist erfindungsgemäß am Filtereinsatz vorgesehen, wobei in konkreter Weiterbildung bevorzugt die Federstütze durch einen oder an einem einen Teil des Filtereinsatzes bildenden Stützkörper oder durch eine oder an einer Stirnscheibe des Filtereinsatzes ausgebildet ist. Für die Federstütze werden also ohnehin am oder im Filtereinsatz vorhandene Elemente genutzt, was einen zusätzlichen Bauteileaufwand vermeidet.

Um das Zusammenwirken von Feder und Federstütze möglichst sicher und zuverlässig zu gestalten, schlägt die Erfindung vor, dass zwischen dem freien Ende der Federstütze und dem diesem zugewandten Ende der Feder ein Zwischenring angeordnet ist, der auf dem Außenumfang des Rohrstutzens axial verschiebbar geführt ist und an dessen von der Federstütze abgewandter Seite die Feder und an dessen von der Feder abgewandter Seite bei eingebautem Filtereinsatz die Federstütze anliegt. Vorteilhaft kann der Zwischenring an seinen beiden axialen Seiten unterschiedlich und insbesondere jeweils optimal an die Feder einerseits und die Federstütze andererseits angepasst gestaltet und geformt sein.

Damit die Feder in ihrer vorgesehenen Lage auch dann sicher gehalten wird, wenn sich gerade kein Filtereinsatz im Filter befindet, ist zweckmäßig auf der Seite der Feder, die vom Ventilkörper abgewandt ist, auf dem Rohrstutzen ein Anschlag angeordnet, von dem bei in das Filtergehäuse eingebautem Filtereinsatz das ventilkörperferne Ende der Feder einen axialen Abstand aufweist und an dem bei aus dem Filtergehäuse ausgebauten Filtereinsatz das ventilkörperferne Ende der Feder unmittelbar oder mittelbar anliegt.

Eine erste diesbezügliche Weiterbildung sieht vor, dass der Anschlag durch einen in Axial- und Umfangsrichtung fest am Rohrstutzen angeordneten Anschlagkragen gebildet ist, der einen radial nach außen vorragenden Kragenteil mit einem oder mehreren über dessen Umfang verteilten offenen Zwischenräumen aufweist.

Eine dazu alternative Ausgestaltung sieht vor, dass der Anschlag durch in Axial- und Umfangsrichtung fest am Rohrstutzen angeordnete oder mit diesem einstückige Anschlagzungen gebildet ist, die jeweils eine radial nach außen vorragende Anschlaglasche aufweisen, wobei zwischen je zwei Anschlaglaschen über den Umfang des Rohrstutzens verteilte offenen Zwischenräumen bestehen.

Um den Einbau von ungeeigneten Fremd-Filtereinsätzen in den erfindungsgemäßen Filter zu verhindern, wird vorgeschlagen, dass die Federstütze einen oder mehrere Stützarme aufweist, die entsprechend der Form und Anordnung der offenen Zwischenräume geformt und angeordnet sind und die beim Einbauen des Filtereinsatzes in das Filtergehäuse durch die offenen Zwischenräume hindurch verlaufen und mit dem Anschlag eine Schlüssel-Schloss-Codierung bilden. Hiermit wird erreicht, dass nur solche Filtereinsätze in den Filter einbaubar sind, die die passende Codierung in Form einer bestimmten Form und Anordnung der Arme aufweisen. Fremd-Filtereinsätze, die die erforderliche Codierung nicht aufweisen, lassen sich entweder nicht einbauen, weil sie mit dem Kragenteil kollidieren, oder können die Feder nicht abstützen, weil ihnen die Federstütze fehlt.

Weiter wird vorgeschlagen, dass der Anschlag an seiner federabgewandten Seite zwischen je zwei einander benachbarten Zwischenräumen jeweils eine einzelne Einführschräge oder zwei dachförmig verlaufende Einführschrägen aufweist, mittels welchen bei einem Einbauen des Filtereinsatzes die daran angeordneten Stützarme der Federstütze selbsttätig in die Zwischenräume führbar sind. Somit ist gewährleistet, dass eine gegenseitige Findung von Stützarmen und Zwischenräumen auch ohne besondere Aufmerksamkeit oder Bedienungsschritte des Montage- oder Wartungspersonals erfolgt.

In einer besonders vorteilhaften Ausführung ist der erfindungsgemäße Filter als Anschraubwechselfilter ausgeführt, wobei eine Stirnseite des Filters als Verbindungsflansch zum Verbinden des Filters mit einem Anschlussflansch einer einen Kreislauf mit zu filternder Flüssigkeit besitzenden Vorrichtung, wie Brennkraftmaschine eines Kraftfahrzeugs, ausgebildet ist und wobei ein Endbereich des Rohrstutzens im Bereich des Verbindungsflansches ein Schraubgewinde aufweist, welches mit einem Gegengewinde im oder am Anschlussflansch verschraubbar ist. In dieser Ausführung kann der Filter gemäß Erfindung als Ersatz für eine herkömmliche, nur komplett austauschbare Anschraubfilterpatrone eingesetzt werden, ohne dass auf der Seite des Anschlussflansches irgendwelche Änderungen oder Anpassungen nötig werden. Je nach Vorgabe durch den Anschlussflansch ist der Verbindungsflansch des Filters passend gestaltet, zum Beispiel mit einem aus dem Filtergehäuse axial vorragenden zentralen Rohrstutzen. Für in der Praxis ebenfalls bekannte Anschlussflansche mit einem nach außen vorstehenden Gewindestutzen kann der erfindungsgemäße Filter natürlich auch mit einem zentralen Rohrstutzen ausgeführt sein, der mit der Ebene des Verbindungsflansches bündig ist oder gegenüber dieser zurückversetzt liegt.

Beispielsweise ist das Schraubgewinde am Endbereich des Rohrstutzens ein Außengewinde und das Gegengewinde ist ein Innengewinde im Anschlussflansch.

Alternativ kann das Schraubgewinde am Endbereich des Rohrstutzens ein Innengewinde sein und das Gegengewinde kann ein Außengewinde an einem am Anschlussflansch angeordneten Gewindenippel sein.

Bei dem Filter kann der Rohrstutzen fest und unlösbar mit dem Filtergehäuse verbunden sein und das Filtergehäuse kann, insbesondere zum Zweck einer Filterwartung, zusammen mit dem Rohrstutzen als Einheit von dem Anschlussflansch abschraubbar sein.

Alternativ dazu kann der Rohrstutzen lösbar mit dem Filtergehäuse verschraubt sein und es kann nach einem ersten Anschrauben des Filters an den Anschlussflansch der Rohrstutzen dauerhaft mit dem Anschlussflansch verbunden bleiben, sodass danach das Filtergehäuse ohne den Rohrstutzen von dem Anschlussflansch abschraubbar ist.

In einer Ausgestaltung des Filters ist der Rohrstutzen einteilig oder einstückig ausgeführt.

Alternativ dazu kann der Rohrstutzen aus zwei miteinander lösbar verbundenen, insbesondere miteinander verschraubten, Rohrstutzenabschnitten gebildet sein.

Für die zweiteilige Ausgestaltung des Rohrstutzens ist bevorzugt weiter vorgesehen, dass ein erster, flanschseitiger Rohrstutzenabschnitt den Ventilsitz, den Ventilkörper und die Feder aufweist oder trägt und nach einem ersten Anschrauben des Filters an den Anschlussflansch dauerhaft mit diesem verbunden bleibt und dass ein zweiter, flanschferner Rohrstutzenabschnitt fest und unlösbar mit dem Filtergehäuse verbunden ist.

Um ein Leerlaufen des Filters bei Stillstand des Flüssigkeitskreislaufs zu verhindern, wird vorgeschlagen, dass der erste, flanschseitige Rohrstutzenabschnitt ein den Einlass des Filters überdeckendes Rücklaufsperrventil aufweist oder trägt.

Dabei kann in weiterer Ausgestaltung das Rücklaufsperrventil eine flexible Ventilmembran und einen starren Membranträger aufweisen, die jeweils den flanschseitigen Rohrstutzenabschnitt umgeben, und der Membranträger kann mit dem ersten Rohrstutzenabschnitt einstückig ausgebildet oder lagefest verbunden, vorzugsweise verrastet, sein. Alternativ kann der Membranträger eine flanschartige Erweiterung des Ventilsitzes, also ein Teil des Filterumgehungventils, sein. Hiermit wird in jeder der genannten Ausführungen eine platzsparende Unterbringung und technisch einfache Integration des Rücklaufsperrventils erreicht.

Weiterhin ist zweckmäßig bei in den Filter eingebautem Filtereinsatz die Ventilmembran an ihrem radial inneren Randbereich mittels des Filtereinsatzes, insbesondere mittels eines radial innen daran angeordneten Dichtrings, gegen den Membranträger eingeklemmt. Besondere Haltemittel für die Ventilmembran werden somit vorteilhaft nicht benötigt
Viele Filter der hier behandelten Art haben einen Schraubdeckel als Teil eines Filtergehäuses oder besitzen ein Anschraubgehäuse. Für einen sicheren und die Umwelt nicht gefährdenden Betrieb ist es wesentlich, dass der Schraubdeckel oder das Anschraubgehäuse sich im Betrieb des Filters nicht selbsttätig löst. Für erfindungsgemäße Filter, bei denen das Filtergehäuse als Anschraubgehäuse ausgebildet ist oder einen Schraubdeckel umfasst, ist daher vorgesehen, dass der Filter mit einer Losdrehsicherung versehen ist, wobei im Filtergehäuse auf dem Rohrstutzen ein Losdrehsicherungsring axial verschiebbar geführt ist und bei in das Filtergehäuse eingebautem Filtereinsatz die Feder den Losdrehsicherungsring mit seiner von der Feder abgewandte Stirnseite gegen eine Gegenfläche des Filtergehäuses bzw. des Anschraubgehäuses oder Schraubdeckels andrückt. Hiermit wird ein zusätzlicher, sehr vorteilhafter Nutzen der Feder erzielt, da diese nicht nur den Ventilkörper des Filterumgehungsventils in dessen Schließrichtung vorbelastet, sondern nun zusätzlich auch noch einen Losdrehsicherungsring mit einer für dessen Sicherungswirkung benötigten Kraft beaufschlagt.

Um für den Losdrehsicherungsring nicht eigens ein separates Bauteil in den Filter einbauen zu müssen, ist bevorzugt der Losdrehsicherungsring mit einem einen Teil des Filtereinsatzes bildenden Stützkörper verbunden oder einstückig.

Eine Weiterbildung des Filters sieht vor, dass die von der Feder abgewandte Stirnseite des Losdrehsicherungsrings und die Gegenfläche des Filtergehäuses jeweils eine in Umfangsrichtung gesehen in ihrer axialen Höhe variierende, ineinandergreifende Kontur aufweisen. Hiermit wird bewirkt, dass bei Losdrehen des Filtergehäuses bzw. des Schraubdeckels oder Anschraubgehäuses ein gewisser, vorgebbarer Widerstand überwunden werden muss, um die ineinandergreifenden Konturen gegeneinander zu verdrehen. Durch Wahl eines ausreichend großen Widerstandes, der aber ein gewolltes Losdrehen noch erlaubt, wird ein unerwünschtes selbsttätiges Losdrehen unterbunden.

Weiter ist dabei bevorzugt vorgesehen, dass eine in Losdrehrichtung verlaufende Steigung steiler ist als ein in Festdrehrichtung verlaufendes Gefälle der zusammenwirkenden Konturen. Dadurch ist vorteilhaft das zum Losdrehen aufzubringende Drehmoment größer als das zum Festdrehen nötige Drehmoment. Dabei kann das Maß dieses Unterschiedes durch den Unterschied zwischen der erwähnten Steigung und dem erwähnten Gefälle beeinflusst und bestimmt werden. Die zusammenwirkenden Konturen können z.B. wellenförmig oder als Aufeinanderfolge von Schrägen, auch mit dazwischenliegenden flachen Abschnitten, ausgeführt sein.

Da die Federstütze, welche die Feder des Filterumgehungsventil vorspannt, ein Teil des Filtereinsatzes ist, muss gewährleistet sein, dass im Betrieb des Filters der Filtereinsatz im Filtergehäuse in Axialrichtung gesehen eine definierte Position einnimmt, weil andernfalls eine unrichtige Vorspannung der Feder und damit ein falscher Öffnungsdruck des Filterumgehungsventils auftreten würde. Daher schlägt die Erfindung diesbezüglich vor, dass das Filtergehäuse in seiner Umfangswand eine Innendurchmesserstufe aufweist, an welche der Filtereinsatz bei seinem Einführen in das Filtergehäuse zur axialen Positionierung mit seiner flanschseitigen Stirnscheibe anlegbar ist.

Filter der hier behandelten Art brauchen in der Regel eine Wartung, weil die Einsatzzeit des Filtereinsatzes beschränkt ist und dieser von Zeit zu Zeit erneuert werden muss. Um sicherzustellen, dass bei jeder Filterwartung mit Filtereinsatzwechsel auch die den Filter gegen den Anschlussflansch abdichtende Dichtung mit erneuert wird, ist bevorzugt vorgesehen, dass mit einer flanschseitigen Stirnscheibe des Filtereinsatzes radial außen ein Dichtringträger verbunden oder einstückig ausgeführt ist, auf dem ein den Filter gegen den Anschlussflansch der einen Kreislauf mit zu filternder Flüssigkeit besitzenden Vorrichtung abdichtender Dichtring angebracht oder anbringbar ist.

Damit sich der Dichtring bei der Anbringung des Filters am Anschlussflansch zwangfrei in seine Dichtlage bewegen kann, ist vorgesehen, dass der Dichtringträger eine zylindrische Außenumfangsfläche aufweist, auf der der Dichtring axial schwimmend angebracht oder anbringbar ist.

Eine erste funktional und herstellungstechnisch günstige Anordnung ergibt sich, wenn das Filterumgehungsventil in Höhe eines ersten axialen Stirnendes des Filtereinsatzes angeordnet ist.

Eine zweite funktional und herstellungstechnisch günstige Anordnung ergibt sich, wenn das Filterumgehungsventil in Höhe eines zweiten axialen Stirnendes des Filtereinsatzes angeordnet ist.

Besonders bevorzugt ist das Filterumgehungsventil im Bereich des im Betrieb des Filters oberen Stirnendes des Filtereinsatzes angeordnet, da dort ein störendes Absetzen von Schmutzpartikeln an den Teilen des Filterumgehungsventils in einem geringstmöglichen Ausmaß zu erwarten ist.

In einer weiteren bevorzugten Ausgestaltung des erfindungsgemäßen Filters ist vorgesehen, dass er als Anschraubwechselfilter ausgeführt ist, wobei der Filter zum Verbinden mit einem Anschlussflansch einer einen Kreislauf mit zu filternder Flüssigkeit besitzenden Vorrichtung ausgebildet ist, wobei der Filter eine flanschseitige Grundplatte mit einem Schraubgewinde aufweist, welches mit einem Gegengewinde im oder am Anschlussflansch verschraubbar ist und wobei das Filterumgehungsventil in einem einen Teil der Grundplatte bildenden oder mit der Grundplatte verbundenen Ventilhalter angeordnet ist. Auch in dieser Ausgestaltung wird eine kompakte Bauweise und günstige Herstellbarkeit erreicht.

In weiterer Ausgestaltung ist hier vorgesehen, dass das Filtergehäuse als Schraubgehäuse ausgeführt ist, welches an seinem flanschseitigen Endbereich ein Schraubgewinde besitzt, mittels welchem das Filtergehäuse mit einem radial außen an der Grundplatte angeordneten Schraubgewinde verschraubbar ist.

Vorgeschlagen wird weiter, dass nach einer erstmaligen Montage des Filters an dem Anschlussflansch das Filtergehäuse zusammen mit dem Filtereinsatz für eine Filterwartung von der Grundplatte abschraubbar ist und dass die Grundplatte mit dem Ventilhalter und dem Filterumgehungsventil am Anschlussflansch verbleibende Teile des Filters sind. Bei der Filterwartung wird nur der Filtereinsatz ersetzt, während das Filterumgehungsventil filterfest ist, also ein Lebensdauerbauteil des Filters darstellt.

Eine Weiterbildung sieht vor, dass der Ventilhalter umfangsseitig geschlossen ausgeführt ist und an seiner flanschfernen Stirnseite wenigstens einen Anschlag für die Feder in deren von der Federstütze des Filtereinsatzes entlasteten Zustand und wenigstens einen Durchlass für gefilterte Flüssigkeit aufweist. Hiermit wird die Feder gegen Verlieren gesichert und zugleich ein Durchströmen von gefilterter Flüssigkeit durch den Ventilhalter hindurch ermöglicht.

Um bei einer Filterwartung mit Austausch des Filtereinsatzes ein störendes oder schädliches Eintreten von Schmutzpartikeln in den Auslass für gefilterte Flüssigkeit zu verhindern, wird vorgeschlagen, dass zwischen der Feder und dem Durchlass ein von der Feder in Richtung zum Durchlass beaufschlagter Abdeckkörper angeordnet ist, wobei im zusammengebauten Zustand des Filters die am Filtereinsatz befindliche Federstütze über den Abdeckkörper die Feder abstützt und wobei der Abdeckkörper bei entferntem Filtereinsatz den Durchlass verschließt.

Um auch bei den Filterausführungen mit Grundplatte ein Leerlaufen des Filters bei Stillstand des Flüssigkeitskreislaufs zu verhindern, ist zweckmäßig in der Grundplatte wenigstens eine den Einlass des Filters bildende dezentrale Durchbrechung angebracht und ist an der flanschfernen Seite der Grundplatte ein den Einlass überdeckendes Rücklaufsperrventil angeordnet, wobei das Rücklaufsperrventil eine den Einlass überdeckende, kreisringförmige Ventilmembran aufweist, die an ihrem radial inneren Randbereich zwischen der Grundplatte und dem mit der Grundplatte verbundenen Ventilhalter eingeklemmt ist. Zudem sind hier vorteilhaft keine besonderen Befestigungs- und Haltemittel für die Ventilmembran nötig.

Damit der Filter besonders kostengünstig in großen Stückzahlen herstellbar ist und ein möglichst geringes Gewicht aufweist, sind bevorzugt sowohl die Grundplatte als auch das Filtergehäuse des Filters Teile aus Kunststoff. Zweckmäßig werden diese Teile als formfallende Spritzgussteile hergestellt, die keine spanende Bearbeitung mehr erfordern. Alternativ können die Grundplatte und/oder das Filtergehäuse auch Teile aus Metall sein, z. B. geformte Blechteile aus Stahlblech oder Gussteile, vorzugsweise aus Leichtmetall.

Um die Feder des Filterumgehungsventils einerseits zuverlässig und andererseits technisch einfach vorspannen zu können, ist bevorzugt vorgesehen, dass die Federstütze durch mehrere mit einem zentralen Stützkörper des Filtereinsatzes verbundene oder einstückige, im in den Filter eingebauten Zustand des Filtereinsatzes in den Ventilhalter hineinragende Stützarme gebildet ist. Alternativ kann die Federstütze auch ringförmig ausgeführt sein, um eine möglichst große Kontaktfläche zur Feder des Filterumgehungsventils zur Verfügung zu stellen.

Zwecks möglichst weitgehender Verhinderung eines Einsatzes von ungeeigneten oder qualitativ geringwertigen Fremd-Filtereinsätzen im erfindungsgemäßen Filter schlägt die Erfindung vor, dass der Ventilhalter für jeden Stützarm eine positions- und formangepasste Einführöffnung aufweist und dass die Stützarme und die Einführöffnungen miteinander eine Schlüssel-Schloss-Codierung bilden, welche nur ein Einbauen eines Filtereinsatzes mit den zu den Einführöffnungen passend positionierten und geformten Stützarmen erlaubt. Die Stützarme und die zugehörigen Einführöffnungen können dabei jeweils untereinander gleich ausgeführt sein. Alternativ können die Stützarme untereinander verschieden ausgeführt sein und entsprechend auch die zugehörigen Einführöffnungen untereinander verschieden sein, um eine Schlüssel-Schloss-Codierung zu erreichen, die eine noch höhere Hürde gegen einen Einsatz von Fremd-Filtereinsätzen darstellt.

Um die Stützarme der Federstütze vor Kräften zu schützen, die bei der Positionsfindung der Stützarme relativ zu den Einführöffnungen auftreten und zu Schäden führen können, schlägt die Erfindung vor, dass der Filtereinsatz zusätzlich zu den die Federstütze bildenden Stützarmen erste Positionierelemente aufweist, dass der Ventilhalter zusätzlich zu den Einführöffnungen zweite Positionierelemente aufweist und dass mittels der ersten und zweiten Positionierelemente der Filtereinsatz bei seinem Einbauen in den Filter in eine in Umfangsrichtung eingriffsgerechte Stellung seiner Stützarme relativ zu den Einführöffnungen des Ventilhalters führbar ist.

Gemäß einer diesbezüglichen Weiterbildung sind die Positionierelemente bevorzugt durch wenigstens eine Einführschräge mit einer anschließenden axialen Einführnut einerseits und wenigstens eine Einführnase oder axiale Einführrippe andererseits gebildet.

Um den Ventilhalter technisch und kostenmäßig günstig fertigen zu können und um die darin untergebrachten Teile des Filterumgehungsventils im Ventilhalter zu sichern, ist vorgesehen, dass der Ventilhalter zweiteilig mit einem mit der Grundplatte verbundenen, den Ventilsitz aufweisenden ersten Halterteil und mit einem mit dem ersten Halterteil verbundenen, ventilsitzfernen zweiten Halterteil ausgebildet ist. Der erste Halterteil ist vorzugsweise fest mit der Grundplatte verbunden, z. B. durch Verschweißen. Untereinander sind die Halterteile vorzugsweise verrastet, da eine solche Rastverbindung bei der Fertigung wenig Aufwand erfordert und bei der Montage einfach herstellbar ist.

Für die vorstehend beschriebene Ausführung des Filters ist weiter bevorzugt vorgesehen, dass das Gegengewinde im oder am Anschlussflansch an einem aus der Ebene des Anschlussflansches vorragenden, einen Teil des Anschlussflansches bildenden Gewindenippel als Außengewinde angeordnet ist.

In einer anderen Ausgestaltung des Filters nach dem Anspruch 1 ist vorgesehen, dass er als Anschraubwechselfilter ausgeführt ist, wobei der Filter zum Verbinden mit einem Anschlussflansch einer einen Kreislauf mit zu filternder Flüssigkeit besitzenden Vorrichtung ausgebildet ist, wobei das Filtergehäuse flanschseitig ein Schraubgewinde aufweist, welches mit einem Gegengewinde im oder am Anschlussflansch verschraubbar ist, wobei das Filterumgehungsventil in einem Ventilhalter mit einem flanschseitigen hohlzylindrischen Endstück angeordnet ist und wobei das Endstück vor oder bei einer Erstmontage des Filters an dem Anschlussflansch in einen Reinflüssigkeitskanal des Anschlussflansches einpressbar ist.

Hiermit wird eine sehr einfache und schnelle Verbindung des das Filterumgehungsventil enthaltenden Ventilhalters mit dem Anschlussflansch erreicht, wobei nach dem Herstellen dieser Verbindung der Ventilhalter dauerhaft am Anschlussflansch verbleibt. Nur das Filtergehäuse ist zusammen mit dem darin angeordneten, auch hier die Federstütze zum Vorspannen der Feder des Filterumgehungsventils aufweisenden Filtereinsatz vom Anschlussflansch abschraubbar.

Damit bei geöffnetem Filter, also bei abgebautem Filtergehäuse und entferntem Filtereinsatz, die Feder des Filterumgehungsventils nicht verloren gehen kann, aber gleichzeitig der Ventilhalter von gefilterter Flüssigkeit durchströmt werden kann, ist vorgesehen, dass der Ventilhalter umfangsseitig geschlossen ausgeführt ist und an seiner flanschfernen Stirnseite wenigstens einen Anschlag für die Feder in deren von der Federstütze des Filtereinsatzes entlasteten Zustand und wenigstens einen Durchlass für gefilterte Flüssigkeit aufweist.

Um auch bei dieser Ausgestaltung des Filters ein Hineinfallen von Schmutzpartikeln in den Auslass für gefilterte Flüssigkeit bei einem Filtereinsatzwechsel auszuschließen, ist zweckmäßig zwischen der Feder und dem Durchlass ein von der Feder in Richtung zum Durchlass beaufschlagter Abdeckkörper angeordnet, wobei über den Abdeckkörper im zusammengebauten Zustand des Filters die am Filtereinsatz befindliche Federstütze die Feder abstützt und wobei der Abdeckkörper bei entferntem Filtereinsatz den Durchlass verschließt. Bei in den Filter eingebautem Filtereinsatz hält dessen Federstütze den Abdeckkörper in einer vom Durchlass entfernten Stellung, sodass dann eine Flüssigkeitsströmung durch den Durchlass hindurch zum Auslass des Filters ermöglicht ist.

Im Folgenden werden Ausführungsbeispiele der Erfindung anhand einer Zeichnung erläutert. Die Figuren der Zeichnung zeigen:
- Figur 1: einen ersten Filter mit einem auswechselbaren Filtereinsatz und mit einem Filterumgehungsventil, in einem abgewinkelten Längsschnitt,
- Figur 2: den Filter aus Figur 1 in Draufsicht, mit der Schnittlinie I-I für Figur 1,
- Figur 3: den Filter aus Figur 1 im Querschnitt gemäß der Schnittlinie III-III in Figur 1,
- Figur 4: ein vergrößertes Detail des Filters aus Figur 1, mit dem Filterumgehungsventil in Schließstellung,
- Figur 5: das gleiche Detail wie Figur 4, nun mit dem Filterumgehungsventil in Öffnungsstellung,
- Figur 6: den Filter aus Figur 1 ohne Filtereinsatz, im Längsschnitt,
- Figur 7: den Filter in einer zweiten Ausführung, im Anlieferungszustand, im Längsschnitt,
- Figur 8: den Filter aus Figur 7 im Einbauzustand, mit geschlossenem Filterumgehungsventil, im Längsschnitt,
- Figur 9: den Filter aus Figur 8 ohne Filtereinsatz, im Längsschnitt,
- Figur 10: den Filter aus Figur 8 und 9 mit abgenommenem Filtergehäuse und entferntem Filtereinsatz, im Längsschnitt,
- Figur 11: den Filtereinsatz des Filters nach Figur 7 und 8 als Einzelteil, im Längsschnitt,
- Figur 12: das Filtergehäuse des Filters aus den Figuren 7 bis 9, im Längsschnitt,
- Figur 13: den Filter aus Figur 8, nun mit offenem Filterumgehungsventil, im Längsschnitt,
- Figur 14: den Filter aus Figur 7 im Querschnitt gemäß der Schnittlinie XIV-XIV in Figur 7,
- Figur 15: einen Ventilsitz des Filters nach den Figuren 7 bis 14, in einer ersten Ausführung, in Draufsicht,
- Figur 16: den Ventilsitz des Filters nach den Figuren 7 bis 14, in einer zweiten Ausführung, in Draufsicht,
- Figur 17: den Filter in einer dritten Ausführung, im Einbauzustand mit geschlossenem Filterumgehungsventil und mit einer Losdrehsicherung, im Längsschnitt,
- Figur 18: den Filter aus Figur 17 im Querschnitt gemäß der Schnittlinie B-B in Figur 17,
- Figur 19: den Filter aus Figur 17 im Querschnitt gemäß der Schnittlinie C-C in Figur 17,
- Figur 20: den Filter aus den Figuren 17 bis 19 im Längsschnitt gemäß der Schnittlinie D-D in Figur 19,
- Figur 21: den Filter aus den Figuren 17 bis 20 im Längsschnitt gemäß der Schnittlinie E-E in Figur 20,
- Figur 22: den Filter aus den Figuren 17 bis 21 im Längsschnitt gemäß der Schnittlinie F-F in Figur 20,
- Figur 23: einen zentralen Rohrstutzen als Teil des Filters nach Figur 17 bis 22, als Einzelteil in Ansicht schräg von oben,
- Figur 24: einen Stützkörper als Teil des Filters nach Figur 17 bis 22, als Einzelteil in Ansicht schräg von oben,
- Figur 25: ein Filtergehäuse als Teil des Filters nach Figur 17 bis 22, als Einzelteil in Ansicht schräg von unten,
- Figur 26: eine Baueinheit aus dem Filtergehäuse nach Figur 25 und dem Rohrstutzen nach Figur 23, in Ansicht schräg von unten,
- Figur 27: ein vergrößertes Detail aus Figur 21 mit der Losdrehsicherung in einer ersten Ausführung,
- Figur 28: das Detail aus Figur 21 mit der Losdrehsicherung in einer zweiten Ausführung,
- Figur 29: den Filter in einer vierten Ausführung, im Einbauzustand mit geschlossenem Filterumgehungsventil und mit einem in der linken und rechten Hälfte der Figur in zwei unterschiedlichen Ausführungen dargestellten ersten Filtereinsatz, im Längsschnitt,
- Figur 30: den Filter in einer gegenüber der Figur 29 geänderten Ausführung, im Einbauzustand mit geschlossenem Filterumgehungsventil und mit einem in der linken und rechten Hälfte der Figur in zwei unterschiedlichen Ausführungen dargestellten zweiten Filtereinsatz, im Längsschnitt,
- Figur 31: den Filter in einer weiteren gegenüber der Figur 29 geänderten Ausführung, im Einbauzustand mit geschlossenem Filterumgehungsventil und mit einem in der linken und rechten Hälfte der Figur in zwei unterschiedlichen Ausführungen dargestellten dritten Filtereinsatz, im Längsschnitt,
- Figur 32: einen Ventilkörper in einer geänderten Ausführung, im Längsschnitt,
- Figur 33: einen Ventilsitz in einer geänderten Ausführung, im Längsschnitt,
- Figur 34: einen Filter in einer weiteren Ausführung, im Längsschnitt,
- Figur 35: den Filter aus Figur 17 in einer geänderten Ausführung, mit einer Verdrehsicherung für den Ventilkörper des Filterumgehungsventils, im Längsschnitt,
- Figur 36: den Filter aus Figur 35 im Querschnitt gemäß der Schnittlinie H-H in Figur 35,
- Figur 37: das in Figur 36 eingekreiste Detail in vergrößerter Darstellung,
- Figur 38: den Filter in einer weiteren Ausführung, im Längsschnitt,
- Figur 39: den Filter aus Figur 38 im Querschnitt gemäß der Schnittlinie G - G in Figur 38,
- Figur 40: den Filter aus Figur 38 im Querschnitt gemäß der Schnittlinie H - H in Figur 38,
- Figur 41: das Filtergehäuse und den darin angeordneten Filtereinsatz des Filters aus Figur 38, im Längsschnitt,
- Figur 42: das Filtergehäuse mit dem Filtereinsatz aus Figur 41, in Ansicht schräg von unten,
- Figur 43: den Filtereinsatz des Filters aus Figur 38 in Ansicht schräg von unten,
- Figur 44: den Filtereinsatz aus Figur 43 im Längsschnitt,
- Figur 45: den Filtereinsatz aus Figur 44 im Querschnitt nach der Schnittlinie F' - F' in Figur 44,
- Figur 46: das Filtergehäuse des Filters aus Figur 38 in Ansicht schräg von unten,
- Figur 47: einen Anschlussflansch des Filters mit daran nach Entfernen von Filtergehäuse und Filtereinsatz verbleibenden Filterteilen,
- Figur 48: den Gegenstand der Figur 47 im Längsschnitt,
- Figur 49: das Detail Y aus Figur 39 in vergrößerter Darstellung,
- Figur 50: das Detail X aus Figur 40 in vergrößerter Darstellung,
- Figur 51: eine ein Filterumgehungsventil und ein Rücklaufsperrventil umfassende Baueinheit als Teile des Filters aus Figur 38, in Ansicht schräg von unten,
- Figur 52: die Baueinheit aus Figur 51 zusammen mit einem Anschlussflansch und einem Filtergehäuse mit Filtereinsatz, in auseinandergezogener Ansicht schräg von unten,
- Figur 53: das Detail Z aus Figur 48 in vergrößerter Darstellung,
- Figur 54: das Detail W aus Figur 38 in vergrößerter Darstellung,
- Figur 55: den Filtereinsatz des Filters in einer geänderten Ausführung für einen Filter ohne Rücklaufsperrventil, in Ansicht schräg von unten,
- Figur 56: den Filtereinsatz aus Figur 55 im Längsschnitt,
- Figur 57: den Filter in einer weiteren Ausführung im Längsschnitt,
- Figur 58: eine Baueinheit mit Filterumgehungsventil als Teil des Filters aus Figur 57, in Ansicht,
- Figur 59: die Baueinheit aus Figur 58 in einem an einen Anschlussflansch montierten Zustand, in Ansicht schräg von oben,
- Figur 60: das Filtergehäuse mit darin angeordnetem Filtereinsatz des Filters aus Figur 57, in Ansicht schräg von unten,
- Figur 61: das Filtergehäuse mit Filtereinsatz aus Figur 60, im Längsschnitt,
- Figur 62: die Baueinheit aus Figur 58 zusammen mit einem Anschlussflansch und einem Filtergehäuse mit darin angeordnetem Filtereinsatz, in auseinandergezogener Ansicht,
- Figur 63: den Gegenstand der Figur 59 im Längsschnitt,
- Figur 64: den Filter in einer weiteren Ausführung, im Längsschnitt,
- Figur 65: den Filter in einer weiteren Ausführung, im Längsschnitt,
- Figur 66: den Filter in einer weiteren Ausführung, im Längsschnitt,
- Figur 67: den Filter in einer weiteren Ausführung, im Längsschnitt,
- Figur 68: den Filter aus Figur 67 im Querschnitt gemäß der Schnittlinie B - B in Figur 67,
- Figur 69: das Detail V aus Figur 68 in vergrößerter Darstellung,
- Figur 70: den Filter aus Figur 67 im Querschnitt gemäß der Schnittlinie D - D in Figur 67,
- Figur 71: das Detail U aus Figur 70 in vergrößerter Darstellung,
- Figur 72: den Filter aus Figur 67 im Längsschnitt gemäß der Schnittlinie C - C in Figur 68,
- Figur 73: das Detail X in Figur 72 in vergrößerter Darstellung,
- Figur 74: den Filter aus Figur 72 im Querschnitt gemäß der Schnittlinie I - I in Figur 72,
- Figur 75: das Detail W in Figur 74 in vergrößerter Darstellung,
- Figur 76: den Filter in einer weiteren Ausführung, im Längsschnitt,
- Figur 77: das Detail Y aus Figur 76 in vergrößerter Darstellung,
- Figur 78: den Filter gemäß Figur 76 ohne Filtergehäuse mit nur teilweise dargestellten Filtereinsatz in einer ersten Phase der Montage am Anschlussflansch, in Ansicht, teils im Längsschnitt,
- Figur 79: den Filter aus Figur 78 in gleicher Darstellung in einer zweiten Phase der Montage am Anschlussflansch,
- Figur 80: den Filter aus Figur 78 in gleicher Darstellung in einer dritten Phase der Montage am Anschlussflansch,
- Figur 81: den Filter aus Figur 78 in gleicher Darstellung in einer vierten Phase der Montage am Anschlussflansch,
- Figur 82: den Anschlussflansch zusammen mit einer ein Filterumgehungsventil und ein Rücklaufsperrventil umfassenden Baueinheit des Filters aus Figur 76 nach dem Entfernen von Filtergehäuse und Filtereinsatz, in Ansicht,
- Figur 83: die Baueinheit aus Figur 82, ohne Feder und ohne Abdeckkörper des Rücklaufsperrventils, in einer längs geschnittenen Ansicht,
- Figur 84: die vollständige Baueinheit aus Figur 82, im Längsschnitt,
- Figur 85: das Filtergehäuse und den darin angeordneten Filtereinsatz, in einer längs geschnittenen Ansicht,
- Figur 86: ein Filterumgehungsventil in einer geänderten Ausführung, zusammen mit einem Anschlussflansch, im Längsschnitt,
- Figur 87: den Filter in einer weiteren Ausführung, im Längsschnitt,
- Figur 88: eine ein Filterumgehungsventil und ein Rücklaufsperrventil umfassende Baueinheit des Filters aus Figur 87, im mit einem Anschlussflansch verbundenen Zustand, in Ansicht schräg von oben,
- Figur 89: den Filter in einer weiteren Ausführung, im Längsschnitt,
- Figur 90: den Filter aus Figur 89 in einem Zustand mit vom Anschlussflansch abgebautem Filtergehäuse und Filtereinsatz, im Längsschnitt
- Figur 91: den Filter in einer weiteren Ausführung, in einem an einen Anschlussflansch angebauten Zustand, im Längsschnitt, und
- Figur 92: den Filter aus Figur 91 in einem vom Anschlussflansch abgebauten Zustand, im Längsschnitt.

In der nachfolgenden Figurenbeschreibung sind gleiche Teile in den verschiedenen Figuren der Zeichnung stets mit den gleichen Bezugsziffern versehen, so dass nicht jede Bezugsziffer in jeder Zeichnungsfigur erneut erläutert werden muss.

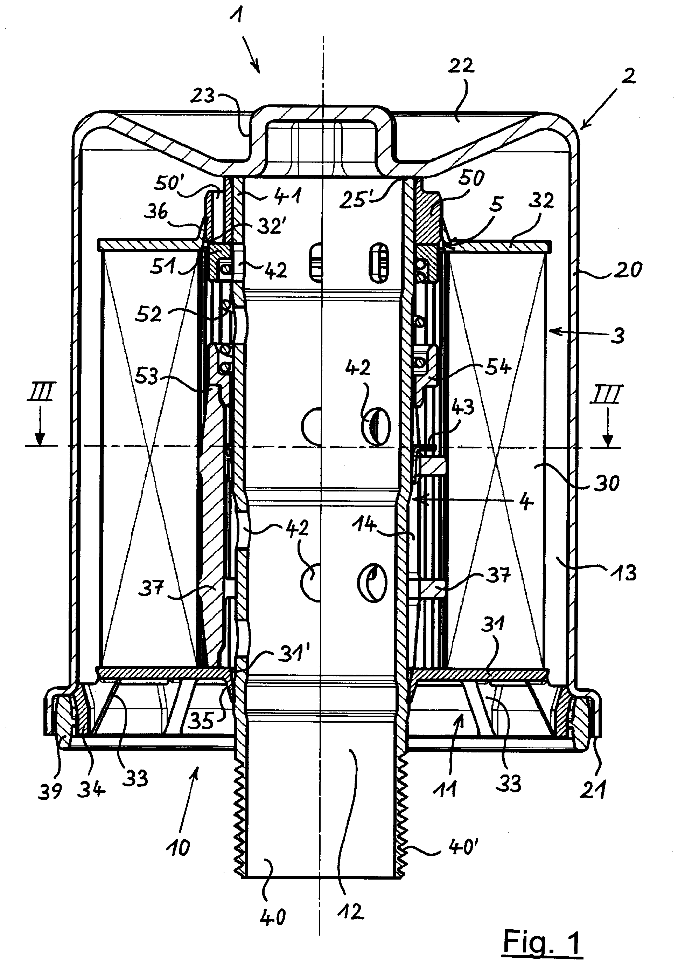

Die Figur 1 der Zeichnung zeigt ein Ausführungsbeispiel für einen Filter 1, der als Anschraubwechselfilter ausgeführt ist und hier im Längsschnitt dargestellt ist. Der Filter 1 besitzt ein im Wesentlichen becherförmiges Filtergehäuse 2 mit einer Umfangswand 20, mit einer hier nach unten weisenden offenen Stirnseite 21 und einer hier nach oben weisenden geschlossenen Stirnseite 22. Im Zentrum der oberen Stirnseite 22 ist ein Werkzeugansatz 23, wie Sechskant, angeformt, an dem ein Schraubwerkzeug angesetzt werden kann.

Zentral durch das Innere des Filters 1 verläuft ein zentraler Rohrstutzen 4, der mit seinem äußeren, hier unteren Endbereich 40 aus dem Filtergehäuse 2 in Axialrichtung vorsteht und dort mit einem äußeren Schraubgewinde 40' versehen ist. An seinem inneren, hier oberen Endbereich 41 liegt der Rohrstutzen 4 an der Unterseite der oberen Stirnseite 22 des Filtergehäuses 2 an. Hier ist bei dem gezeigten Ausführungsbeispiel der Rohrstutzen 4 mit dem Filtergehäuse 2 fest verbunden, beispielsweise entlang einer Schweißnaht 25' verschweißt. Dazu bestehen das Filtergehäuse 2 und der Rohrstutzen 4 beispielsweise aus Stahlblech. In seinem im Inneren des Filtergehäuses 2 liegenden Bereich besitzt der Rohrstutzen 4 mehrere in Umfangs- und Längsrichtung verteilte Durchbrechungen 42.

Weiterhin ist im Filtergehäuse 2 des Filters 1 ein auswechselbarer Filtereinsatz 3 angeordnet, der aus einem hohlzylindrischen Filterstoffkörper 30 sowie zwei diesen stirnseitig einfassenden Stirnscheiben 31 und 32 besteht. Jede Stirnscheibe 31, 32 besitzt eine zentrale Durchbrechung 31', 32', so dass der Filtereinsatz 3 von unten her auf den Rohrstutzen 4 aufsteckbar und so in das Innere des Filtergehäuses 2 einführbar ist. Am Innenumfang des Filterstoffkörpers 30 ist außerdem ein innerer, gitterförmiger Stützkörper 37 zur radialen Abstützung des Filterstoffkörpers 30 bei seiner Durchströmung durch zu filternde Flüssigkeit in radialer Richtung von außen nach innen angeordnet.

Weiter weist der Filter 1 ein integriertes Filterumgehungsventil 5 auf, welches hier in Höhe der oberen Stirnscheibe 32 des Filtereinsatzes 3 angeordnet ist. Das Filterumgehungsventil 5 besitzt einen Ventilsitz 50, der als Ringkörper ausgebildet und dicht auf dem Außenumfang des inneren Endbereichs 41 des Rohrstutzens 4 angebracht ist. Durch den als Ringkörper ausgebildeten Ventilsitz 50 verlaufen mehrere axiale Durchlassöffnungen 50', von denen in Figur 1 nur eine zu sehen ist.

Mit dem Ventilsitz 50 wirkt ein ebenfalls ringförmiger Ventilkörper 51 zusammen, der unterhalb des Ventilsitzes 50 axial verschieblich auf dem Außenumfang des Rohrstutzens 4 geführt ist. Mittels einer als Schraubendruckfeder ausgeführten Feder 52 wird der Ventilkörper 51 in Richtung zum Ventilsitz 50 und somit in Schließrichtung des Filterumgehungsventils 5 vorbelastet. An ihrem von dem Ventilkörper 51 abgewandten Ende ist die Feder 52 durch den Filtereinsatz 3 abgestützt. Hierzu besitzt der Filtereinsatz 3 beim dargestellten Ausführungsbeispiel eine Federstütze 53, die hier die Form von vier in Axialrichtung nach oben verlaufenden, vorragenden Stützarmen 53' hat und die einstückig mit dem inneren Stützkörper 37 ausgebildet ist. Diese Federstütze 53 stützt über einen Zwischenring 54, der axial verschieblich auf dem Außenumfang des Rohrstutzens 4 geführt ist, die Feder 52 an ihrem unteren Ende ab.

Die Kraft, mit der die Feder 52 auf den Ventilkörper 51 in Schließrichtung wirkt, wird also unter anderem durch die Federstütze 53, hier konkret durch deren axiale Länge oder axiale Lage, bestimmt. Dies bietet die vorteilhafte Möglichkeit, den Öffnungsdruck des Filterumgehungsventils 5 leicht zu verändern, indem in den Filter 1 ein Filtereinsatz 3 mit einer entsprechend geänderten Federstütze 53 eingebaut wird. Eine größere axiale Länge der Federstütze 53 führt zu einer höheren Vorspannung der Feder 52 und damit zu einem höheren Öffnungsdruck des Filterumgehungsventils 5. Umgekehrt führt eine geringere axiale Länge der Federstütze 53 zu einer verminderten Vorspannung der Feder 52 und damit zu einem niedrigeren Öffnungsdruck des Filterumgehungsventils 5.

Schließlich ist auf dem Außenumfang des Rohrstutzens 4 unterhalb der Feder 52 noch ein Anschlag 43 axial unverschiebbar und in Umfangsrichtung unverdrehbar angeordnet, der hier durch ein Blechformteil gebildet und auf den Rohrstutzen 4 zum Beispiel aufgepresst ist. Über seinen Umfang verteilt besitzt der Anschlag 43 mehrere in Figur 1 nicht sichtbare Ausnehmungen oder offene Zwischenräume 44, durch welche jeweils ein Stützarm 53' der Federstütze 53 verläuft. Dabei bilden die Zwischenräume 44 und die Stützarme 53' der Federstütze 53 miteinander eine Schlüssel-Schloss-Codierung, die nur den Einbau eines passenden, auf die Codierung abgestimmten Filtereinsatzes 3 in den Filter 1 erlaubt.

Der Filtereinsatz 3 trennt eine außen vom Filtereinsatz 3 liegende Rohseite 13 des Filters 1 von einer im Inneren des Filtereinsatzes 3 und des Rohrstutzens 4 liegenden Reinseite 14 des Filters 1. Zur Abdichtung des Filtereinsatzes 3 gegen den Rohrstutzen 4, auf den der Filtereinsatz 3 aufgesteckt ist, besitzt der Filtereinsatz 3 an seiner unteren Stirnscheibe 31 eine die Durchbrechung 31' radial außen umgreifende Dichtlippe 35 und an seiner oberen Stirnscheibe 32 ebenfalls eine die Durchbrechung 32' radial außen umgreifende Dichtlippe 36.

Die untere Stirnseite 21 des Filters 1 ist als Verbindungsflansch 10 ausgebildet, der mit einem Anschlussflansch an einer einen Kreislauf mit zu filternder Flüssigkeit, wie Schmieröl, aufweisenden Vorrichtung, wie Brennkraftmaschine, mittels des Gewindes 40' des Rohrstutzens 4 in eine lösbare Verbindung bringbar ist. Radial außen vom äußeren Endbereich 40 des Rohrstutzens 4 liegt ein Einlass 11, durch welchen die zu filternde Flüssigkeit von unten nach oben in die Rohseite 13 des Filters 1 einströmen kann. Das Innere des Rohrstutzens 4 bildet einen Auslass 12 für gefilterte Flüssigkeit.

Zum Abdichten der Flanschverbindung zwischen dem Filter 1 und der zugehörigen, in der Figur 1 nicht dargestellten Vorrichtung, wie Brennkraftmaschine, dient ein Dichtring 39, der an der unteren Stirnseite 21 des Filters 1 angeordnet ist. Der Dichtring 39 wird hier von einem Dichtringträger 34 gehalten, der radial innen vom Dichtring 39 umlaufend angeordnet ist. Der Dichtringträger 34 ist hier einstückig mit der unteren Stirnscheibe 31 des Filtereinsatzes 3 ausgeführt und mit der Stirnscheibe 31 über in Umfangsrichtung gesehen in Abständen voneinander angeordnete Verbindungsstege 33 verbunden. Der Einlass 11 für die zu filternde Flüssigkeit verläuft durch die Zwischenräume zwischen den Verbindungsstegen 33.

Im normalen Betrieb des Filters 1 strömt die zu reinigende Flüssigkeit, wie Schmieröl einer Brennkraftmaschine, durch den an der unteren Stirnseite 21 ausgebildeten Einlass 11 auf die Rohseite 13 des Filters 1 und von dort durch den Filterstoffkörper 30 auf die radial innen von diesem liegende Reinseite 14 des Filters 1. Von dort gelangt die gefilterte Flüssigkeit durch die Durchbrechungen 42 im Rohrstutzen 4 in dessen Inneres und strömt durch diesen hindurch nach unten durch den Auslass 12 ab. Das Filterumgehungsventil 5 befindet sich dabei in seiner Schließstellung, wie sie in Figur 1 dargestellt ist.

Die räumliche Ausrichtung des Filters 1 spielt dabei für seinen Betrieb keine Rolle; der Filter 1 ist jeder räumlichen Lage einsetzbar. Die in der Zeichnung dargestellte Ausrichtung ist lediglich beispielhaft. Bevorzugt ist bei der Filterausführung nach Figur 1 aber eine stehende Anordnung, bei der das Filterumgehungsventil 5 oben im Filter liegt. Hierdurch wird ein möglicherweise die Funktion störendes Absetzen von Schmutzpartikeln auf den Teilen des Filterumgehungsventils 5 weitestgehend vermieden. Auch wird so verhindert, dass bei einem Öffnen des Filterumgehungsventils 5 zuvor im tiefsten Bereich des Filters auf dessen Rohseite 13 abgesetzte Schmutzpartikel auf die Reinseite 14 mitgenommen werden.

Tritt zwischen der Rohseite 13 und der Reinseite 14 des Filters 1 eine unzulässig hohe Druckdifferenz oberhalb eines vorgebbaren Grenzwertes auf, führt dies dazu, dass die Flüssigkeit auf der Rohseite 13 durch die Durchlassöffnungen 50' so stark auf den Ventilkörper 51 einwirkt, dass dieser gegen die Kraft der Feder 52 vom Ventilsitz 50 weg bewegt wird, das Filterumgehungsventil 5 also öffnet. In diesem Zustand wird ein den Filterstoffkörper 30 umgehender Strömungsweg für die Flüssigkeit von der Rohseite 13 durch die Durchlassöffnungen 50' zur Reinseite 14 und durch die Durchbrechungen 42 in das Innere des Rohrstutzens 4, also zum Auslass 12 des Filters 1, freigegeben. Wenn die Druckdifferenz unter den Grenzwert absinkt, überwiegt wieder die Kraft der Feder 52 und das Filterumgehungsventil 5 schließt.

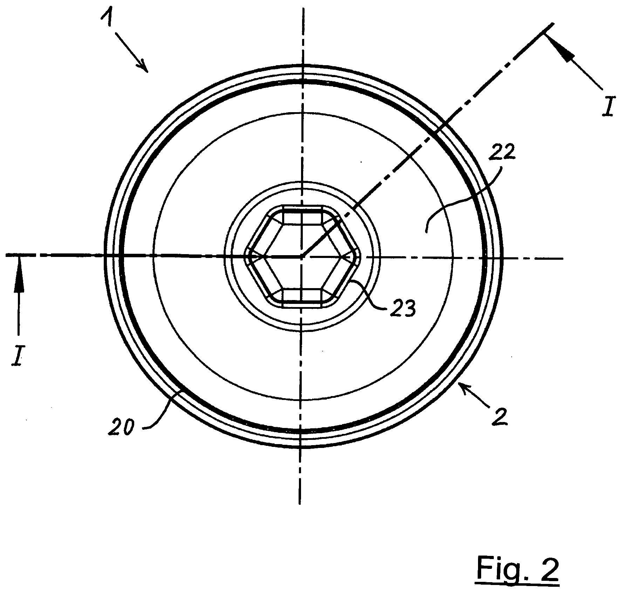

Figur 2 der Zeichnung zeigt den Filter 1 aus Figur 1 in einer Draufsicht, wobei in Figur 2 auch die Schnittlinie I-I des in Figur 1 gezeigten Längsschnitts eingezeichnet ist. Sichtbar ist hier nur das Filtergehäuse 2. Dem Betrachter zugewandt ist die obere, flanschferne Stirnseite 22 des Filtergehäuses 2 mit dem zentralen Werkzeugansatz 23. Umfangsseitig verläuft die Umfangswand 20 des Filtergehäuses 2.

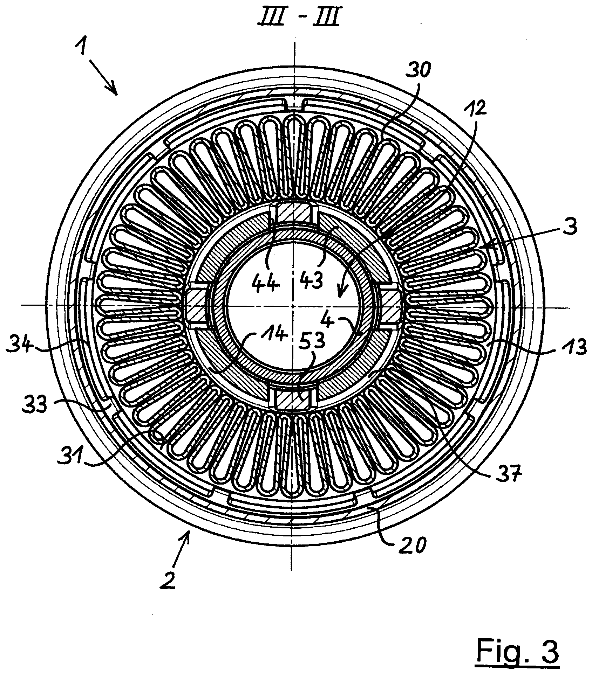

In Figur 3 ist der Filter 1 aus Figur 1 in Querschnitt gezeigt. Radial außen verläuft die Umfangswand 20 des Filtergehäuses 2. Im Inneren des Gehäuses 2 liegt der Filtereinsatz 3 mit dem Filterstoffkörper 30, der durch eine in Falten gelegte Filterstoffbahn gebildet ist. Unter dem Filterstoffkörper 30 liegt die untere Stirnscheibe 31 des Filtereinsatzes 3, mit der der Dichtringträger 34 über die Verbindungsstege 33 einstückig verbunden ist.

Radial innen vom Filterstoffkörper 30 liegt der innere Stützkörper 37 mit der Federstütze 53 in Form der vier in Axialrichtung verlaufenden Stützarme 53'. Zwischen den Stützarmen 53' der Federstütze 53 ist der Anschlag 43 mit den darin vorgesehenen offenen Zwischenräumen 44 für die Stützarme 53' der Federstütze 53 sichtbar. Den radial innersten Teil bildet der zentrale Rohrstutzen 4, an dessen unteren inneren Ende der Auslass 12 liegt.

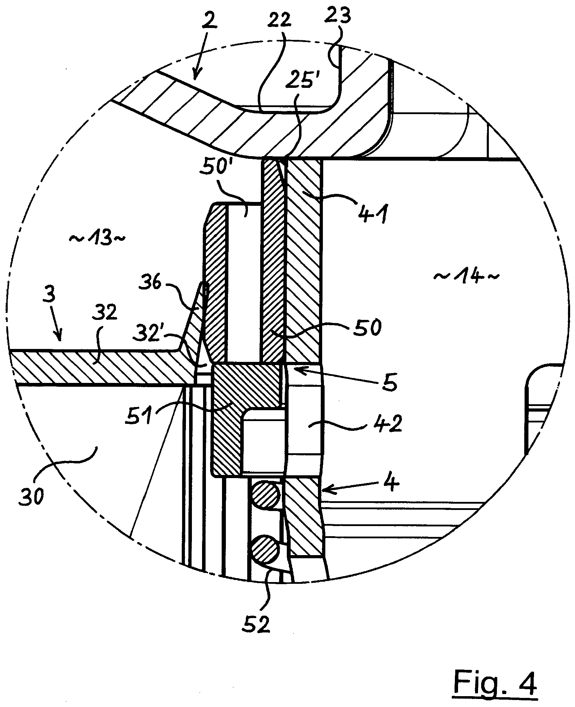

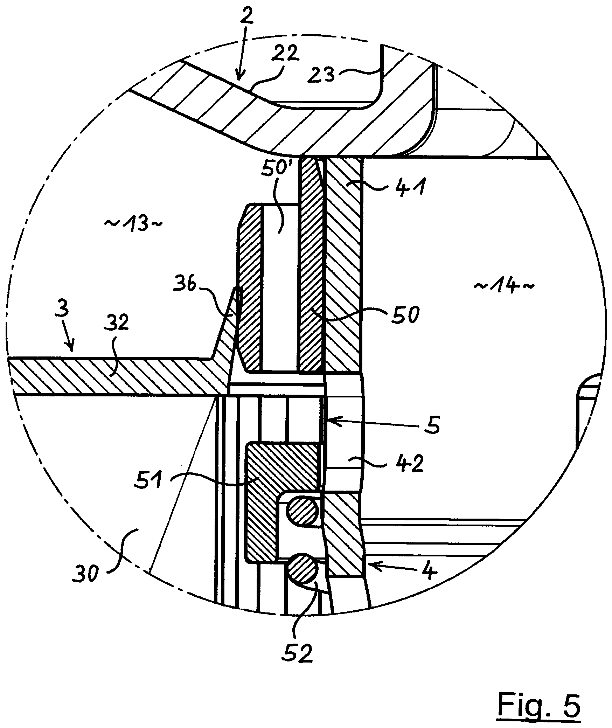

Die Figuren 4 und 5 zeigen ein vergrößertes Detail aus dem Filter 1 mit dem Filterumgehungsventil 5 nach Figur 1, das in Figur 4 in Schließstellung und in Figur 5 in Öffnungsstellung dargestellt ist.

Oben ist in Figur 4 und 5 jeweils ein Teil der oberen Stirnseite 22 des Filtergehäuses 2 mit dem Werkzeugansatz 23 erkennbar. An die Unterseite der Stirnseite 22 ist der zentrale Rohrstutzen 4 mit seinem inneren Endbereich 41 angeschweißt und verläuft von dort nach unten.

Im linken Teil der Figuren 4 und 5 ist jeweils ein kleiner Teil des Filtereinsatzes 3 erkennbar, mit dem Filterstoffkörper 30 und der oberen Stirnscheibe 32 mit ihrer Dichtlippe 36, die am Außenumfang des Ventilsitzes 50 dichtend anliegt und hier die Rohseite 13 von der Reinseite 14 des Filters 1 trennt.

Auf dem Außenumfang des inneren Endbereichs 41 des Rohrstutzens 4 ist der die Form eines Ringkörpers aufweisende Ventilsitz 50 fest und dicht angebracht. Durch den Ventilsitz 50 verlaufen die Durchlassöffnungen 50' in axialer Richtung.

Axial unterhalb des Ventilsitzes 50 liegt der ebenfalls in Form eines Ringkörpers ausgeführte Ventilkörper 51, der in Axialrichtung verschiebbar auf dem Außenumfang des Rohrstutzens 4 geführt ist. Mittels der unterhalb des Ventilkörpers 51 angeordneten Feder 52 ist der Ventilkörper 51 mit einer in Schließrichtung wirkenden Kraft vorbelastet. Solange die Druckdifferenz zwischen der Rohseite 13 und der Reinseite 14 einen vorgebbaren Grenzwert nicht überschreitet, hält die Feder 52 den Ventilkörper 51 in flüssigkeitsdichter Anlage am Ventilsitz 50 und eine Strömung der Flüssigkeit von der Rohseite 13 zur Reinseite 14 ist nur unter Durchströmung des Filterstoffkörpers 30 des Filtereinsatzes 3 möglich.

Figur 5 zeigt den geöffneten Zustand des Filterumgehungsventils 5, der auftritt, wenn die Druckdifferenz zwischen der Rohseite 13 und der Reinseite 14 den vorgegebenen Grenzwert überschreitet. In diesem Fall ist die von der auf der Rohseite 13 befindlichen Flüssigkeit durch die Durchlassöffnungen 50' auf den Ventilkörper 51 ausgeübte Kraft in Öffnungsrichtung größer als die von der Feder 52 auf den Ventilkörper 51 in Schließrichtung ausgeübte Kraft. Der Ventilkörper 51 ist nun vom Ventilsitz 50 durch Verschieben in Axialrichtung nach unten entfernt, wodurch ein Strömungsweg für die Flüssigkeit von der Rohseite 13 zur Reinseite 14 durch die Durchlassöffnungen 50' und die Durchbrechungen 42 des zentralen Rohrstutzens 4 unter Umgehung des Filterstoffkörpers 30 freigegeben wird. Auf diese Weise können unzulässig hohen Druckdifferenzen zwischen Rohseite 13 und Reinseite 14 vermieden werden, die beispielsweise bei Zähflüssigkeit der zu filternden Flüssigkeit infolge von niedriger Temperatur und/oder bei mit Schmutzpartikeln zugesetztem Filterstoffkörper 30 auftreten.

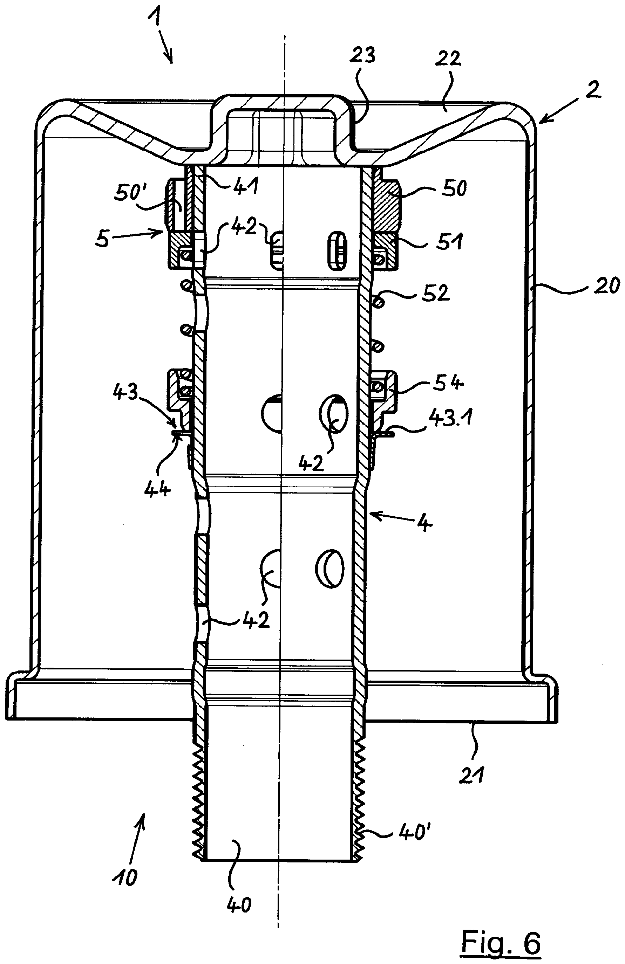

In Figur 6 der Zeichnung ist der Filter 1 in einem Zustand mit ausgebautem Filtereinsatz 3 dargestellt, wieder im Längsschnitt wie in Figur 1. Die äußere Hülle des Filters 1 bildet das Filtergehäuse 2 mit seiner Umfangswand 20 und seiner geschlossenen oberen Stirnseite 22, an die der Werkzeugansatz 23 angeformt ist.

Im Inneren des Gehäuses 2 ist der zentrale Rohrstutzen 4 angeordnet, der an seinem oberen Endbereich 41 fest und dicht mit der Unterseite der oberen Stirnseite 22 des Filtergehäuses 2 verbunden ist.

Auf dem zentralen Rohrstutzen 4 sind alle Teile des Filterumgehungsventils 5, mit Ausnahme der einen Teil des Filtereinsatzes 3 bildenden Federstütze 53, angeordnet. Ganz oben auf dem Rohrstutzen 4 sitzt außen lagefest und flüssigkeitsdicht der ringförmige Ventilsitz 50 mit den Durchlassöffnungen 50'. Darunter liegt der ebenfalls ringförmige, axial verschiebbare Ventilkörper 51, der sich hier in dichtender Anlage an der Unterseite des Ventilsitzes 50 befindet und die Durchlassöffnungen 50' verschließt. In diese Schließstellung wird der Ventilkörper 51 durch die Feder 52 gebracht, die ihrerseits an ihrem unteren Ende an dem axial verschieblichen Zwischenring 54 anliegt. Der Zwischenring 54 seinerseits stützt sich hier, da er nun nicht von der Federstütze 53 des Filtereinsatzes 3 beaufschlagt wird, an dem Anschlag 43 ab, der unverschieblich und unverdrehbar auf dem Außenumfang des Rohrstutzens 4 angebracht, beispielsweise im Presssitz aufgeschoben, ist. Auf diese Weise werden alle axial verschieblichen Teile des Filterumgehungsventils 5, nämlich der Ventilkörper 51, die Feder 52 und der Zwischenring 54, unverlierbar auf dem Rohrstutzen 4 gehalten.

Zum Einbauen des Filtereinsatzes 3 in den Filter 1 nach Figur 6 wird der Filtereinsatz 3 von der offenen Stirnseite 21 in das Filtergehäuse 2 eingeschoben. Durch Verdrehen des Filtereinsatzes 3 in Umfangsrichtung werden die Stützarme 53' der Federstütze 53 in Deckung mit den freien Zwischenräumen 44 des Anschlags 43 gebracht, sodass die Stützarme 53' dann durch die Zwischenräume 44 hindurchtreten und bei weiterem Einschieben des Filtereinsatzes 3 in Anlage an den Zwischenring 54 gelangen. Der so komplettierte Filter 1 kann dann mit seinem Verbindungsflansch 10 an einen Anschlussflansch einer zugehörigen Vorrichtung angeschraubt werden. Dabei wird während des Anschraubens der Filtereinsatz 3 noch weiter in das Filtergehäuse 2 hineingedrückt, womit zugleich die Feder 52 gespannt wird. Am Ende dieses Anschraubvorgangs dichtet der Dichtring 39 die Flanschverbindung ab und die Feder 52 hat ihre Soll-Vorspannung erreicht.

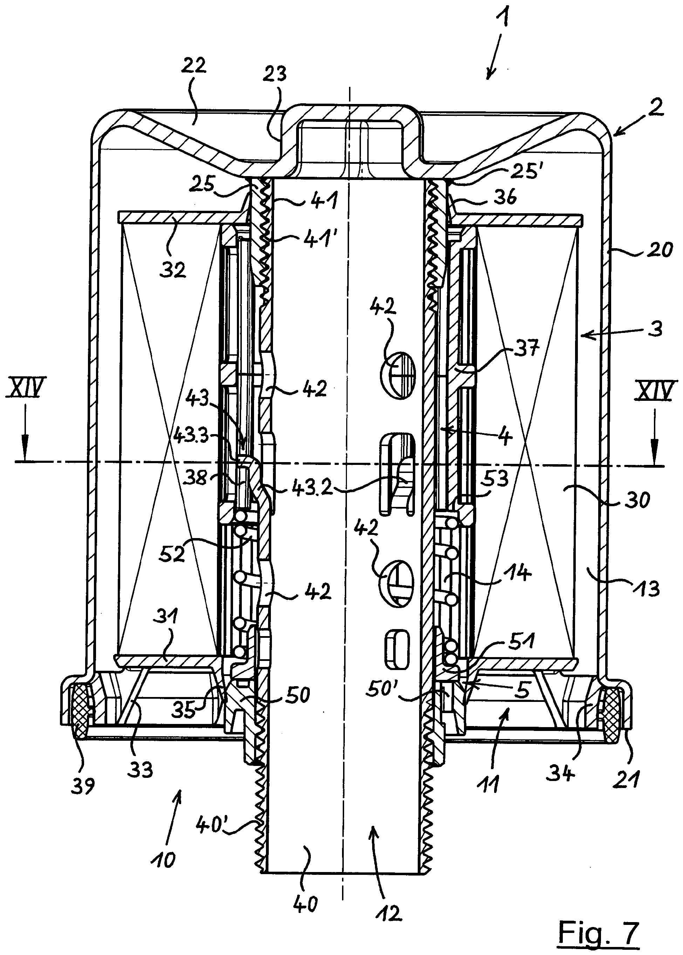

Figur 7 zeigt den Filter 1 in einer zweiten Ausführung, im Anlieferungszustand, im Längsschnitt. Der Filter 1 besitzt auch hier ein becherförmiges Filtergehäuse 2 mit einer Umfangswand 20, mit einer offenen, hier unteren Stirnseite 21 und einer geschlossenen, hier oberen Stirnseite 22, in deren Zentrum ein Werkzeugansatz 23 angeformt ist. Mit der oberen Stirnseite 22 des Filtergehäuses 2 ist ein konzentrisch zur Umfangswand 20 in das Innere des Filtergehäuses 2 vorragender Gewindestutzen 25 fest verbunden, hier mittels einer Schweißnaht 25' verschweißt. Dazu bestehen das Filtergehäuse 2 und der Gewindestutzen 25 hier aus Stahlblech, wobei das Gehäuse 2 bevorzugt ein Tiefziehteil ist.

Konzentrisch zur Umfangswand 20 ist im Inneren des Filtergehäuses 2 weiterhin ein zentraler Rohrstutzen 4 angeordnet, der in seinem inneren, hier oberen Endbereich 41 mit einem Außengewinde 41' versehen ist, mittels welchem der Rohrstutzen 4 in den Gewindestutzen 25 eingeschraubt ist.

In seinem äußeren, hier unteren Endbereich 40 besitzt der Rohrstutzen 4 ein Außengewinde 40', mittels welchem der Filter 1 an einen Anschlussflansch einer zugehörigen, hier nicht dargestellten Vorrichtung, wie Brennkraftmaschine eines Kraftfahrzeugs, anschraubbar ist. In seinem Bereich zwischen dem äußeren Endbereich 40 und dem inneren Endbereich 41 besitzt der Rohrstutzen 4 mehrere in Umfangs- und Axialrichtung verteilte Durchbrechungen 42. Außerdem besitzt der Rohrstutzen 4 etwa in seiner Längsmitte über seinen Umfang verteilt hier drei Anschläge 43. Jeder Anschlag 43 ist hier durch eine einstückig aus dem Material des Rohrstutzens 4 herausgedrückte Anschlagzunge 43.2 mit einer in Radialrichtung nach außen weisenden Anschlaglasche 43.3 gebildet.

Auf den Außenumfang des Rohrstutzens 4 und des Gewindestutzens 25 ist ein Filtereinsatz 3 von unten her aufgesteckt. Der Filtereinsatz 3 besteht aus einem hohlzylindrischen Filterstoffkörper 30, der stirnseitig von einer unteren Stirnscheibe 31 und einer oberen Stirnscheibe 32 eingefasst ist. Jede Stirnscheibe 31, 32 besitzt je eine zentrale Durchbrechung 31', 32' mit jeweils einer zugeordneten Dichtlippe 35, 36. Radial innen vom Filterstoffkörper 30 ist ein gitterförmiger Stützkörper 37 angeordnet.

Mit der unteren Stirnscheibe 31 ist über Verbindungsstege 33 ein Dichtringträger 34 einstückig verbunden, der einen umlaufende Dichtring 39 trägt. Im unbelasteten Zustand ragt der Dichtring 39 in Axialrichtung nach außen, hier unten, über die untere Stirnseite 21 des Filtergehäuses 2 vor und dichtet im montierten Zustand des Filters 1 diesen an einem zugehörigen Anschlussflansch ab.

Schließlich umfasst der Filter 1 nach Figur 7 noch ein Filterumgehungsventil 5, das hier im unteren Bereich des Filtergehäuses 2 in Höhe der unteren Stirnscheibe 31 des Filtereinsatzes 3 auf dem Rohrstutzen 4 angeordnet ist. Ein Ventilsitz 50 ist durch einen dicht auf dem Rohrstutzen 4 angeordneten Ringkörper mit in Umfangsrichtung einander benachbarten, in Axialrichtung verlaufenden Durchlassöffnungen 50' gebildet. Im montierten Zustand des Filters 1 ist der Ventilsitz 50 in Axialrichtung und Umfangsrichtung fixiert. Mit dem Ventilsitz 50 wirkt ein in Axialrichtung auf dem Rohrstutzen 4 verschiebbarer, ringförmiger Ventilkörper 51 zusammen, der durch eine Feder 52 in Form einer Schraubendruckfeder in Schließrichtung des Filterumgehungsventils 5 vorbelastet ist. Das von dem Ventilkörper 51 abgewandten Ende der Feder 52 wird dabei durch eine Federstütze 53 abgestützt, die an dem Stützkörper 37, genauer am unteren Stirnende von dessen axialen Streben 38, ausgebildet ist. In Figur 7 ist das Filterumgehungsventil 5 in seiner Schließstellung gezeigt. Dabei liegt der Ventilkörper 51 dichtend an dem Ventilsitz 50 an und verschließt die darin vorhandenen Durchlassöffnungen 50'.

Die in Figur 7 nach unten weisende Seite des Filters 1 bildet einen Verbindungsflansch 10 zum Verbinden des Filters 1 mit einem zugehörigen Anschlussflansch. Radial außen von dem vorstehenden unteren Endbereich 40 des zentralen Rohrstutzens 4 verläuft ein Einlass 11 für zu reinigende Flüssigkeit, wie Schmieröl, in das Innere des Filters 1 auf dessen Rohseite 13. Radial innen vom Filterstoffkörper 30 liegt ein Reinbereich 14 des Filters, der über die Durchbrechungen 42 mit dem Inneren des Rohrstutzens 4 verbunden ist, welcher einen nach unten führenden Auslass 12 für gefilterte Flüssigkeit bildet.

In dem Zustand, wie er in Figur 7 dargestellt ist, kann der Filter 1 als vorgefertigte Baueinheit z. B. einem Motoren- oder Fahrzeughersteller zugeliefert werden, der den Filter 1 dann schnell und einfach montieren kann. Dabei ist für diese Filterausführung eine hängende Anordnung bevorzugt, bei der das Filterumgehungsventil 5 dann oben im Filter 1 in dessen sauberstem Bereich liegt. Generell ist aber auch dieser Filter 1 in jeder räumlichen Lage einsetzbar.

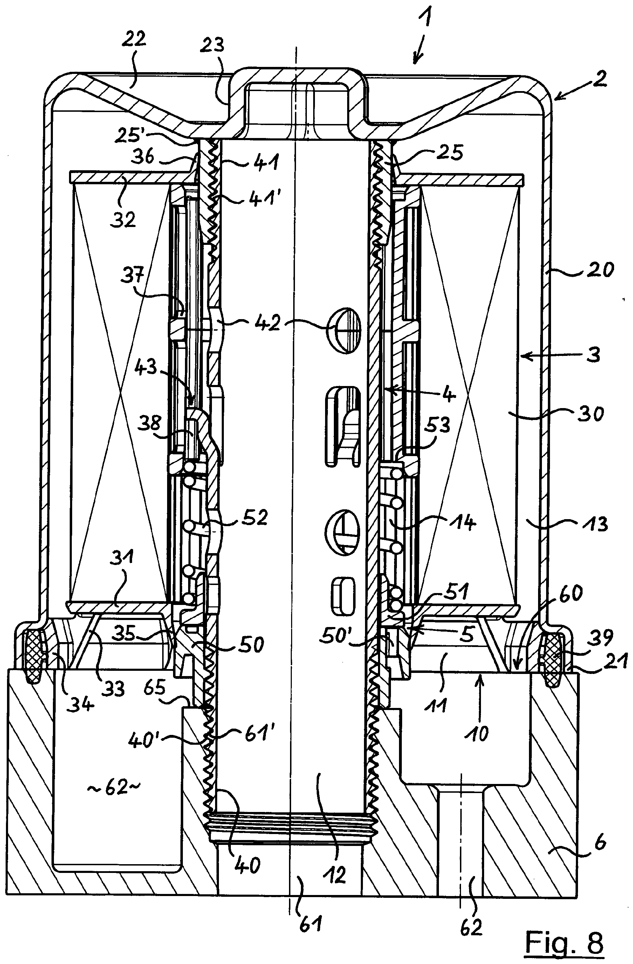

Die Figur 8 zeigt den Filter 1 aus Figur 7 im Einbauzustand, mit geschlossenem Filterumgehungsventil 5, im Längsschnitt. Im unteren Teil der Figur 8 ist ein Teil einer Vorrichtung 6, wie des Kurbelgehäuses 6 einer Brennkraftmaschine, dargestellt, welches oberseitig einen Anschlussflansch 60 aufweist, an den der Filter 1 mit seinem Verbindungsflansch 10 angebaut ist. Zu diesem Zweck wird der Filter 1 mittels eines an dem Werkzeugansatz 23 angesetzten Schraubwerkzeuges mit dem mit dem Gewinde 40' versehenen unteren Endbereich 40 des Rohrstutzens 4 in ein Gegengewinde 61' des Anschlussflansches 60 eingeschraubt, bis die untere Stirnseite 21 des Filtergehäuses 2 an der Oberfläche des Anschlussflansches 60 anliegt oder ein vorgebbares Anzugsdrehmoment erreicht ist. Nach außen hin ist die Flanschverbindung durch den nun komprimierten Dichtring 39 flüssigkeitsdicht abgedichtet, wobei in der Zeichnung lediglich aus zeichnungstechnischen Gründen der Dichtring 39 in seinem entspannten, nicht komprimierten Zustand dargestellt ist. Der Ventilsitz 50 liegt nun mit seinem unteren Stirnende an einem im Anschlussflansch 60 ausgebildeten Anschlag 65 an, wodurch die axiale Position des Ventilsitzes 50 festgelegt und gesichert ist.

Im normalen Betrieb dieses Filters 1 strömt zu reinigende Flüssigkeit, wie Schmieröl, durch einen Rohflüssigkeitskanal 62 in der Vorrichtung 6 zum Einlass 11 des Filters 1 und auf dessen Rohseite 13. Die Flüssigkeit durchströmt dann den Filterstoffkörper 30 des Filtereinsatzes 3 in Radialrichtung von außen nach innen und gelangt unter Zurücklassung von Schmutzpartikeln im Filterstoffkörper 30 auf die Reinseite 14 des Filters 1. Durch die Durchbrechungen 42 hindurch fließt die gereinigte Flüssigkeit nach unten und über den Auslass 12 in den Reinflüssigkeitskanal 61 der Vorrichtung 6.

In diesem normalen Zustand, bei dem eine Druckdifferenz zwischen der Rohseite 13 und der Reinseite 14 unterhalb eines vorgebbaren Grenzwertes bleibt, ist das Filterumgehungsventil 5 geschlossen, wie in Figur 8 dargestellt.

In seinen weiteren Teilen entspricht der Filter 1 in Figur 8 dem Filter 1 in Figur 7, auf deren Beschreibung verwiesen wird.

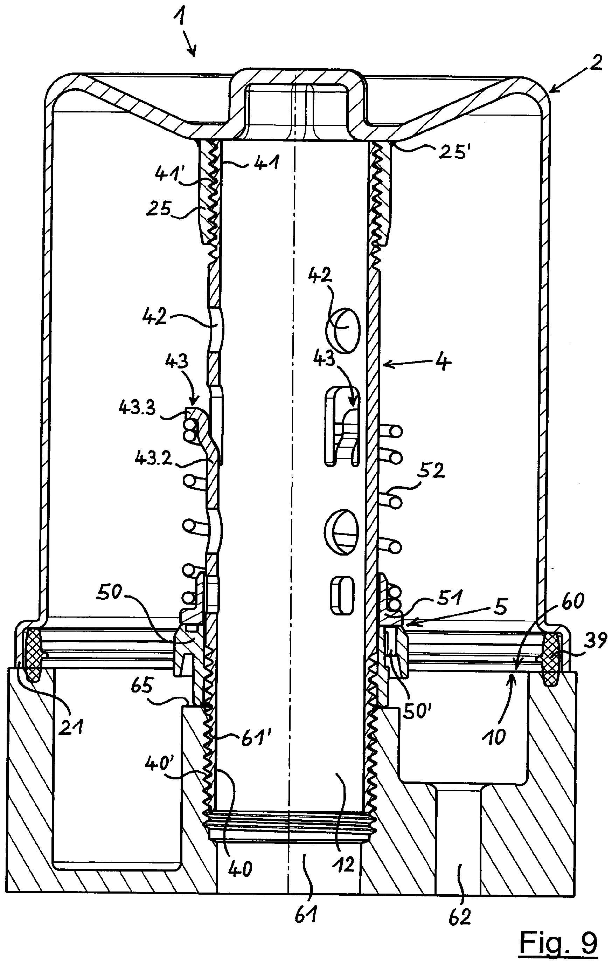

Die Figur 9 zeigt den Filter 1 aus Figur 8 ohne den Filtereinsatz 3, im Längsschnitt. Hier wird insbesondere deutlich, dass bei fehlendem Filtereinsatz 3 die Feder 52 sich mit ihrem von dem Ventilkörper 51 entfernten Ende am Anschlag 43, konkret den Anschlaglaschen 43.3, abstützt. Hiermit wird gewährleistet, dass die Feder 52 sowie der Ventilkörper 51 unverlierbar auf dem zentralen Rohrstutzen 4 gehalten werden, wenn kein Filtereinsatz 3 vorhanden ist.

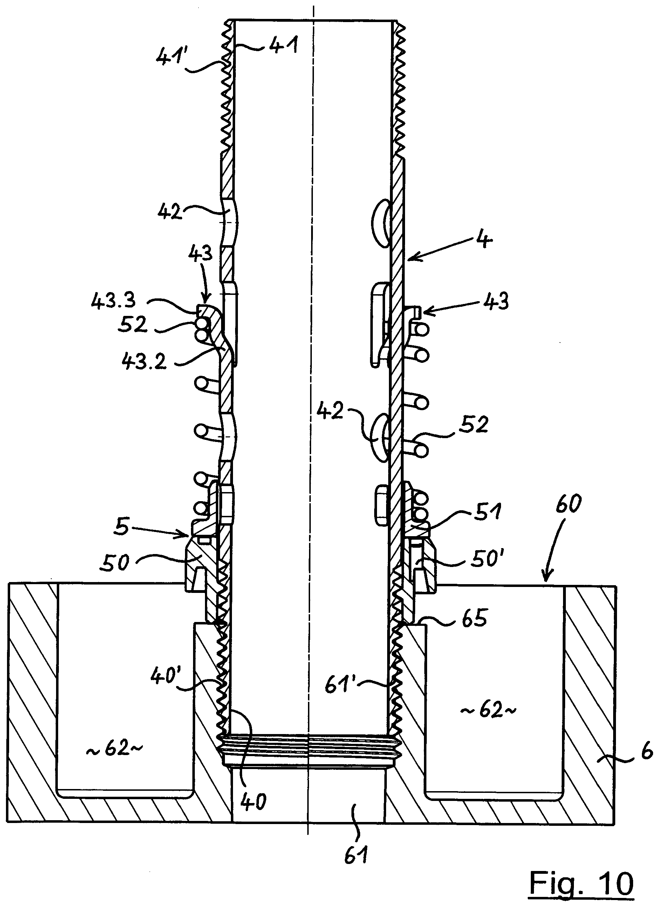

Zum Einbauen eines Filtereinsatzes 3 in den Filter 1 wird, wie in Figur 10 ebenfalls im Längsschnitt dargestellt ist, das Filtergehäuse 2 entfernt, hier von dem zentralen Rohrstutzen 4 abgeschraubt. Zu diesem Zweck ist die Verschraubung des unteren Endbereichs 40 des Rohrstutzens 4 mit dem Außengewinde 40' im Gewinde 61' des Anschlussflansches 60 mit einem größeren Losdrehwiderstand ausgeführt als die Verschraubung zwischen dem Gewindestutzen 25 am Filtergehäuse 2 und dem Gewinde 41' am oberen Endbereich 41 des Rohrstutzens 4. Beim Abschrauben des Filtergehäuses 2 bleibt hier also der Rohrstutzen 4 mit dem Anschlussflansch 60 verbunden. Der größere Losdrehwiderstand der Verschraubung zwischen dem Rohrstutzen 4 und dem Anschlussflansch 60 kann beispielsweise dadurch erreicht werden, dass diese Verschraubung mit einer mikroverkapselten Schraubensicherung versehen wird, die ihre Sicherungswirkung beim ersten Herstellen der Verschraubung entfaltet.

Bei entferntem Filtergehäuse 2 kann hier ein Filtereinsatz 3 von oben her auf den Rohrstutzen 4 aufgesteckt werden und dann das Filtergehäuse 2 wieder angeschraubt werden. Sobald der Filtereinsatz 3 zusammen mit dem Filtergehäuse 2 um einen gewissen Weg auf dem Rohrstutzen 4 nach unten bewegt ist, tritt die Federstütze 53 am Stützkörper 37 des Filtereinsatzes 3 (vergleiche Figur 8) in Eingriff mit dem oberen, vom Ventilkörper 51 abgewandten Ende der Feder 52 und spannt diese bei der weiteren Bewegung nach unten auf ein gewünschtes Maß vor. Somit sorgt auch hier der Filtereinsatz 3 für die Einstellung einer gewünschten Vorspannung der Feder 52 und damit für einen gewünschten Öffnungsdruck des Filterumgehungsventils 5.

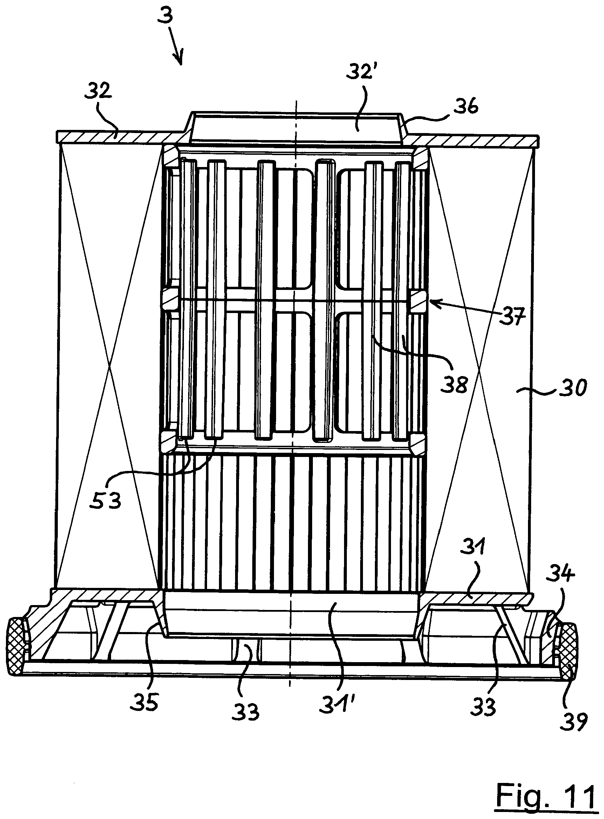

Die Figur 11 zeigt den Filtereinsatz 3 des Filters 1 nach Figur 7 und 8 als Einzelteil im Längsschnitt. Der hohlzylindrische Filterstoffkörper 30 ist an seinen beiden Stirnseiten von den Stirnscheiben 31 und 32 dicht eingefasst. Die untere Stirnscheibe 31 besitzt die zentrale Durchbrechung 31' mit der umlaufenden Dichtlippe 35. Außerdem ist mit der unteren Stirnscheibe 31 über die Verbindungsstege 33 der Dichtringträger 34 mit dem daran gehaltenen Dichtring 39 einstückig verbunden. Die obere Stirnscheibe 32 besitzt eine zentrale Durchbrechung 32', die von der Dichtlippe 36 umgeben ist.

In Inneren des Filterstoffkörpers 30 ist der gitterförmige Stützkörper 37 angeordnet, der in Umfangsrichtung voneinander beabstandet mehrere axiale Streben 38 aufweist. Deren unteres Ende bildet hier die Federstütze 53 für die Feder 52 des Filterumgehungsventils 5.

Im Rahmen einer Filterwartung wird ein verbrauchter Filtereinsatz 3 gegen einen frischen Filtereinsatz 3 getauscht; alle weiteren Teile des Filters 1 werden weiter verwendet. Der Filtereinsatz 3 besteht zweckmäßig vollständig aus verbrennbaren Materialien, sodass verbrauchte Filtereinsätze problemlos und vollständig thermisch verwertet werden können.

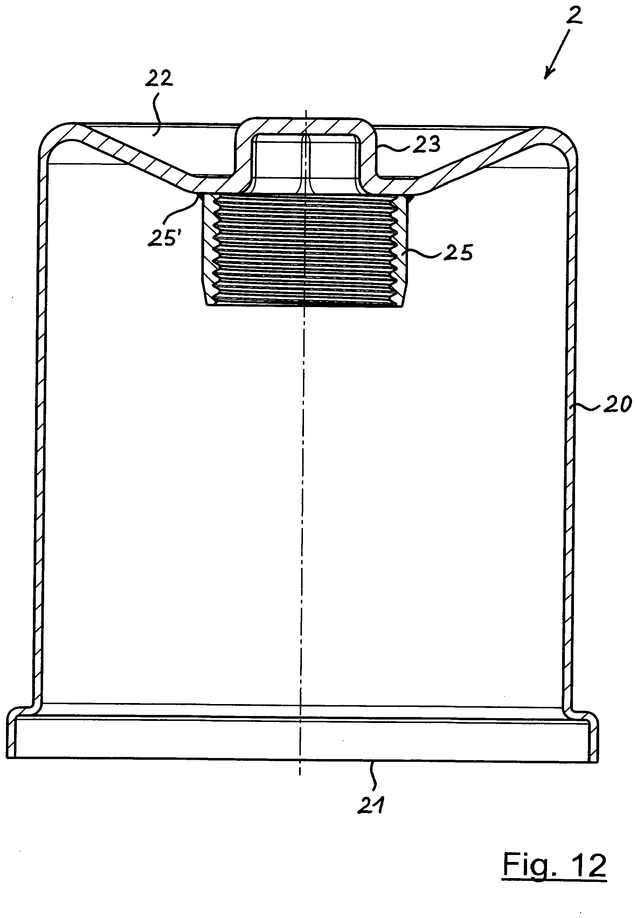

Die Figur 12 zeigt das Filtergehäuse 2 des Filters 1 aus den Figuren 7 bis 9 als Einzelteil im Längsschnitt. Radial außen verläuft die rotationssymmetrische, hohlzylindrische Umfangswand 20. Unten liegt die offene Stirnseite 21. Oben befindet sich die geschlossene Stirnseite 22 mit dem Werkzeugansatz 23. Konzentrisch zur Umfangswand 20 ist in Inneren des Filtergehäuses 2 der mittels der Schweißnaht 25' mit dem übrigen Filtergehäuse 2 fest verbundene Gewindestutzen 25 angeordnet.

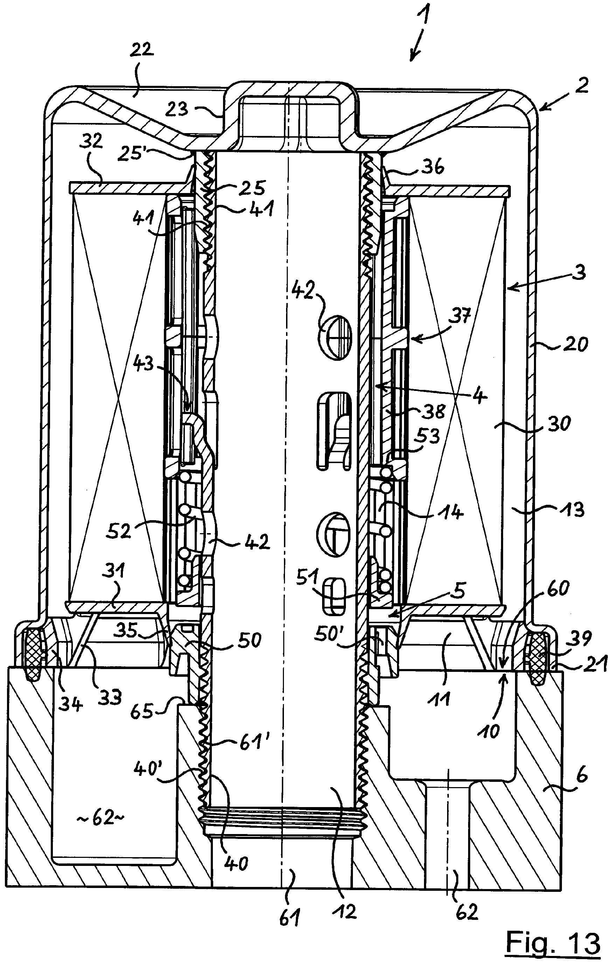

Figur 13 zeigt den Filter 1 aus Figur 8, nun in einem Betriebszustand mit offenem Filterumgehungsventil 5, im Längsschnitt. Dieser Betriebszustand tritt dann ein, wenn eine Druckdifferenz zwischen der Rohseite 13 und der Reinseite 14 des Filters 1 einen vorgebbaren Grenzwert überschreitet, beispielsweise in Folge einer hohen Viskosität der Flüssigkeit bei niedriger Temperatur und/oder bei einem durch Schmutzpartikel zugesetztem Filterstoffkörper 30. Dies führt dazu, dass die von der Flüssigkeit auf den Ventilkörper 51 in Öffnungsrichtung ausgeübte Kraft die von der Feder 52 auf den Ventilkörper 51 in Schließrichtung ausgeübte Kraft übersteigt. In diesem Fall sorgt die Kraft der Flüssigkeit dafür, dass der Ventilkörper 51 gegen die Kraft der Feder 52 in Axialrichtung auf dem Außenumfang des Rohrstutzens 4 verschoben und von dem Ventilsitz 50 abgehoben wird. Hierdurch wird eine unmittelbare Strömungsverbindung von der Rohseite 13 durch die Durchlassöffnungen 50' des Ventilsitzes 50 zur Reinseite 14 und durch das Innere des Rohrstutzens 4 zum Auslass 12 des Filters 1 unter Umgehung des Filterstoffkörpers 30 freigegeben.

Hinsichtlich der weiteren in Figur 13 dargestellten Teile wird auf die Beschreibung der Figur 8 verwiesen.

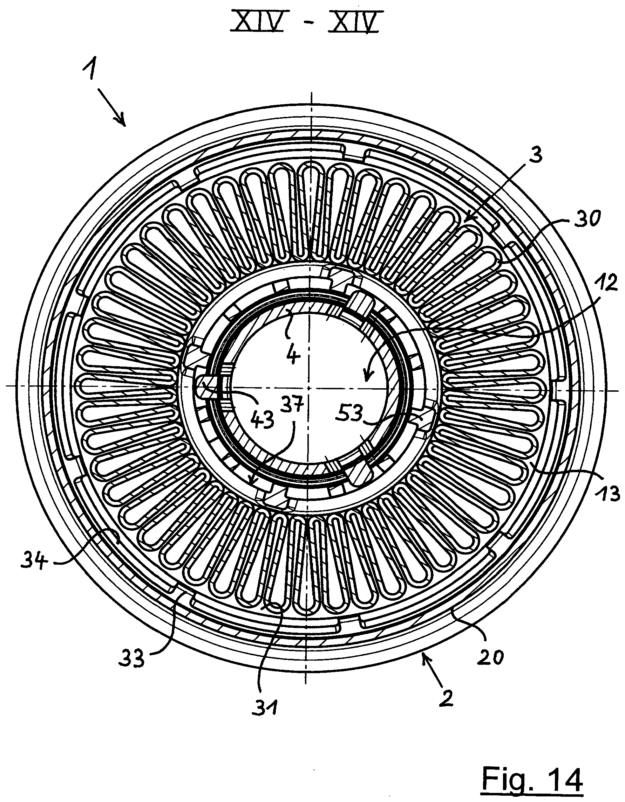

Die Figur 14 zeigt den Filter 1 aus Figur 7 im Querschnitt gemäß der Schnittlinie XIV-XIV in Figur 7. Radial außen ist die Umfangswand 20 des Filtergehäuses 2 sichtbar. Radial nach innen schließt sich daran der Dichtringträger 34 an, der über mehrere, hier neun, in Umfangsrichtung voneinander beabstandete Verbindungsstege 33 mit der unteren, im Hintergrund liegenden Stirnscheibe 31 des Filtereinsatzes 3 verbunden ist. Weiter radial nach innen folgt der hohlzylindrische Filterstoffkörper 30, der durch eine in Falten gelegte Filterstoffbahn gebildet ist. Radial innen vom Filterstoffkörper 30 liegt der Stützkörper 37 mit der daran ausgebildeten Federstütze 53. Den radial innersten Teil bildet der zentrale Rohrstutzen 4 mit seinem einstückig ausgebildeten, radial nach außen vorragenden Anschlag 43.

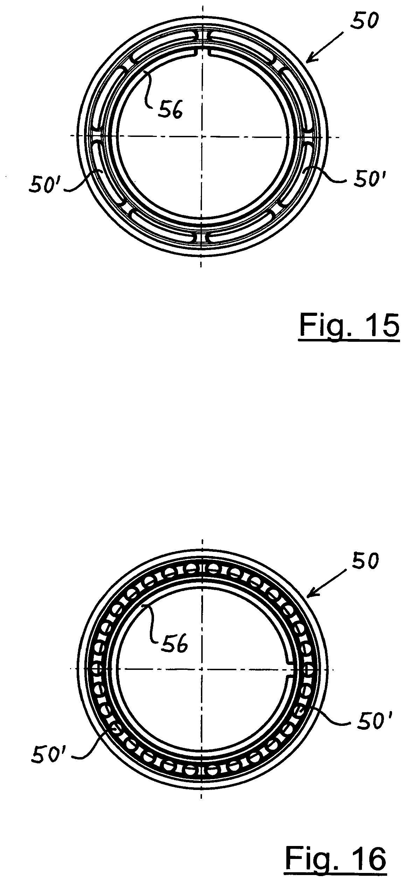

Die Figur 15 zeigt einen Ventilsitz 50 des Filters 1 nach den Figuren 7 bis 14 in einer ersten Ausführung in Draufsicht. Hier wird besonders deutlich, dass der Ventilsitz 50 die Form eines Ringkörpers hat. Die Durchlassöffnungen 50' sind hier ringsegmentförmig ausgeführt, um einen möglichst großen Durchlassquerschnitt im offenen Zustand des Filterumgehungsventils 5 zur Verfügung zu stellen. Radial innen im Ventilsitz 50 ist ein hier nur einen Gewindegang umfassendes Innengewinde 56 erkennbar, das dazu dient, den Ventilsitz 50 auf das Gewinde 40' am äußeren Endbereich 40 des zentralen Rohrstutzens 4 aufzuschrauben, wie dies beispielsweise in den Figuren 7 bis 10 und 13 dargestellt ist.

Figur 16 zeigt den Ventilsitz 50 des Filters 1 nach den Figuren 7 bis 14 in einer zweiten Ausführung in Draufsicht. Auch hier hat der Ventilsitz 50 die Form eines Ringkörpers, jedoch sind hier die Durchlassöffnungen 50' in Form von zueinander dicht benachbarten runden Öffnungen ausgeführt. Radial innen ist auch hier das Innengewinde 56 vorgesehen.

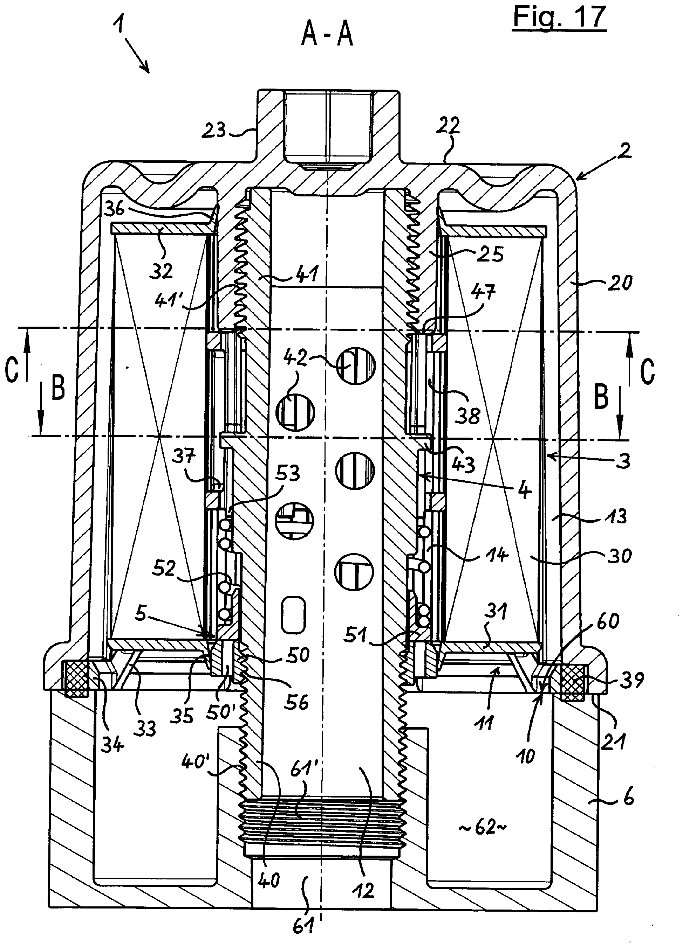

Die Figur 17 der Zeichnung zeigt den Filter 1 in einer dritten Ausführung, im Einbauzustand mit geschlossenem Filterumgehungsventil 5 und zusätzlich mit einer Losdrehsicherung 47, im Längsschnitt. Für eine sichere Funktion eines Flüssigkeitsfilters 1 mit einem Anschraubgehäuse, wie es das Filtergehäuse 2 bei dem Filter 1 nach Figur 17 darstellt, ist es wesentlich, dass ein selbsttätiges Losdrehen sicher vermieden wird. Hierzu dient bei dem Beispiel des Filters 1 nach Figur 17 eine integrierte Losdrehsicherung 47. Die Losdrehsicherung 47 ist hier zwischen dem Stützkörper 37 des Filtereinsatzes 3 einerseits und dem Gewindestutzen 25 an der Innenseite des Filtergehäuses 2 andererseits ausgebildet. Der Stützkörper 37 ist relativ zu dem zentralen Rohrstutzen 4 nicht oder nur sehr begrenzt in Umfangsrichtung verdrehbar, aber in Axialrichtung verschiebbar ausgeführt. Da, wie auch bei den zuvor beschriebenen Ausführungsbeispielen, hier die an dem Stützkörper 37 ausgebildete Federstütze 53 die Feder 52 des Filterumgehungsventils 5 an ihrem vom Ventilkörper 51 entfernten Ende abstützt, übt die Feder 53 eine in Axialrichtung auf den axial beweglichen Stützkörper 37 in Richtung zum Gewindestutzen 25 wirkende Kraft aus. Hierdurch werden ein oberes Stirnende des Stützkörpers 37 und eine untere Stirnseite des Gewindestutzens 25 mit einer durch die Federkraft der Feder 52 bestimmten Kraft aneinander angedrückt. Zudem sind der Stützkörper 37 und der Gewindestutzen 25 an ihren miteinander in Kontakt tretenden Flächen mit ineinandergreifenden Konturen ausgebildet, wie später noch erläutert wird. Diese Konturen sorgen für die gewünschte Sicherung des als Schraubgehäuse ausgebildeten Filtergehäuses 2 gegen ein unerwünschtes selbsttätiges Losdrehen von dem zentralen Rohrstutzen 4.

Auch in dieser Ausführung des Filters 1 besitzt der zentrale Rohrstutzen 4 in seinem mittleren Bereich an seinem Umfang den Anschlag 43, der hier in Form von einstückig mit dem Rohrstutzen 4 ausgebildeten, in Radialrichtung nach außen vorstehenden Nasen ausgebildet ist.

Bei dem Beispiel nach Figur 17 ist bevorzugt vorgesehen, dass das Filtergehäuse 2 mit dem Gewindestutzen 25 einstückig ausgebildet ist und ein Spritzgussteil aus Kunststoff ist. Bevorzugt ist weiter vorgesehen, dass auch der zentrale Rohrstutzen 4 hier ein Spritzgussteil aus Kunststoff ist. Ein geeigneter Kunststoff, der die nötige mechanische, thermische und chemische Stabilität aufweist, ist beispielsweise Polyamid (PA), welcher einen gewissen Anteil an Glasfasern enthalten kann.

Wie schon die zuvor beschriebenen Ausführungsbeispiele ist auch dieses Ausführungsbeispiel des Filters 1 nach Figur 17 mit einem Filterumgehungsventil 5 ausgestattet. Dazu ist der Ventilsitz 50 mit seinen Durchlassöffnungen 50' auch hier auf das Außengewinde 40' des unteren Endbereichs 40 des Rohrstutzens 4 aufgeschraubt. Der Ventilkörper 51 befindet sich oberhalb des Ventilsitzes 50 und ist auch hier in Axialrichtung auf dem Außenumfang des Rohrstutzens 4 verschiebbar. Die Feder 52 beaufschlagt den Ventilkörper 51 mit einer in Schließrichtung wirkenden Kraft.

Hinsichtlich der weiteren Teile in Figur 17 und deren Funktion wird auf die vorhergehende Beschreibung, insbesondere der Figur 8, verwiesen.

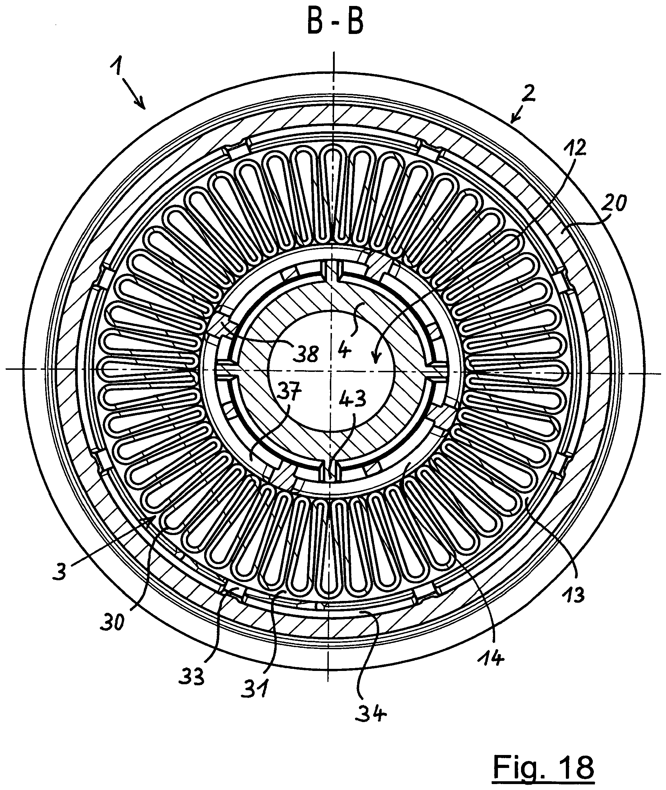

Figur 18 zeigt den Filter 1 aus Figur 17 im Querschnitt gemäß der Schnittlinie B-B in Figur 17. Radial außen ist das Filtergehäuse 2 mit seiner Umfangswand 20 sichtbar. Radial innen davon liegt im Hintergrund die untere Stirnscheibe 31 mit den Verbindungsstegen 33 für den Dichtringträger 34. Auf der unteren Stirnscheibe 31 ist der Filterstoffkörper 30 in Form der gefalteten Filterstoffbahn angeordnet. Radial innen vom Filterstoffkörper 30 liegt der gitterförmige Stützkörper 37. Den radial innersten Teil des Filters 1 bildet auch hier wieder der zentrale Rohrstutzen 4, von dem über dessen Außenumfang verteilt insgesamt vier vorspringenden Nasen als Anschlag 43 vorragen. Die Figur 18 verdeutlicht, dass der Stützkörper 37 und die den Anschlag 43 bildenden Nasen sich in Radialrichtung gesehen überlappen, so dass ein Verdrehen des Stützkörpers 37 relativ zum zentralen Rohrstutzen 4 nicht oder nur sehr begrenzt möglich ist.

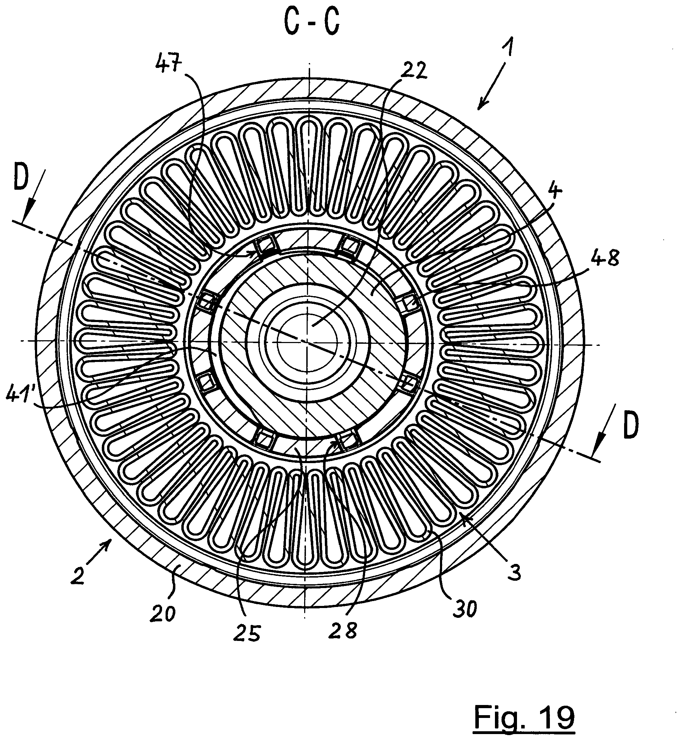

Die Figur 19 zeigt den Filter 1 aus Figur 17 ebenfalls im Querschnitt, nun gemäß der Schnittlinie C - C in Figur 17. Der radial äußere Teil des Filters 1 bis einschließlich des Filterstoffkörpers 30 entspricht demjenigen der Figur 18, auf deren Beschreibung diesbezüglich verwiesen wird.

Radial innen vom Filterstoffkörper 30 ist nun der Gewindestutzen 25 des Filtergehäuses 2 nahe seiner unteren Stirnseite geschnitten, in welcher hier insgesamt acht Eintiefungen 28 in Umfangsrichtung regelmäßig voneinander beabstandet als stirnseitige Kontur eingeformt sind. Umgekehrt sind auf der zum Gewindestutzen 25 weisenden Stirnseite des einen Teil des Stützkörpers 37 bildenden Losdrehsicherungsrings 47' Nocken 48 einstückig angeformt, die mit den Eintiefungen 28 in Eingriff treten. Die Eintiefungen 28 und die Nocken 48 bilden zusammen mit der Feder 52 die Losdrehsicherung 47. Da der Stützkörper 37, wie zuvor beschrieben, von der Feder 52 in Richtung zum Gewindestutzen 25 vorbelastet wird, bilden die Eintiefungen 28 und die Nocken 48 eine Art Rasteingriff, der ein unerwünschtes selbsttätiges Verdrehen des Filtergehäuses 2 gegen den Stützkörper 37 verhindert. Da der Stützkörper 37 seinerseits gegen ein Verdrehen relativ zum Rohrstutzen 4 gesichert ist, kann sich das Filtergehäuse 2 auch bei im Betrieb des Filters 1 in der Praxis auftretenden Erschütterungen oder Druckpulsationen nicht selbsttätig von dem zentralen Rohrstutzen 4 losdrehen.

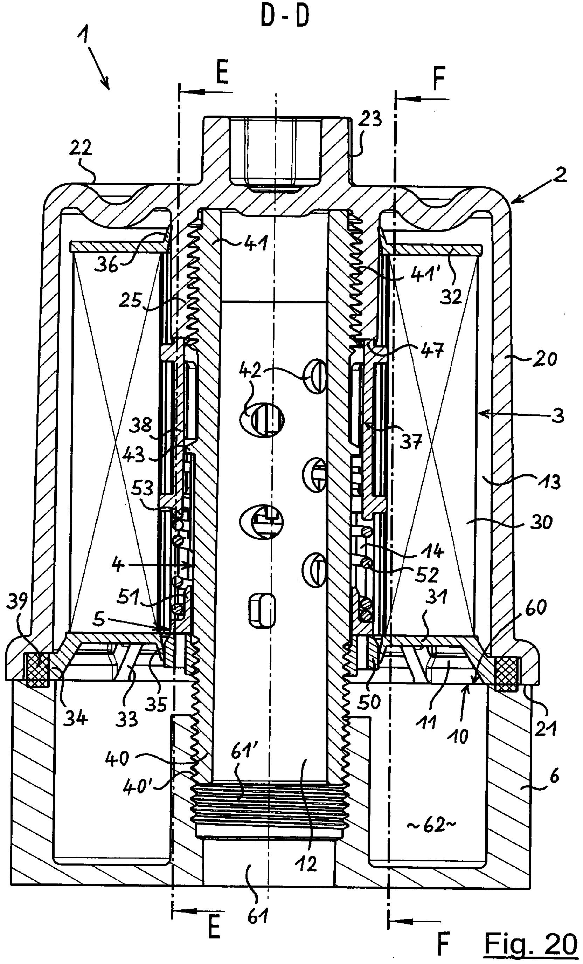

Die Figur 20 zeigt den Filter 1 aus den Figuren 17 bis 19 im Längsschnitt gemäß der Schnittlinie D-D in Figur 19. Unterhalb des Gewindestutzens 25 des Filtergehäuses 2 ist auf dem Außenumfang des zentralen Rohrstutzens 4 der Stützkörper 37 des Filtereinsatzes 3 axial verschieblich angeordnet. Das nach oben weisende Stirnende des Stützkörpers 37 und die nach unten weisende Stirnseite des Gewindestutzens 25 bilden zusammen die zuvor beschriebene Losdrehsicherung 47.

Das nach unten weisende Stirnende des Stützkörpers 37 bildet hier wieder die Federstütze 53, welche das von dem Ventilkörper 51 abgewandte Ende der Feder 52 abstützt. Die einstückig an den zentralen Rohrstutzen 4 angeformten Nasen des Anschlags 43 sorgen einerseits für die gewünschte Verdrehsicherung des Stützkörpers 37 relativ zum Rohrstutzen 4 und bilden andererseits den Anschlag für die Feder 52, wenn sich im Filter 1 kein Filtereinsatz 3 befindet.

Hinsichtlich der weiteren Teile in Figur 20 und deren Funktion wird auf die vorhergehende Beschreibung verwiesen.

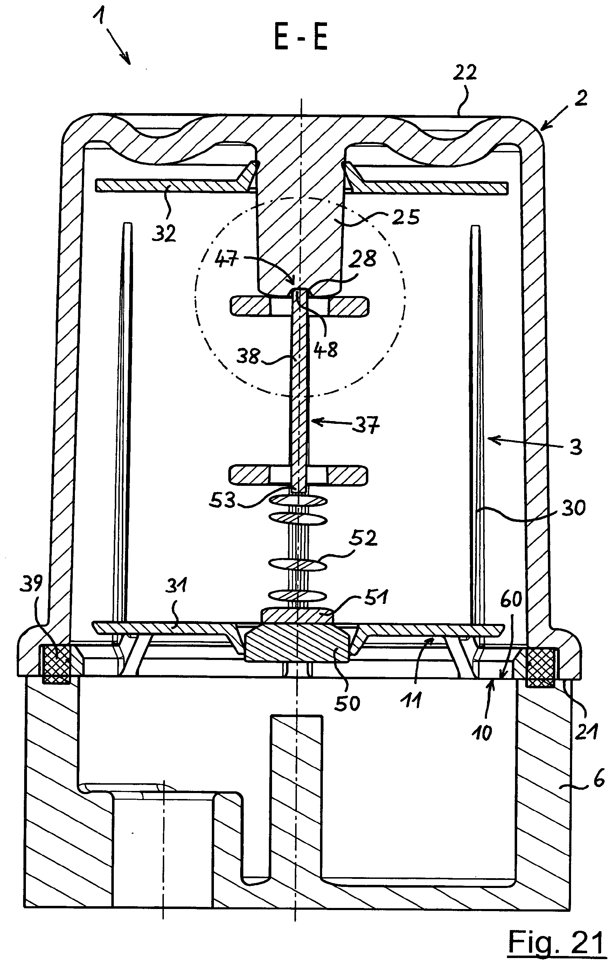

Die Figur 21 zeigt den Filter 1 aus den Figuren 17 bis 20 im Längsschnitt gemäß der Schnittlinie E-E in Figur 20, wobei hier insbesondere die Losdrehsicherung 47 veranschaulicht wird. Im oberen Bereich des Filtergehäuses 2 ist der Gewindestutzen 25 in seinem Randbereich geschnitten. In der Stirnfläche des Gewindestutzens 25 ist hier eine der Eintiefungen 28 erkennbar. In die Eintiefung 28 greift einer der Nocken 48 ein, der auf der oberen Stirnseite des Stützkörpers 37, hier in Fortsetzung einer von dessen axialen Streben 38, angeformt ist.

Hinsichtlich der weiteren Einzelheiten in Figur 21 wird wieder auf die vorhergehende Beschreibung verwiesen.

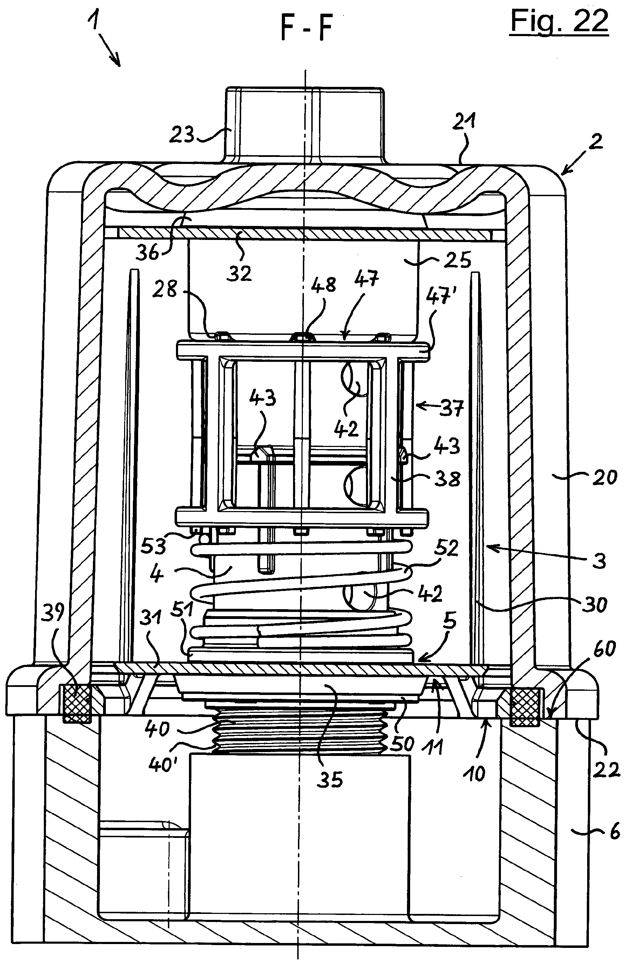

Die Figur 22 zeigt den Filter 1 aus den Figuren 17 bis 21 nochmals im Längsschnitt, nun gemäß der Schnittlinie F-F in Figur 20. In diesem Schnitt sind der zentrale Rohrstutzen 4, der Stützkörper 37, der Ventilsitz 50, der Ventilkörper 51 und die Feder 52 in Seitenansicht sichtbar. Die Feder 52 beaufschlagt mit ihrem unteren Ende den Ventilkörper 51 mit einer in Schließrichtung des Filterumgehungsventils 5, das heißt mit einer in Richtung zum Ventilsitz 50, wirkenden Kraft.

Mit ihrem oberen Ende beaufschlagt dieselbe Feder 52 den Stützkörper 37 mit einer nach oben in Richtung zum Gewindestutzen 25 wirkenden Kraft. Das obere Ende des Stützkörpers 37 ist als Losdrehsicherungsring 47' der Losdrehsicherung 47 ausgebildet. Über die Oberseite des Losdrehsicherungsrings 47' ragen die Nocken 48 vor, welche hier wieder in Eingriff mit den stirnseitigen Eintiefungen 28 des Gewindestutzens 25 stehen und so zusammen die Losdrehsicherung 47 bilden.

Hinsichtlich der weiteren Teile in Figur 22 wird auf die vorhergehende Beschreibung verwiesen.

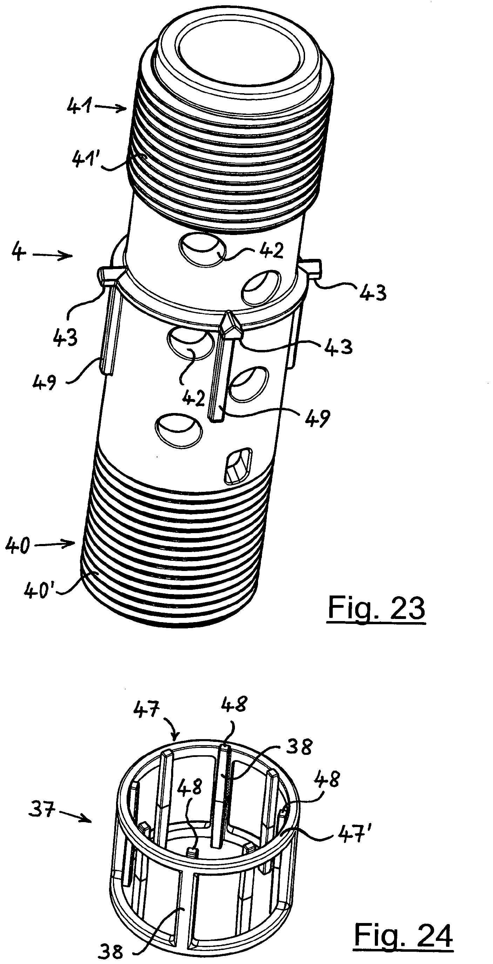

Figur 23 zeigt den zentralen Rohrstutzen 4 als Teil des Filters 1 nach den Figuren 17 bis 22 als Einzelteil in Ansicht schräg von oben. In seinem oberen Endbereich 41 besitzt der Rohrstutzen 4 das Außengewinde 41', in seinem unteren Endbereich 40 ist das Außengewinde 40' vorgesehen. In dem zwischen den Gewinden 40', 41' liegenden Bereich des Rohrstutzens 4 sind in diesem die Durchbrechungen 42 angebracht.

In einem axialen Abstand vom unteren Ende des oberen Gewindes 41' sind über den Umfang verteilt die vier Nasen als Anschlag 43 angeformt, die radial nach außen vorstehen. In Axialrichtung erstreckt sich jeweils unterhalb jeder Nase des Anschlages 43 eine rippenförmige Längsführung 49 nach unten, die im Abstand vom unteren Gewinde 40'jeweils endet. Die Längsführungen 49 dienen zusammen mit den Nasen des Anschlages 43 der Sperrung des Stützkörpers 37 gegen ein Verdrehen relativ zum Rohrstutzen 4, wenn der Filtereinsatz 3 auf dem Rohrstutzen 4 angeordnet ist. Die Nasen des Anschlages 43 stützen außerdem die Feder 52 ab, wenn der Filtereinsatz 3 aus dem Filter 1 entfernt ist, wie weiter oben schon beschrieben.

Die Figur 24 zeigt den Stützkörper 37 als Teil des Filters 1 nach Figur 17 bis 22 als Einzelteil in Ansicht schräg von oben. Insbesondere wird hier deutlich, dass der Stützkörper 37 die Form eines hohlzylindrischen, ringförmigen Gitters hat, welches eine Anzahl von axialen Streben 38 sowie oben unten jeweils eine ringförmige Strebe aufweist. Die obere ringförmige Strebe bildet dabei den Losdrehsicherungsring 47' mit den Nocken 48 der Losdrehsicherung 47. Der Stützkörper 37 ist bevorzugt ein Spritzgussteil aus Kunststoff.

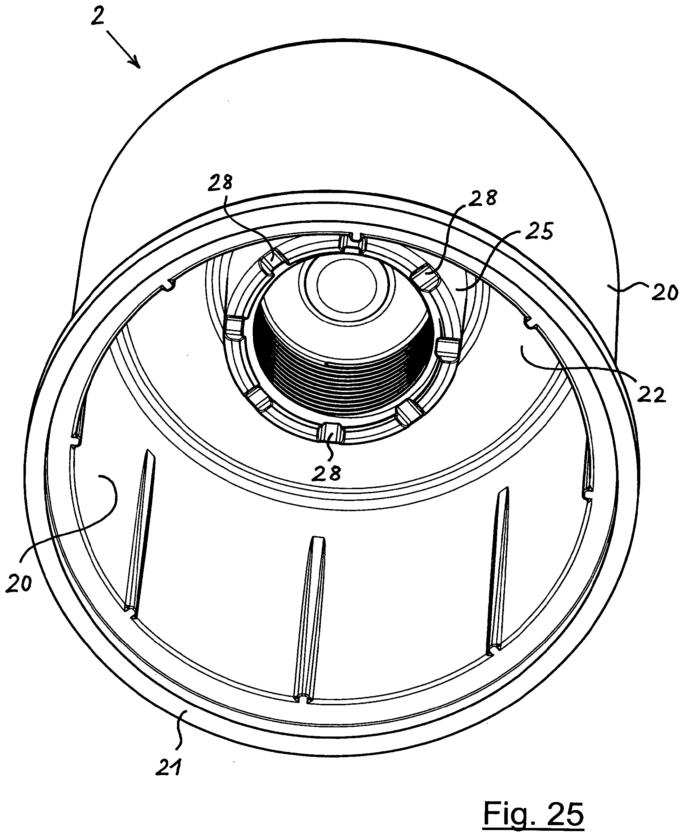

In Figur 25 ist das Filtergehäuse 2 als Teil des Filters 1 nach Figur 17 bis 22 als Einzelteil in Ansicht schräg von unten, also im Blick auf seine offene Stirnseite 21, dargestellt. Den radial äußeren Teil des Filtergehäuses 2 bildet dessen Umfangswand 20. Innen im Hintergrund liegt die geschlossene Stirnseite 22, von der der Gewindestutzen 25 in das Innere des Filtergehäuses 2 vorragt. Die dem Betrachter zugewandte freie Stirnseite des Gewindestutzens 25 ist mit den regelmäßig in Umfangsrichtung voneinander beabstandeten Eintiefungen 28 versehen.

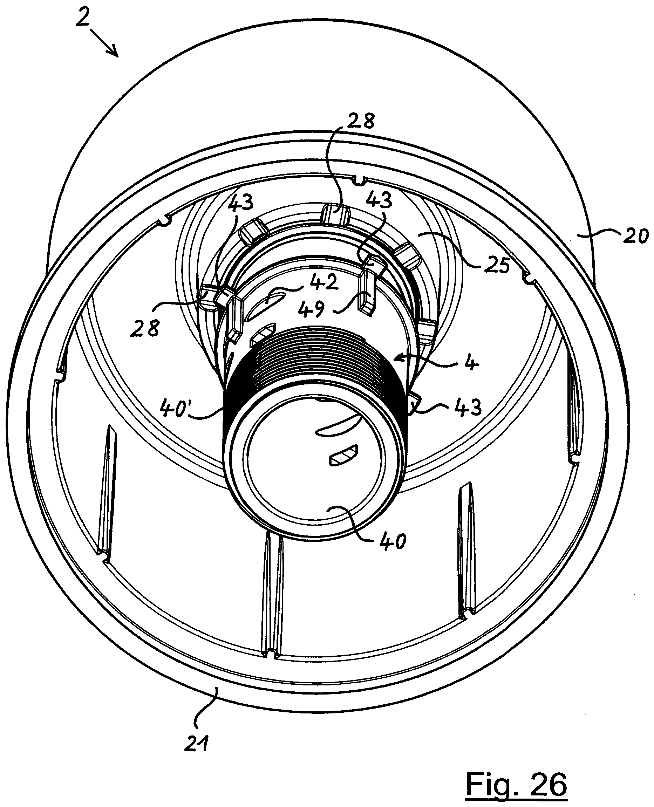

Die Figur 26 zeigt eine Baueinheit aus dem Filtergehäuse 2 nach Figur 25 und dem Rohrstutzen 4 nach Figur 23, in Ansicht schräg von unten. Um diese Baueinheit zu bilden, ist der Rohrstutzen 4 mit seinem oberen Endbereich 41 und dem dort angebrachten Außengewinde 41' in den Gewindestutzen 25 eingeschraubt. Am Rohrstutzen 4 sind die Durchbrechungen 42, die Anschläge 43 und die Längsführungen 49 sichtbar. Am dem Betrachter zugewandten äußeren Endbereich 40 des Rohrstutzens 4 ist das Schraubgewinde 40' angebracht.

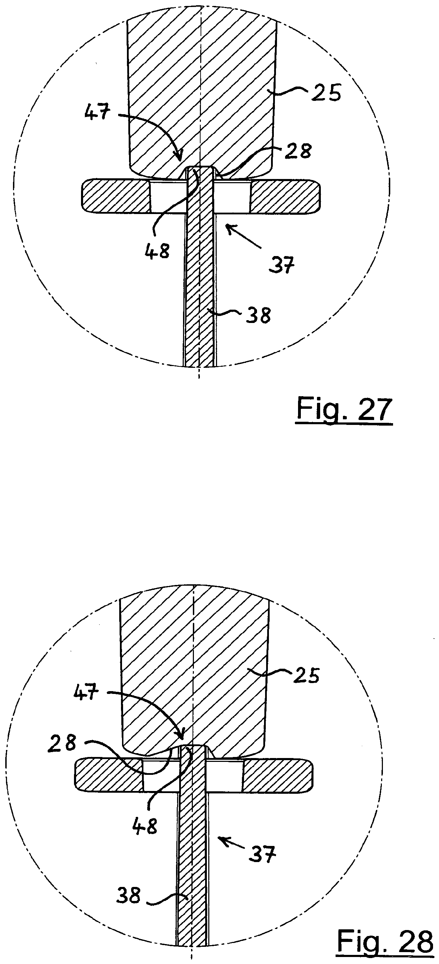

Die Figur 27 zeigt ein vergrößertes Detail aus Figur 21 mit der Losdrehsicherung 47 in einer ersten Ausführung. Oben in Figur 27 ist ein Randbereich des Gewindestutzens 25 mit einer der Eintiefungen 28 in seiner Stirnfläche sichtbar. Darunter ist ein Teil des Stützkörpers 37 mit einer seiner axialen Streben 38 und einem der Nocken 48 erkennbar. Die Eintiefung 28 und der Nocken 48 stehen hier in Eingriff miteinander, um auf diese Weise die Losdrehsicherung 47 zu bilden. Wie schon weiter oben beschrieben, wird der in Axialrichtung bewegliche Stützkörper 37 durch die hier nicht sichtbare Feder 52 mit einer in Richtung zum Gewindestutzen 25 weisenden Kraft beaufschlagt. Wie die Figur 27 veranschaulicht, besitzt die Eintiefung 28 hier in beiden Drehrichtungen, das heißt in Figur 27 nach links und nach rechts, symmetrische Schrägen mit jeweils gleicher Steigung beziehungsweise gleichem Gefälle.

Die Figur 28 zeigt das Detail aus Figur 21 mit der Losdrehsicherung 47 in einer zweiten Ausführung, für die charakteristisch ist, dass die Eintiefung 28 in der Stirnfläche des Gewindestutzens 25 in Drehrichtung, das heißt in Figur 28 nach links und rechts, zwei unterschiedliche Steigungen beziehungsweise Gefälle aufweist, also unsymmetrisch ist. Nach rechts hin ist in Figur 28 die Steigung der Eintiefung 28 stärker als nach links hin. Hierdurch werden unterschiedliche Drehwiderstände je nach Drehrichtung des Filtergehäuses 2 relativ zum Stützkörper 37 bewirkt, zweckmäßig derart, dass in Festdrehrichtung ein geringerer Widerstand und in Losdrehrichtung ein größerer Widerstand der Losdrehsicherung 47 erzeugt wird.

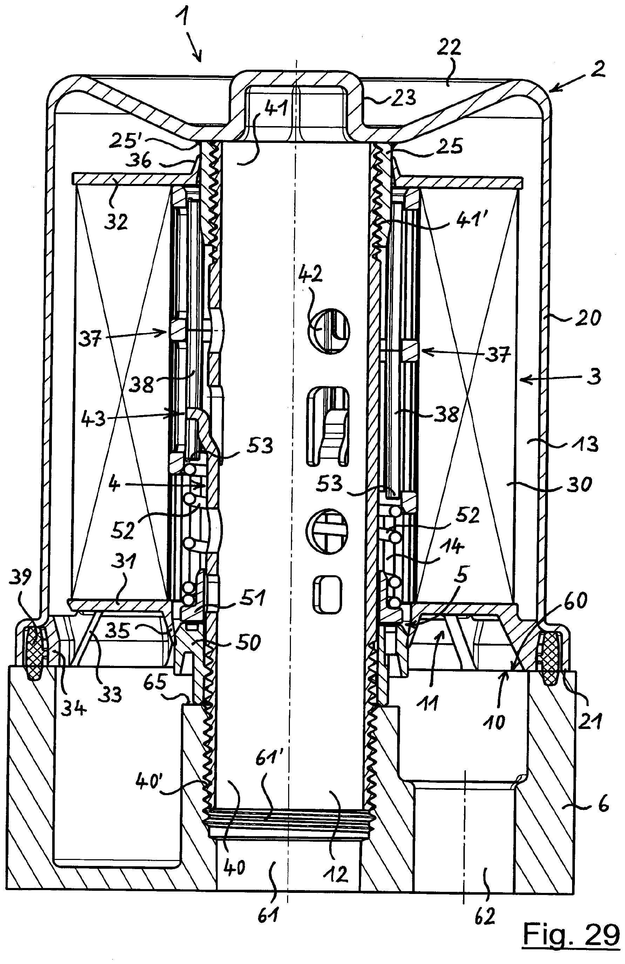

Figur 29 der Zeichnung zeigt den Filter 1 im Einbauzustand mit geschlossenem Filterumgehungsventil 5, im Längsschnitt, wobei in der linken und rechten Hälfte der Figur 29 zwei unterschiedlichen Ausführungen eines zu dem Filter 1 nach Figur 29 passenden Filtereinsatzes 3 dargestellt sind. Der Stützkörper 37 des Filtereinsatzes 3 ist hier in beiden Ausführungen als separates Einzelteil am Innenumfang des Filterstoffkörpers 30 angeordnet und stützt sich mit seinem oberen Ende gegen die Unterseite der oberen Stirnscheibe 32 ab. Das untere Ende des Stützkörpers 37 bildet, wie weiter oben schon beschrieben, die Federstütze 53 für die Feder 52 des Filterumgehungsventils 5.

Die beiden Filtereinsätze 3 in Figur 29 unterscheiden sich durch die Lage der jeweils daran ausgebildeten Federstütze 53; die Feder 52 ist in beiden Hälften der Figur die gleiche. Bei dem Filtereinsatz 3, der in der linken Hälfte der Figur 29 dargestellt ist, liegt die Federstütze 53 in einem größeren axialen Abstand zum Ventilkörper 51, während bei dem in der rechten Hälfte der Figur 29 dargestellten Filtereinsatz 3 dessen Federstütze 53 in einem geringeren Abstand zum Ventilkörper 51 angeordnet ist. Der Filtereinsatz 3 in der linken Hälfte der Figur 29 erzeugt somit also eine geringere Vorspannung der Feder 52 als der Filtereinsatz 3 in der rechten Hälfte der Figur 29. Dadurch werden auch entsprechend unterschiedliche Öffnungsdrücke des Filterumgehungsventils 5 eingestellt. Damit ist es also vorteilhaft möglich, allein durch Änderung der Lage der Federstütze 53 innerhalb des auswechselbaren Filtereinsatzes 3 den Öffnungsdruck des Filterumgehungsventils 5 auf einen gewünschten Wert festzulegen beziehungsweise bei Bedarf auch einfach zu ändern, ohne dass irgendwelche anderen Teile des Filters 1 verändert werden müssen.

Hinsichtlich der weiteren Teile in Figur 29 und deren Funktion wird auf die vorhergehende Beschreibung, insbesondere der Figuren 7 und 8, verwiesen.

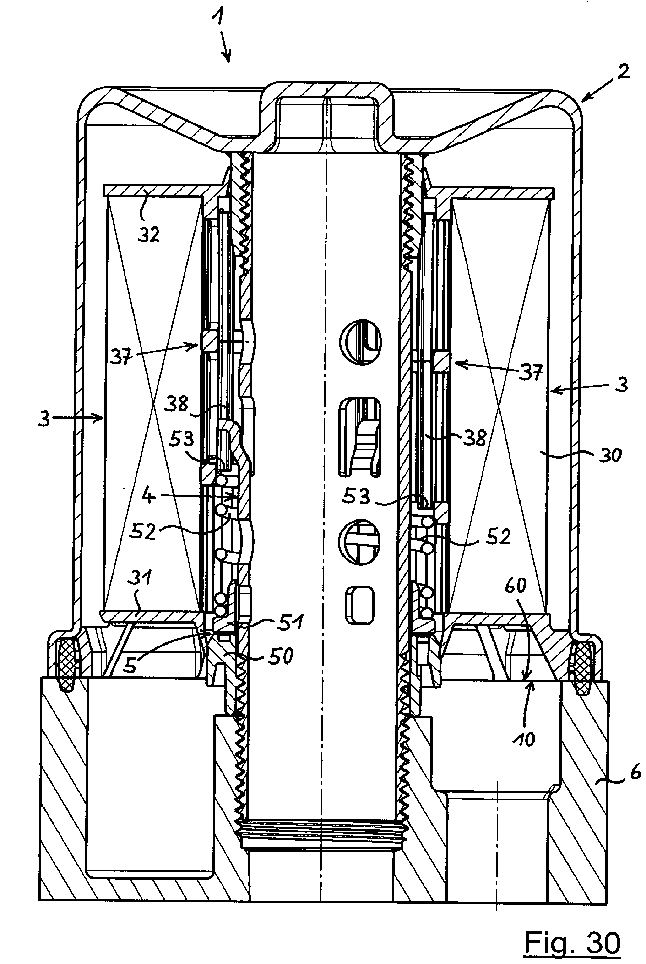

Figur 30 zeigt den Filter 1 in einer gegenüber der Figur 29 geänderten Ausführung, wieder im Einbauzustand mit geschlossenem Filterumgehungsventil 5 und mit einem in der linken und rechten Hälfte der Figur in zwei unterschiedlichen Ausführungen dargestellten zweiten Filtereinsatz 3, im Längsschnitt.

Im Unterschied zur Figur 29 ist bei dem Beispiel nach Figur 30 der Stützkörper 37 des Filtereinsatzes 3 einstückig mit der oberen Stirnscheibe 32 ausgeführt, so dass hier die obere Stirnscheibe 32 zusammen mit dem damit einstückigen Stützkörper 37 zur Einstellung der Vorspannung der Feder 52 genutzt wird. Die unterschiedliche Vorspannung der Feder 52 erfolgt auch hier durch unterschiedliche axiale Positionen der Federstütze 53 am Filtereinsatz 3, wie ein Vergleich der linken und rechten Hälfte der Figur 30 zeigt. Auch hier kann also durch einfachen Austausch des Filtereinsatzes 3 mit unterschiedlicher axialer Lage der Federstütze 53 der Öffnungsdruck des Filterumgehungsventils 5 festgelegt und bei Bedarf auf einen anderen Wert eingestellt werden, ohne dass am übrigen Filter 1 Änderungen vorgenommen werden müssen.

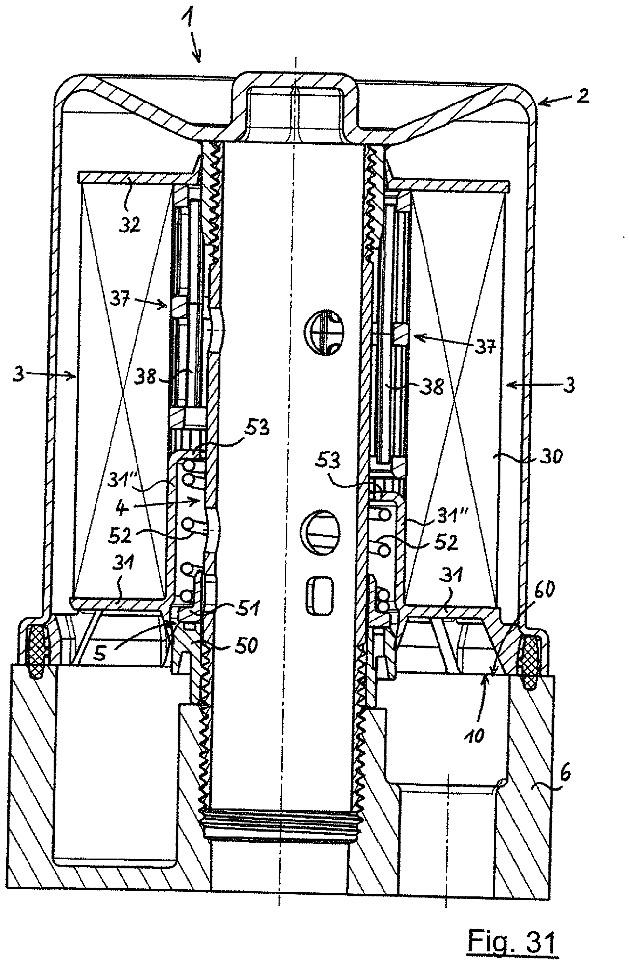

Figur 31 zeigt den Filter 1 in einer weiteren gegenüber der Figur 29 geänderten Ausführung, wieder im Einbauzustand mit geschlossenem Filterumgehungsventil 5 und mit einem in der linken und rechten Hälfte der Figur in zwei unterschiedlichen Ausführungen dargestellten dritten Filtereinsatz 3, im Längsschnitt. Wesentlich ist bei diesem Beispiel, dass jeweils der Filtereinsatz 3 mit einer Federstütze 53 ausgeführt ist, die einstückig mit der unteren Stirnscheibe 31 ausgebildet ist. Hierzu besitzt die untere Stirnscheibe 31 radial innen einen hohlzylindrischen, axial nach oben verlaufenden Fortsatz 31", der in einem radial nach innen gerichteten, die Federstütze 53 bildenden Kragen endet. Bei dem in der linken Hälfte der Figur 31 dargestellten Filtereinsatz 3 ist der axial nach oben verlaufenden Fortsatz 31" mit einer größeren Länge ausgebildet als bei dem in der rechten Hälfte der Figur 31 dargestellten Filtereinsatz 3, wodurch zwei unterschiedliche Vorspannungen der Feder 52 und damit auch zwei unterschiedliche Öffnungsdrücke des Filterumgehungsventils 5 erzeugt werden.

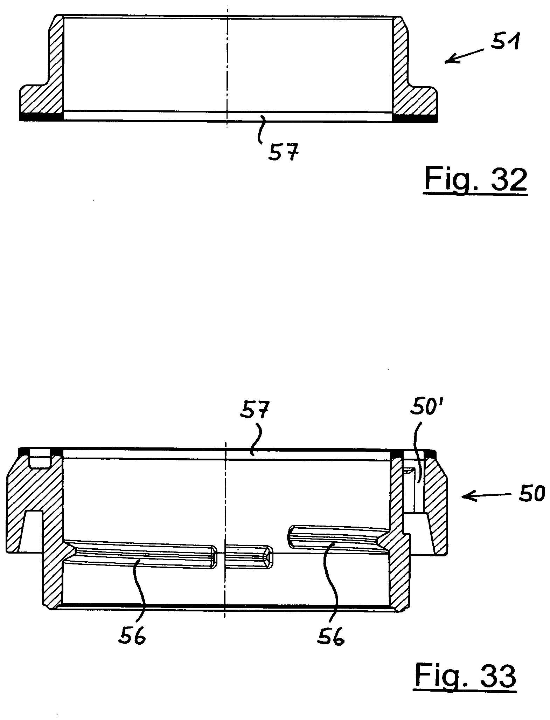

Die Figur 32 zeigt im Längsschnitt einen Ventilkörper 51 in einer gegenüber den vorstehend beschriebenen Beispielen geänderten Ausführung. Charakteristisch für diesen Ventilkörper 51 ist, dass dessen mit dem Ventilsitz 50 zusammenwirkende Stirnfläche mit einer Elastomerauflage 57 versehen ist, um die Dichtwirkung im Zusammenwirken mit dem Ventilsitz 50 zu verbessern.

Die Figur 33 zeigt einen Ventilsitz 50 in einer gegenüber den vorstehend beschriebenen Beispielen geänderten Ausführung im Längsschnitt. Charakteristisch für diese Ausführung des Ventilsitzes 50 ist, dass dessen mit dem Ventilkörper 51 zusammenwirkende Stirnseite mit einer Elastomerauflage 57 versehen ist, was ebenfalls dazu dient, die Dichtwirkung im Zusammenwirken mit dem Ventilkörper 51 zu verbessern.

Im rechten Teil der Figur 33 ist außerdem eine der Durchlassöffnungen 50' sichtbar, durch welche bei geöffnetem Filterumgehungsventil 5 die Flüssigkeitsströmung verläuft. Am Innenumfang des ringförmigen Ventilsitzes 50 ist schließlich das dort angeordnete, einen Gewindegang umfassende Innengewinde 56 sichtbar, mit dem der Ventilsitz 50 auf das Gewinde 40' am äußeren Endbereich 40 des zentralen Rohrstutzens 4 aufschraubbar ist.

Innerhalb eines Filters 1 können sowohl der Ventilsitz 50 als auch der Ventilkörper 51 mit der Elastomerauflage 57 versehen sein; alternativ kann es auch genügen, nur den Ventilsitz 50 oder nur den Ventilkörper 51 mit der Elastomerauflage 57 auszustatten.

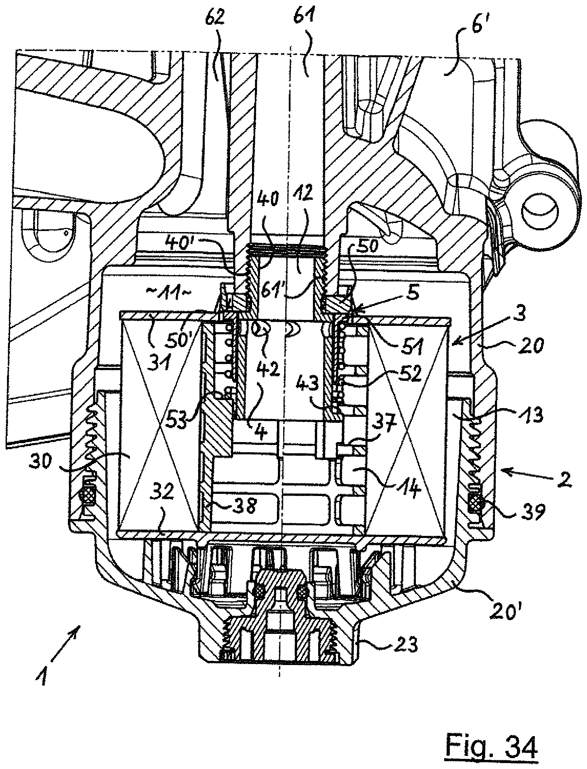

Bei den zuvor beschriebenen Ausführungsbeispielen des Filters 1 ist dieser ein Anschraubwechselfilter mit auswechselbarem Filtereinsatz 3, der anstelle einer nur insgesamt austauschbaren Anschraubwechselfilterpatrone an dem Anschlussflansch 60 der zugehörigen Vorrichtung 6, wie Brennkraftmaschine, anbringbar ist. Die Figur 34 zeigt im Unterschied dazu einen Filter 1 in einem abgewinkelten Längsschnitt, der einen eigenen Sockel 6' aufweist, mit dem er mit einer zugehörigen Vorrichtung 6, wie Brennkraftmaschine, oder mit einem einen Teil der Vorrichtung bildenden Funktionsmodul verbindbar ist. Außerdem handelt es sich bei dem Filter 1 nach Figur 34 um einen sogenannten hängenden Filter 1, bei dem ein einen lösbaren Teil des Filtergehäuses 2 bildender Schraubdeckel 20' nach unten hin abschraubbar und demontierbar ist. Dementsprechend wird hier der Filtereinsatz 3 auch von unten her eingebaut und nach unten hin entnommen.

Der nicht lösbare Teil des Filtergehäuses 2 ist hier mit dem Sockel 6' einstückig ausgeführt und beispielsweise ein Druckgussteil aus Leichtmetall, wie Aluminium. Der Schraubdeckel 20' kann ebenfalls ein Druckgussteil aus Leichtmetall oder alternativ auch ein Spritzgussteil aus Kunststoff sein. Mittels eines Dichtrings 39 ist der Schraubdeckel 20' in seinem eingeschraubten Zustand gegen das übrige Filtergehäuse 2 flüssigkeitsdicht abgedichtet. An seiner hier nach unten weisenden Außenseite besitzt der Schraubdeckel 20' einen Werkzeugansatz 23, beispielsweise einen Sechskant. Innerhalb des Werkzeugansatzes 23 ist hier ein übliches und an sich bekanntes Schraubventil als Entleerungsventil angeordnet, um vor einem Öffnen des Filtergehäuses 2 das Innere des Filters 1 sauber von Flüssigkeit entleeren zu können.

Im Inneren des Filtergehäuses 2 ist auch hier ein Filtereinsatz 3 angeordnet, der aus einem hohlzylindrischen Filterstoffkörper 30 besteht, welcher an seinen beiden Stirnseiten von Stirnscheiben 31 und 32 dicht eingefasst ist. Im Inneren des Filterstoffkörpers 30 ist auch hier ein gitterförmiger, in seiner Grundform hohlzylindrischer Stützkörper 37 angeordnet. Wie an sich bekannt, ist hier der Filtereinsatz 3 mittels an seiner unteren Stirnscheibe 31 angeordneter Rastarme mit dem Schraubdeckel 20' lösbar verrastet.

Weiterhin ist im Inneren des Filtergehäuses 2 ein zentraler Rohrstutzen 4 angeordnet, der in seinem oberen Endbereich 40 außen ein Schraubgewinde 40' aufweist, mit dem er in ein Gegengewinde 61' im Sockel 6' eingeschraubt ist. Mit seiner in Figur 34 oberen, eine zentrale Durchbrechung aufweisenden Stirnscheibe 32 ist der Filtereinsatz 3 von unten her auf den zentralen Rohrstutzen 4 aufgesteckt.

Auf dem Außenumfang des Rohrstutzens 4 ist in Höhe der oberen Stirnscheibe 32 ein Filterumgehungsventil 5 angeordnet. Hierzu ist unmittelbar oberhalb der oberen Stirnscheibe 32 ein ringförmiger Ventilsitz 50 in Axialrichtung unverschieblich auf dem Außenumfang des Rohrstutzens 4 angebracht, hier angeschraubt. Durch den Ventilsitz 50 verlaufen Durchlassöffnungen 50' in dessen Axialrichtung.

Unmittelbar unterhalb des Ventilsitzes 50 ist auf dem Außenumfang des Rohrstutzens 4 ein Ventilkörper 51 in Axialrichtung verschieblich geführt. Im Längsschnitt gesehen hat der Ventilkörper 51 die Form eines auf dem Kopf stehenden L, wobei ein längerer L-Schenkel die Führung auf dem Rohrstutzen 4 bildet und ein kürzerer L-Schenkel radial nach außen vorsteht. Eine obere Stirnseite des kürzeren L-Schenkels wirkt mit einer unteren Stirnseite des Ventilsitzes 50 zusammen; eine untere Stirnseite des kürzeren L-Schenkels bildet eine Anlagefläche für eine Feder 52, die den Ventilkörper 51 in Schließrichtung mit einer Vorbelastungskraft beaufschlagt. Das von dem Ventilkörper 51 abgewandte, untere Ende der Feder 52 ist hier an einer links in Figur 34 sichtbaren, geschnittenen Federstütze 53 abgestützt, die ein integraler und einstückiger Teil des Stützkörpers 37 innerhalb des Filtereinsatzes 3 ist.

Es ist ersichtlich, dass auch bei dieser Ausführung des Filters 1 die Vorspannung der Feder 52 und damit der Öffnungsdruck des Filterumgehungsventils 5 durch die axiale Lage der Federstütze 53 am Filtereinsatz 3 bestimmt und festgelegt beziehungsweise bei Bedarf geändert werden kann.

Im Betrieb des Filters 1 gemäß Figur 34 strömt eine zu reinigende Flüssigkeit, wie Schmieröl einer Brennkraftmaschine, durch einen Rohflüssigkeitskanal 62 im Sockel 6'zum Einlass 11 des Filters 1 und auf dessen Rohseite 13. Mittels Durchströmung des Filterstoffkörpers 30 des Filtereinsatzes 3 gelangt die Flüssigkeit unter Zurücklassung von Schmutzpartikeln auf die Reinseite 14 des Filters 1 und durch den Stützkörper 37 hindurch in den zentralen Rohrstutzen 4 und durch diesen zum Auslass 12, der seinerseits in einen Reinflüssigkeitskanal 61 im Sockel 6' übergeht.

Solange eine Druckdifferenz zwischen Rohseite 13 und Reinseite 14 unterhalb eines vorgebbaren Grenzwertes bleibt, bleibt das Filterumgehungsventil 5 geschlossen. Überschreitet die Druckdifferenz den vorgebbaren Grenzwert, öffnet die Kraft der durch die Durchlassöffnungen 50' auf den Ventilkörper 51 wirkenden Flüssigkeit das Filterumgehungsventil 5 und es wird ein Strömungsweg von der Rohseite 13 durch die Durchlassöffnungen 50' und die Durchbrechungen 42 im Rohrstutzen 4 unmittelbar zur Reinseite 14 unter Umgehung des Filterstoffkörpers 30 freigegeben.

Dabei wird der Ventilkörper 51 gegen die Kraft der Feder 52 auf dem Außenumfang des zentralen Rohrstutzens 4 in dessen Axialrichtung verschoben. Zwecks einer guten, verkantungsfreien Führung des Ventilkörpers 51 auf dem zentralen Rohrstutzen 4 sollte zweckmäßig die axiale Länge des Ventilkörpers 51 mindestens so groß wie dessen Innendurchmesser sein.

Zur Wartung des Filters 1 gemäß Figur 34 wird dieser zunächst durch Öffnen des Entleerungsventils von Flüssigkeit entleert. Anschließend wird der Schraubdeckel 20' abgeschraubt, womit gleichzeitig der damit verrastete Filtereinsatz 3 aus dem Filtergehäuse 2 heraus nach unten bewegt und vom zentralen Rohrstutzen 4 abgezogen wird. Dadurch wird auch die Federstütze 53 als Teil des Filtereinsatzes 3 von dem nach unten weisenden Ende der Feder 52 entfernt. Damit die Feder 52 nicht aus dem Filtergehäuse 2 herausfällt und verloren geht, sind an dem inneren, hier nach unten weisenden Ende des Rohrstutzens 4 über dessen Umfang verteilt mehrere radial nach außen vorstehende Nasen als Anschlag 43 angeformt, an die sich die Feder 52 anlegt, wenn der Filtereinsatz 3 ausgebaut wird. Somit sind die Feder 52 und der Ventilkörper 51 unverlierbar auf dem zentralen Rohrstutzen 4 gesichert.

Bei der Herstellung und Erstmontage des Filters 1 nach Figur 34 wird der zentrale Rohrstutzen 4 mit dem darauf angeordneten Ventilsitz 50 und Ventilkörper 51 sowie der Feder 52 in das Gewinde 61' des Reinflüssigkeitskanals 61 mittels des Gewindes 40' am oberen Endbereich 40 eingeschraubt und verbleibt dann dort. Bei der Filterwartung wird dann nur noch der Schraubdeckel 20' abtgeschraubt und der Filtereinsatz 3 einschließlich der darin integriert ausgebildeten Federstütze 53 ausgetauscht.

Wie weiter oben schon erwähnt, ist der Filter 1 in jeder beliebigen räumlichen Lage betriebsfähig; so kann der Filter 1 statt als hängender Filter, wie in Figur 34, auch als liegender oder stehender Filter oder in einer beliebigen Zwischen- oder Schräglage eingesetzt werden. Dabei ist das Filterumgehungsventil 5 zweckmäßig in einer im Betrieb möglichst hoch liegenden Position angeordnet, um eine Verschmutzung von Ventilsitz 50 und Ventilkörper 51 durch sich absetzende Schmutzpartikel aus der Flüssigkeit möglichst gering zu halten.

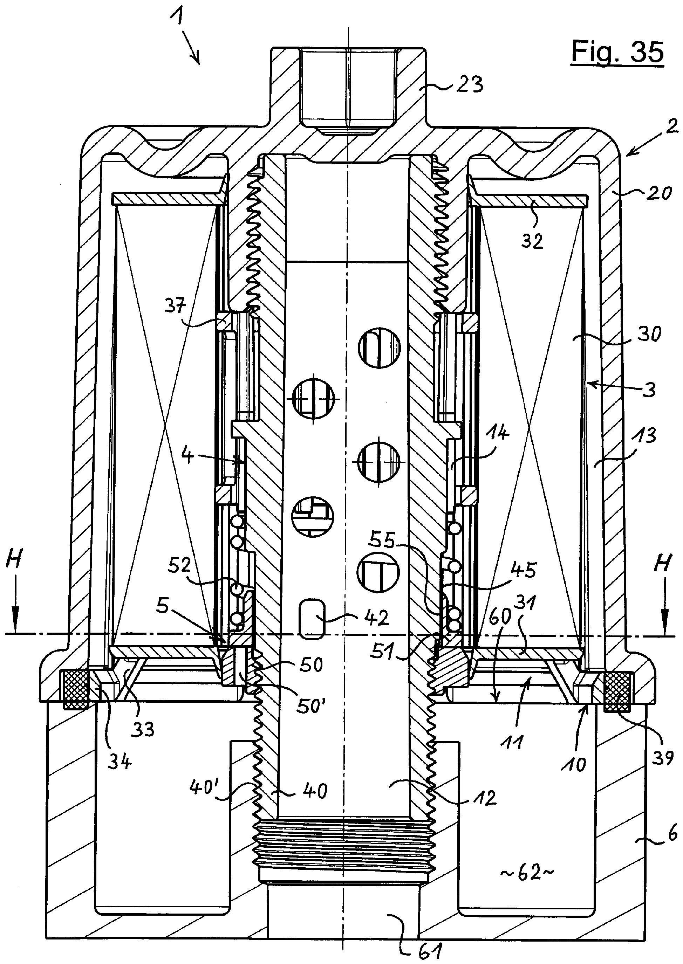

Die Figur 35 der Zeichnung zeigt den Filter 1 aus Figur 17 in einer geänderten Ausführung, nämlich mit einer Verdrehsicherung für den Ventilkörper 51 des Filterumgehungsventils 5, im Längsschnitt. Wie schon die zuvor beschriebenen Ausführungsbeispiele ist auch dieses Ausführungsbeispiel des Filters 1 nach Figur 35 mit einem Filterumgehungsventil 5 ausgestattet. Dazu ist der Ventilsitz 50 mit seinen Durchlassöffnungen 50' auch hier auf das äußere Schraubgewinde 40' des unteren Endbereichs 40 des Rohrstutzens 4 aufgeschraubt. Der Ventilkörper 51 befindet sich oberhalb des Ventilsitzes 50 und ist auch hier in Axialrichtung auf dem Außenumfang des Rohrstutzens 4 verschiebbar. Die Feder 52 beaufschlagt den Ventilkörper 51 mit einer in Schließrichtung wirkenden Kraft.

Im Unterschied zu dem Ausführungsbeispiel nach Figur 17 ist bei dem Ausführungsbeispiel nach Figur 35 der Ventilkörper 51 gegen ein Verdrehen relativ zum Rohrstutzen 4 und relativ zum Ventilsitz 50 gesichert. Zu diesem Zweck ist auf dem Außenumfang des Rohrstutzens 4 auf dessen in Figur 35 nach rechts weisender Seite eine in Längsrichtung des Rohrstutzens 4 verlaufende, vorragende Längsrippe 45 angeordnet, beispielsweise einstückig angeformt. Passend dazu ist am Innenumfang des Ventilkörpers 50 eine in dessen Axialrichtung verlaufende Längsnut 55 eingeformt, welche die Längsrippe 45 mit einem nötigen Bewegungsspiel aufnimmt. Zusammen bilden die Längsrippe 45 und die Längsnut 55 eine Ventilkörperführung, die ein axiales Verschieben des Ventilkörpers 51 auf dem Rohrstutzen 4 erlaubt und zugleich eine Sperre gegen ein Verdrehen des Ventilkörpers 51 in Umfangsrichtung relativ zum Rohrstutzen 4 und relativ zum Ventilsitz 50 bildet. Hiermit werden im Laufe der Einsatzzeit des Filters 1 möglicherweise durch eine relative Rotation von Ventilkörper 51 und Ventilsitz 50 entstehende Undichtigkeiten des Filterumgehungsventils 5 in seiner Schließstellung sicher vermieden.

Hinsichtlich der weiteren Teile in Figur 35 und deren Funktion wird auf die vorhergehende Beschreibung, insbesondere der Figuren 8 und 17, verwiesen.

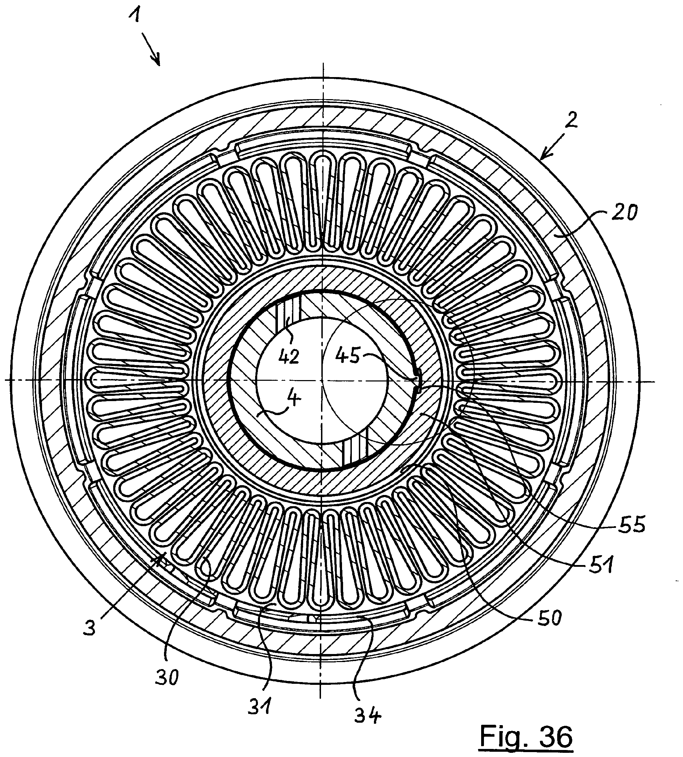

Figur 36 zeigt den Filter 1 aus Figur 35 im Querschnitt gemäß der Schnittlinie H-H in Figur 35. Radial außen ist das Filtergehäuse 2 mit seiner Umfangswand 20 sichtbar. Radial innen davon liegt im Hintergrund die untere Stirnscheibe 31 mit dem Dichtringträger 34. Auf der unteren Stirnscheibe 31 ist der Filterstoffkörper 30 in Form der gefalteten Filterstoffbahn angeordnet. Radial innen vom Filterstoffkörper 30 liegt hier der ringförmige Ventilkörper 51. Zwischen dem Innenumfang der unteren Stirnscheibe 31 und dem Außenumfang des Ventilkörpers 51 ist noch ein kleiner, radial äußerer Teil des im Übrigen vom Ventilkörper 51 verdeckten Ventilsitzes 50 erkennbar.

Den radial innersten Teil des Filters 1 bildet auch hier wieder der zentrale Rohrstutzen 4 mit den Durchbrechungen 42, von denen hier zwei im Schnitt sichtbar sind. Auf dem Außenumfang des Rohrstutzens 4 ist an dessen hier nach rechts weisender Seite die in Axialrichtung des Rohrstutzens 4 verlaufende, in Radialrichtung vorstehende Längsrippe 45 erkennbar. Passend zur Längsrippe 45 ist am Innenumfang des ringförmigen Ventilkörpers 51 die Längsnut 55 eingeformt, welche die Längsrippe 45 aufnimmt. Die Figur 36 verdeutlicht, dass ein Verdrehen des Ventilkörpers 51 relativ zum zentralen Rohrstutzen 4 und relativ zu dem unverdrehbar am Rohrstutzen 4 angebrachten Ventilsitz 50 nicht möglich ist.

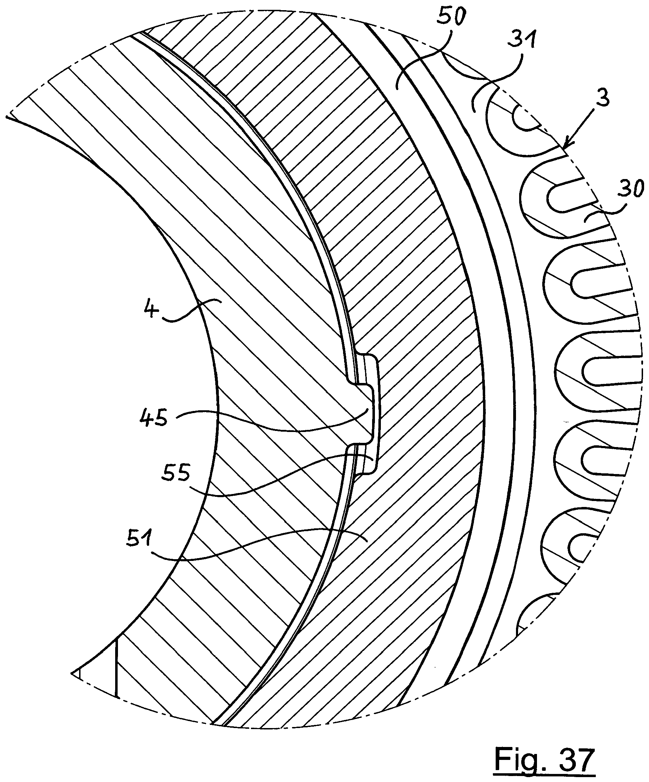

Die Figur 37 zeigt das in Figur 36 eingekreiste Detail in vergrößerter Darstellung. Links in Figur 37 ist ein Teil des zentralen Rohrstutzens 4 mit seiner auf dem Außenumfang liegenden Längsrippe 45 sichtbar. Radial nach außen, das heißt hier nach rechts hin, folgt der Ventilkörper 51 mit der die Längsrippe 45 aufnehmenden Längsnut 55 in seinem Innenumfang. Um die für die Ventilfunktion nötige axiale Bewegbarkeit des Ventilkörpers 51 nicht zu behindern, weisen die Längsrippe 45 und die Längsnut 55 relativ zueinander ein ausreichendes Bewegungsspiel auf.

Radial außen vom Ventilkörper 51 ist noch ein kleiner Teil der unteren Stirnscheibe 31 mit dem Filterstoffkörper 30 erkennbar.

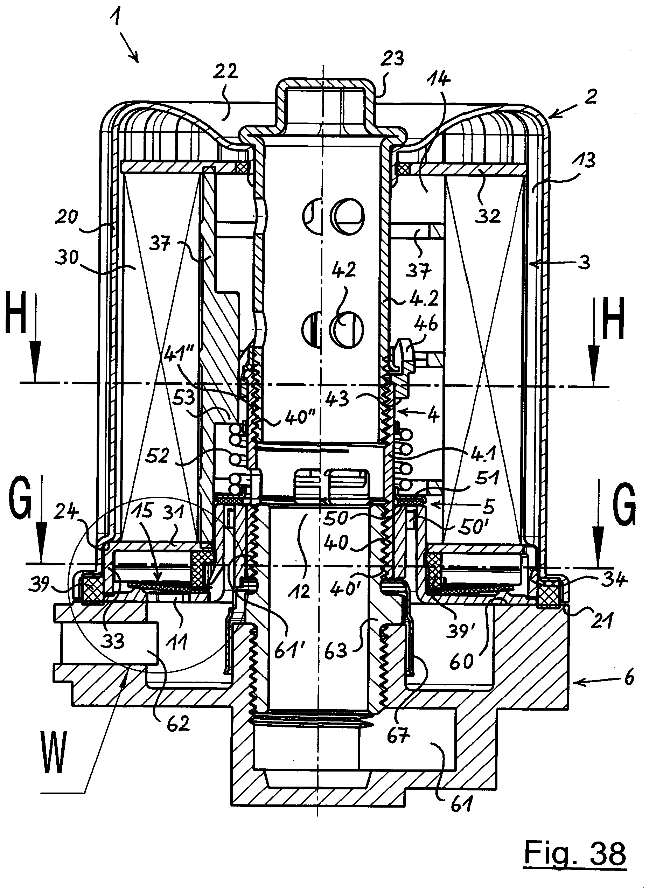

Figur 38 zeigt den Filter 1 in einer weiteren Ausführung, im Längsschnitt, in einem an einen Anschlussflansch 60 einer Vorrichtung 6 angebauten Zustand. Der Filter 1 besitzt wieder ein becherförmiges Filtergehäuse 2, welches an seiner flanschseitigen Stirnseite 21 offen ist. In Inneren des Filtergehäuses 2 ist ein zentraler Rohrstutzen 4 angeordnet, der aus einem ersten, flanschseitigen Rohrstutzenabschnitt 4.1 und einem mit der flanschfernen Stirnseite 22 des Filtergehäuses 2 dicht verbundenen zweiten, flanschfernen Rohrstutzenabschnitt 4.2 besteht, wobei die beiden Rohrstutzenabschnitte 4.1 und 4.2 miteinander verschraubt sind.

Auf dem flanschseitigen Rohrstutzenabschnitt 4.1 sind die Teile des Filterumgehungsventils 5 angeordnet, nämlich unten zunächst der Ventilsitz 50, darüber der axial verschiebliche Ventilkörper 51 und darüber die Feder 52, die den Ventilkörper 51 in Schließrichtung des Filterumgehungsventils 5 vorbelastet. An ihrem vom Ventilkörper 51 abgewandten Ende wird die Feder 52 im in Figur 38 gezeigten betriebsbereiten Zustand von der Federstütze 53 abgestützt und vorgespannt. Die Federstütze 53 ist auch hier Teil des Filtereinsatzes 3, genauer von dessen zentralem Stützkörper 37.

Am oberen Ende des flanschseitigen Rohrstutzenabschnitts 4.1 ist ein Anschlag 43 angeordnet, an den sich das obere Ende der Feder 52 anlegt, wenn das Filtergehäuse 2 und mit diesem zusammen der Filtereinsatz 3 vom übrigen Filter 1 getrennt werden. Die Feder 52 und der Ventilkörper 51 sind somit gegen ein Verlieren gesichert. Oberseitig ist der Anschlag 43 mit dachförmig verlaufenden Einführschrägen 46 ausgeführt, über welche die Stützarme 53' beim Zusammenbauen des Filters 1 geführt werden.

Neben dem Filterumgehungsventil 5 besitzt der Filter 1 nach Figur 38 auch ein Rücklaufsperrventil 15, welches den Einlass 11 überdeckt und ein Leerlaufen des Filters 1 bei Stillstand des Flüssigkeitskreislaufs unterbindet.

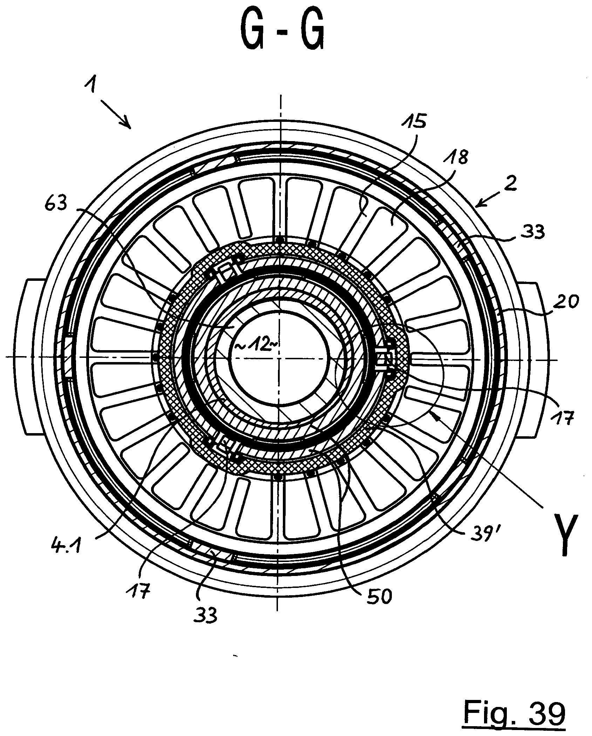

Figur 39 zeigt den Filter 1 aus Figur 38 im Querschnitt gemäß der Schnittlinie G - G in Figur 38. Radial außen verläuft die Umfangswand 20 des Filtergehäuses 2. Radial innen davon ist das Rücklaufsperrventil 15 mit der Federzungenscheibe 18 sichtbar. Als nächstes folgt weiter radial nach innen der Dichtring 39', auf welchen dann der Ventilsitz 50 folgt. Noch weiter radial innen ist der flanschseitige Rohrstutzenabschnitt 4.1 geschnitten, auf den noch weiter radial innen der Gewindenippel 63 des zugehörigen Anschlussflansches 60 folgt. Im Zentrum der Figur 39 liegt der Auslass 12 des Filters 1.

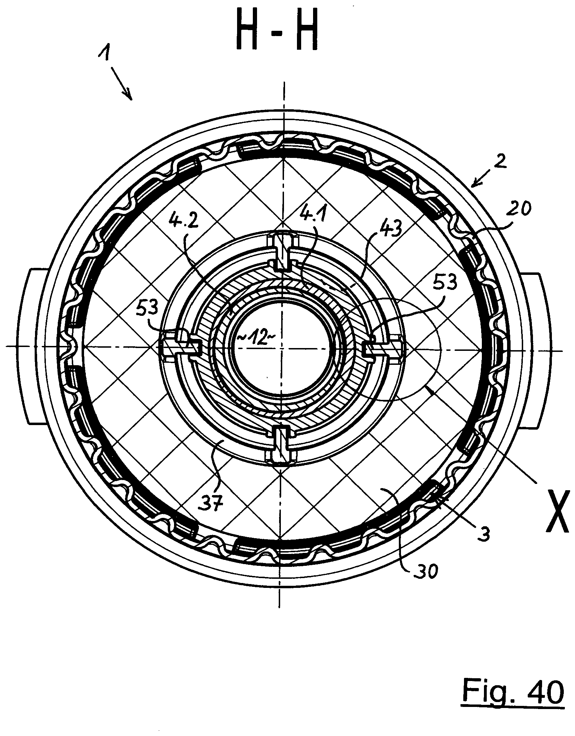

Figur 40 zeigt den Filter 1 aus Figur 38 im Querschnitt gemäß der Schnittlinie H - H in Figur 38. Auch hier ist radial außen zunächst die Umfangswand 20 des Filtergehäuses 2 geschnitten. Radial innen davon liegt der Filterstoffkörper 30 des Filtereinsatzes 3 mit dem zentralen Stützkörper 37. An vier in Umfangsrichtung gleichmäßig beabstandeten Stellen des Stützkörpers 37 sind die Federstützen 53 an den Stützkörper 37 angeformt und ragen radial nach innen vor. Radial innen vom Stützkörper 37 folgen dann der Anschlag 43 und die Rohrstutzenabschnitte 4.1 und 4.2.

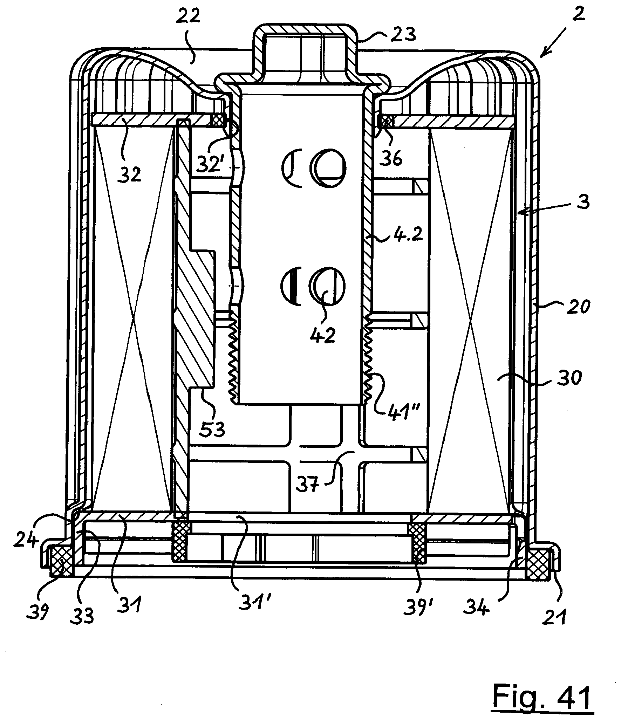

Figur 41 zeigt das Filtergehäuse 2 und den darin angeordneten Filtereinsatz 3 des Filters 1 aus Figur 38 im Längsschnitt, die zusammen die Baueinheit bilden, die bei einer Wartung des Filters 1 abgebaut wird. Hierzu ist durch Verdrehen des Filtergehäuses 2 der flanschferne Rohrstutzenabschnitt 4.2 mit seinem unteren Außengewinde 41" aus dem flanschseitigen Rohrstutzenabschnitt 4.1 herausgeschraubt, wobei der Filtereinsatz 3 aufgrund seiner Reibung zum Filtergehäuse 2 mitgenommen wird. Wenn das Filtergehäuse 2 vollständig abgeschraubt ist, kann der Filtereinsatz 3 durch die offene Unterseite des Filtergehäuses 2 aus diesem herausgezogen und durch einen frischen Filtereinsatz 3 einschließlich des Stützkörpers 37 mit der Federstütze 53 ersetzt werden.

Die Dichtung 39 ist hier ebenfalls Teil des Filtereinsatzes 3 und wird von einem Dichtringträger 34 getragen, der über Verbindungsstege 33 mit der unteren, flanschseitigen Stirnscheibe 31 des Filtereinsatzes 3 verbunden oder einstückig ausgeführt ist.

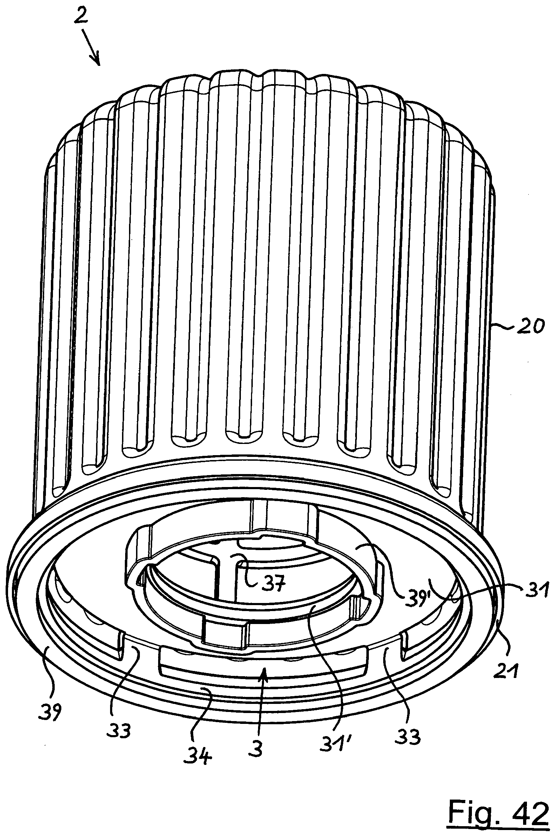

Figur 42 zeigt das Filtergehäuse 2 mit dem Filtereinsatz 3 aus Figur 41 in Ansicht schräg von unten. Von dem Filtereinsatz 3 sind hier dessen untere, flanschseitige Stirnscheibe 31, die Verbindungsstege 33, der Dichtringträger 34 und der radial äußere Dichtring 39 sichtbar. Um die zentrale Durchbrechung 31' der Stirnscheibe 31 herum verläuft der radial innere Dichtring 39'. Durch die Durchbrechung 31' hindurch ist ein Teil des inneren Stützkörpers 37 des Filtereinsatzes 3 sichtbar.

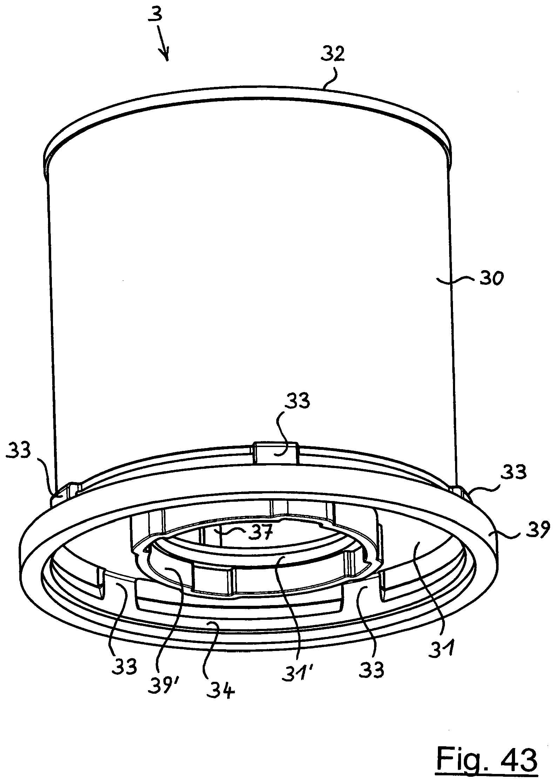

Figur 43 zeigt den Filtereinsatz 3 des Filters1 aus Figur 38 in Ansicht schräg von unten. Den wesentlichen Teil des Filtereinsatzes 3 bildet dessen hohlzylindrischer Filterstoffkörper 30, der unterseitig von der Stirnscheibe 31 und oberseitig von der Stirnscheibe 32 abgedeckt ist. Vom radial äußeren Rand der unteren Stirnscheibe 31 gehen mehrere, hier fünf, gleichmäßig über den Umfang verteilte Verbindungsstege 33 in Axialrichtung nach unten hin aus, die den Dichtringträger 34 tragen, auf dem außen der äußere Dichtring 39 angeordnet ist. Um die zentrale Durchbrechung 31' der unteren Stirnscheibe 31 herum ist wieder die radial innere Dichtung 39' sichtbar. Durch die Durchbrechung 31' hindurch ist ein kleiner Teil des gitterförmigen inneren Stützkörpers 37 sichtbar. Hier wird besonders deutlich, dass beide Dichtringe 39 und 39' Teile des Filtereinsatzes 3 sind, die bei jeder Filterwartung ohne besondere Maßnahmen jeweils mit dem Filtereinsatz 3 erneuert werden.

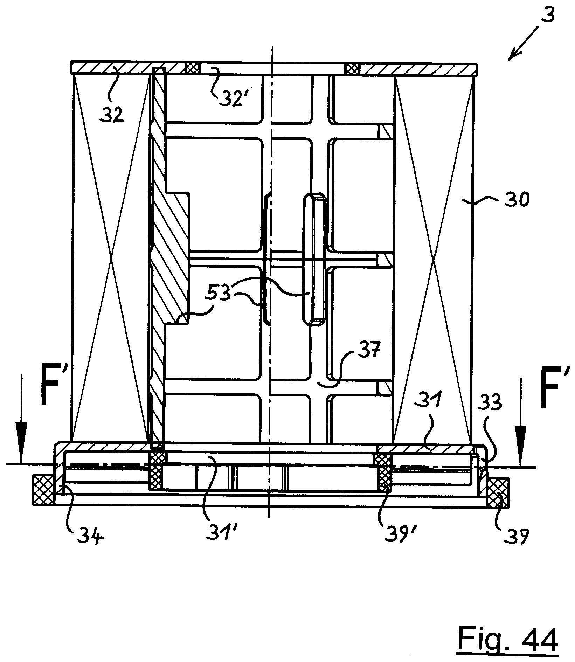

Figur 44 zeigt den Filtereinsatz 3 aus Figur 43 in einem abgewinkelten Längsschnitt. Im Inneren des Filterstoffkörpers 30 liegt der Stützkörper 37 mit den Federstützen 53, die über den Innenumfang des Stützkörpers 37 verteilt angeordnet sind. Um die Durchbrechung 31' der unteren Stirnscheibe 31 herum verläuft an der Unterseite des Filtereinsatzes 3 der radial innere Dichtring 39'. Auf dem Außenumfang des Dichtringträgers 34 ist der radial äußere Dichtring 39 angeordnet.

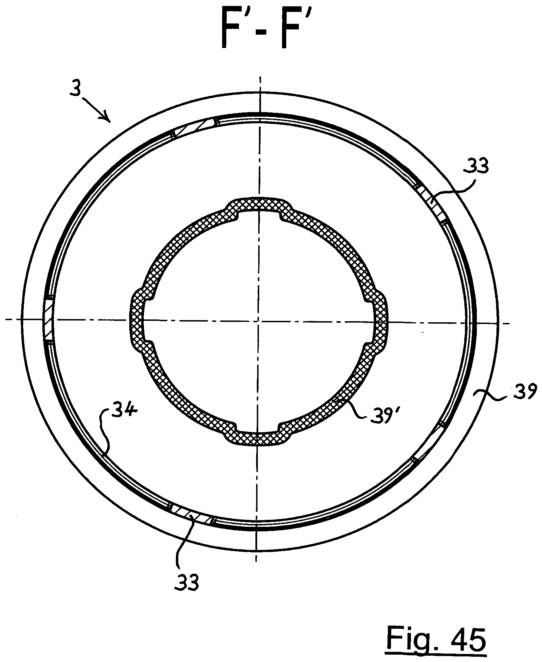

Figur 45 zeigt den Filtereinsatz 3 aus Figur 44 im Querschnitt nach der Schnittlinie F' - F' in Figur 44. Radial außen ist der Dichtring 39 sichtbar, der von dem radial innen davon verlaufenden Dichtringträger 34 getragen wird. Von dem Dichtringträger 34 gehen die Verbindungsstege 33 nach oben hin ab. Weiter radial innen ist der zweite Dichtring 39' geschnitten.

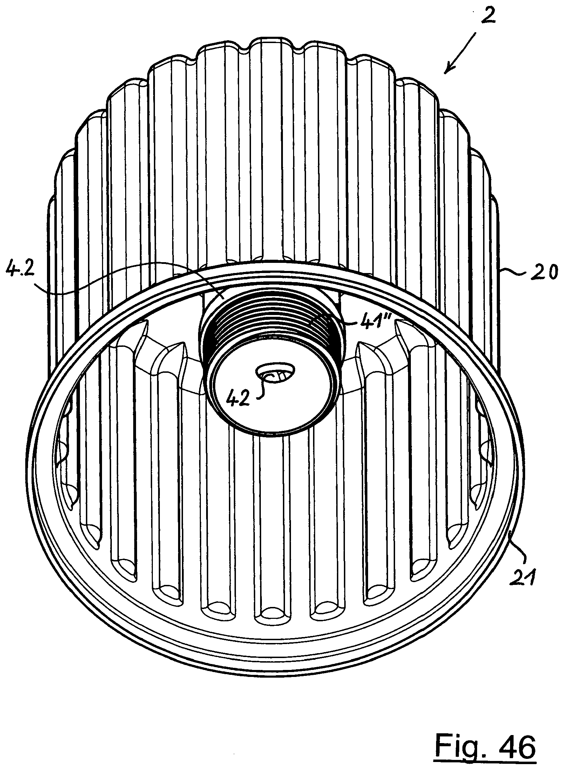

Figur 46 zeigt das Filtergehäuse 2 des Filters 1 aus Figur 38 in Ansicht schräg von unten. In Inneren des Filtergehäuses 2 verläuft konzentrisch zur Umfangswand 20 der flanschferne Rohrstutzenabschnitt 4.2 mit seinen Gewinde 41" zur Verbindung mit dem zweiten, flanschseitigen Rohrstutzenabschnitt 4.1, der nach einer Erstmontage des Filters 1 am Anschlussflansch 60 verbleibt, wenn das Filtergehäuse 2 abgeschraubt wird, wie weiter oben schon beschrieben. Im Rohrstutzenabschnitt 4.2 ist eine der darin vorgesehenen Durchbrechungen 42 sichtbar, durch welche im Betrieb des Filters 1 gefilterte Flüssigkeit in das Innere des zentralen Rohrstutzens 4 gelangt.

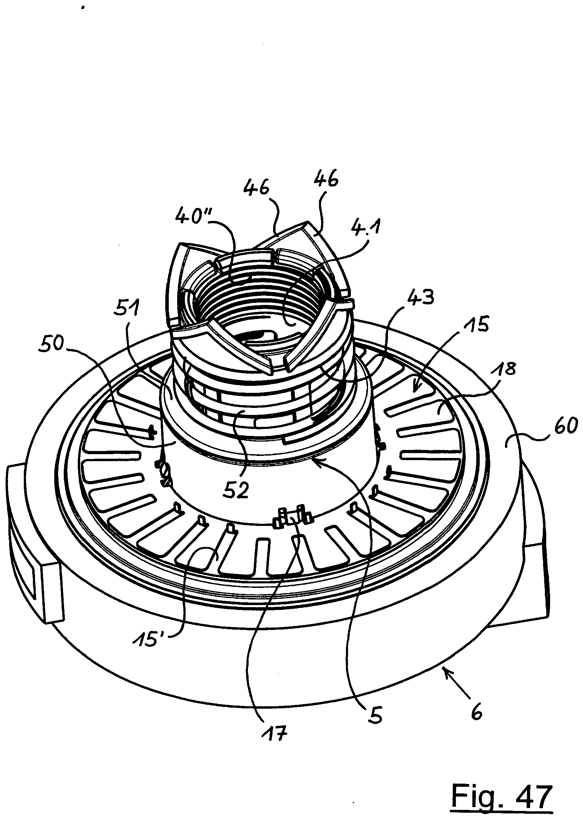

Figur 47 zeigt einen Anschlussflansch 60 des Filters 1 mit den daran nach Entfernen von Filtergehäuse 2 und Filtereinsatz 3 verbleibenden Filterteilen. Bei den am Anschlussflansch 60 verbleibenden Filterteilen handelt es sich um den flanschseitigen Rohrstutzenabschnitt 4.1 mit dem daran angeordneten Filterumgehungsventil 5 und dem ebenfalls daran angeordneten Rücklaufsperrventil 15.

Ganz oben in Figur 47 ist der am oberen Ende des Rohrstutzenabschnitts 4.1 angeordnete Anschlag 43 mit den oberseitigen Einführschrägen 46 sichtbar und im Inneren des oberen Endes des Rohrstutzenabschnitts 4.1 ist dessen Innengewinde 40" sichtbar, mit welchem das Gewinde 41" des hier nicht vorhandenen flanschfernen Rohrstutzenabschnitts 4.2 verschraubbar ist. Unter dem Anschlag 43 ist die Feder 52 des Filterumgehungsventils 5 sichtbar, die den Ventilkörper 51 in Schließrichtung vorbelastet und gegen den Ventilsitz 50 drückt.

Das Rücklaufsperrventil 15 umfasst eine kreisringförmige flexible Ventilmembran 15' und eine darüber angeordnete Federzungenscheibe 18, die über mehrere in Umfangsrichtung verteilt angeordnete Rastverbindungen 17 mit dem Außenumfang des Ventilsitzes 50 verbunden ist. Um das Rücklaufsperrventil 15 herum ist der Anschlussflansch 60 der Vorrichtung 6 erkennbar.

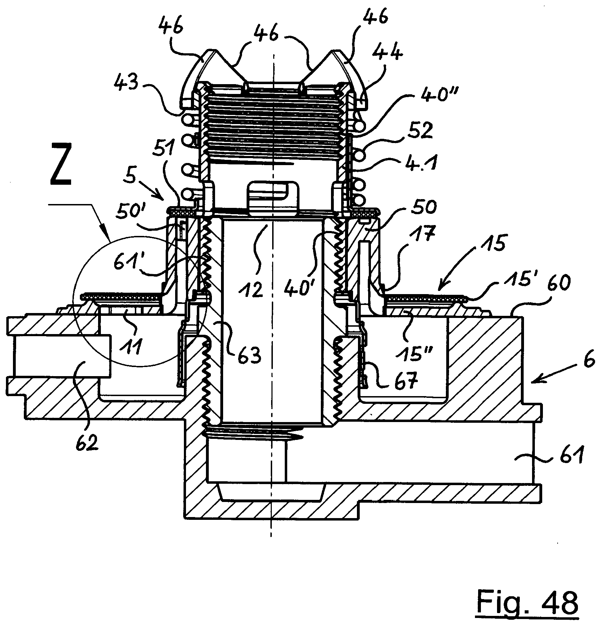

Figur 48 zeigt den Gegenstand der Figur 47 im Längsschnitt, wobei hier besonders deutlich wird, dass der flanschseitige Rohrstutzenabschnitt 4.1 mit dem in seinem äußeren, das heißt hier unteren Endbereich 40 angebrachten Schraubgewinde 40' auf einen zentral im Anschlussflansch 60 angeordneten Gewindenippel 63 mit einem Gegengewinde 61' aufgeschraubt ist. Der Gewindenippel 63 seinerseits ist im Zentrum des Anschlussflansches 60 über eine weitere Schraubverbindung dauerhaft mit der Vorrichtung 6 verschraubt. Die Verschraubung des Rohrstutzenabschnitts 4.1 mit dem Gewindenippel 63 erfolgt bei einer Erstmontage des Filters 1 und ist über eine Losdrehsicherung 67 gegen Lösen gesichert, wenn das in Figur 48 nicht dargestellte Filtergehäuse 2 zusammen mit dem flanschfernen Rohrstutzenabschnitt 4.2 vom flanschseitigen Rohrstutzenabschnitt 4.1 abgeschraubt wird.

Auf dem Außenumfang des flanschseitigen Rohrstutzenabschnitts 4.1 sind die Teile des Filterumgehungsventils 5 in der oben schon beschriebenen Anordnung vorgesehen. Ganz oben auf dem Rohrstutzenabschnitt 4.1 sitzt der Anschlag 43 mit den oberseitigen Einführschrägen 46, die beim Zusammenbauen des Filters 1 die im Filtereinsatz 3 angeordneten Federstützen 53 beziehungsweise Stützarme 53' in Zwischenräume 44 am unteren Ende der Einführschrägen 46 führen. Somit kann nur ein Filtereinsatz 3 verwendet werden, der die Federstützen 53 beziehungsweise Stützarme 53' in der zu den Zwischenräumen 44 passenden Anzahl, Form und Verteilung aufweist.

Radial außen vom Ventilsitz 50 ist das den Einlass 11 überdeckende Rücklaufsperrventil 15 angeordnet, welches hier einen eigenen Membranträger 15" aufweist.

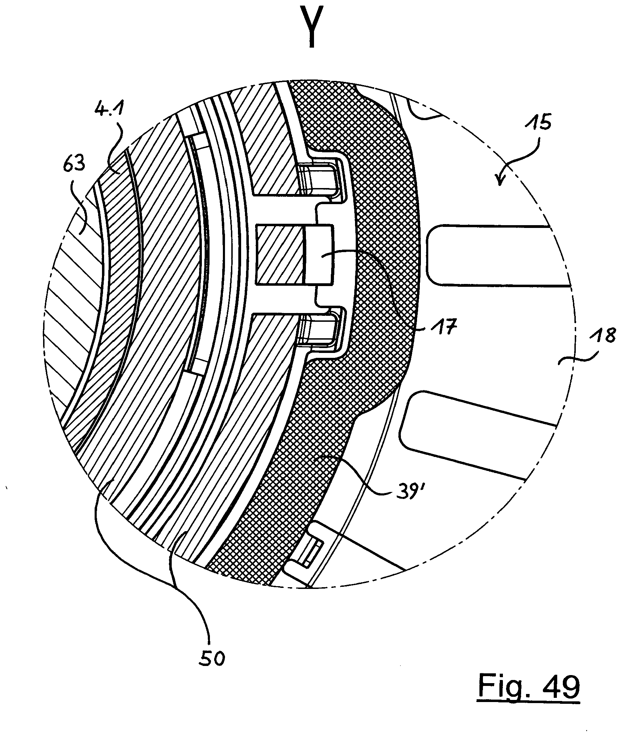

Figur 49 zeigt das Detail Y aus Figur 39 in vergrößerter Darstellung. Ganz links ist ein kleiner Teil des Gewindenippels 63 sichtbar, der radial außen, das heißt nach rechts hin, von dem flanschseitigen Rohrstutzenabschnitt 4.1 umgeben ist. Weiter nach außen, das heißt hier nach rechts hin, folgen der Ventilsitz 50 und der radial innere Dichtring 39'. Rechts, das heißt radial außen von diesem, ist noch ein Teil des Rücklaufsperrventils 15 mit der Federzungenscheibe 18 erkennbar. Die Teile des Rücklaufsperrventils 15 sind über die Rastverbindungen 17 mit dem Ventilsitz 50 verbunden, wobei Figur 49 eine diese Rastverbindungen 17 zeigt. Weiter verdeutlicht die Figur 49, dass der Dichtring 39' in seinem Verlauf an die Anordnung und Lage der Rastverbindungen 17 angepasst ist und hier jeweils radial nach außen hin ausweicht. Dieser an die Lage der Rastverbindungen 17 angepasste Verlauf des Dichtrings 39' ist auch schon in den Figuren 42, 43 und 45 sichtbar.

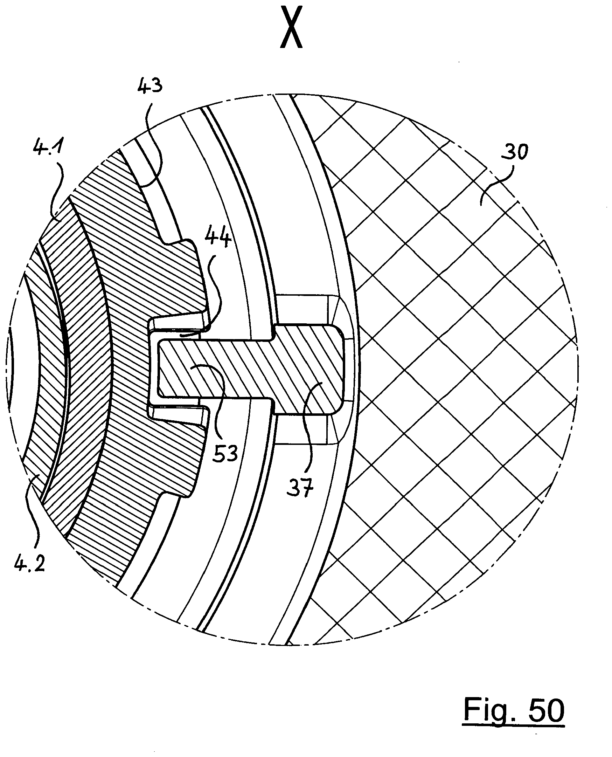

Figur 50 zeigt das Detail X aus Figur 40 in vergrößerter Darstellung, wobei hier im rechten Teil der Figur 50 der Filterstoffkörper 30 sichtbar ist, der radial innen, das heißt in der Figur links, von dem inneren Stützkörper 37 abgestützt ist. Einstückig mit dem Stützkörper 37 ist hier eine der Federstütze 53 sichtbar, die in einen der Zwischenräume 44 im Anschlag 43 eingreift. Radial innen vom Anschlag 43, das heißt in dieser Figur links davon, sind noch kleine Teile der Rohrstutzenabschnitte 4.1 und 4.2 erkennbar.

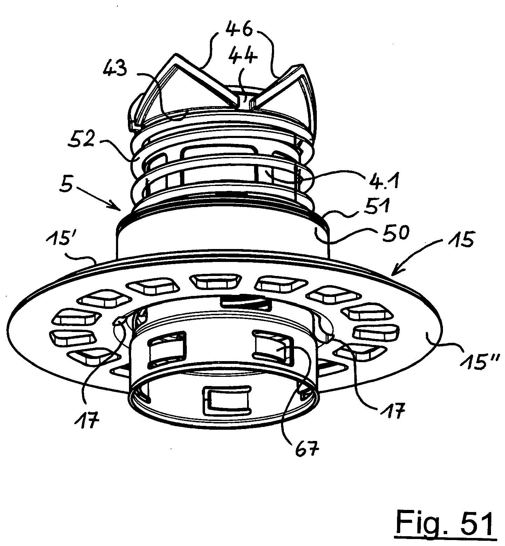

Figur 51 zeigt eine das Filterumgehungsventil 5 und dass Rücklaufsperrventil 15 umfassende Baueinheit als Teile des Filters 1 aus Figur 38, in Ansicht schräg von unten. Am oberen Ende des flanschseitigen Rohrstutzenabschnitts 4.1 ist der Anschlag 43 mit den Einführschrägen 46 und den Zwischenräumen 44 dazwischen erkennbar. Darunter liegt die Feder 52 des Filterumgehungsventils 5, die dessen Ventilkörper 51 in Schließrichtung gegen den Ventilsitz 50 vorbelastet.

Im unteren Teil der Figur 51 ist das Rücklaufsperrventil 15 sichtbar, wobei hier der Blick von unten auf den mit Durchbrechungen für zuströmende, zu filternde Flüssigkeit versehenen Membranträger 15" fällt. Oberseitig liegt auf dem Membranträger 15" die flexible Ventilmembran 15'. Unter dem Membranträger 15" ist noch die Losdrehsicherung 67 sichtbar.

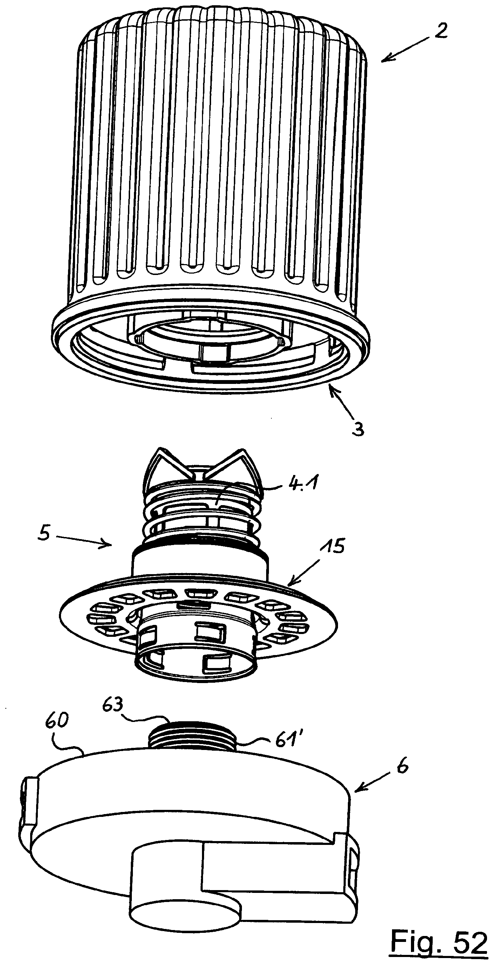

Figur 52 zeigt die Baueinheit aus Figur 51 zusammen mit dem Anschlussflansch 60 und dem Filtergehäuse 2 mit Filtereinsatz 3, in auseinandergezogener Ansicht schräg von unten. Oben in Figur 52 ist das Filtergehäuse 2 mit dem darin angeordneten Filtereinsatz 3 sichtbar. Im mittleren Teil der Figur ist die Baueinheit aus dem Rohrstutzenabschnitt 4.1 mit dem Filterumgehungsventil 5 und dem Rücklaufsperrventil 15 sichtbar. Ganz unten in Figur 52 ist der Anschlussflansch 60 der Vorrichtung 6 mit dem in dessen Zentrum angeordneten Gewindenippel 63 mit dem Gegengewinde 61' für das hier nicht sichtbare, im unteren Endbereich des Rohrstutzenabschnitts 4.1 vorgesehene Gewinde erkennbar.

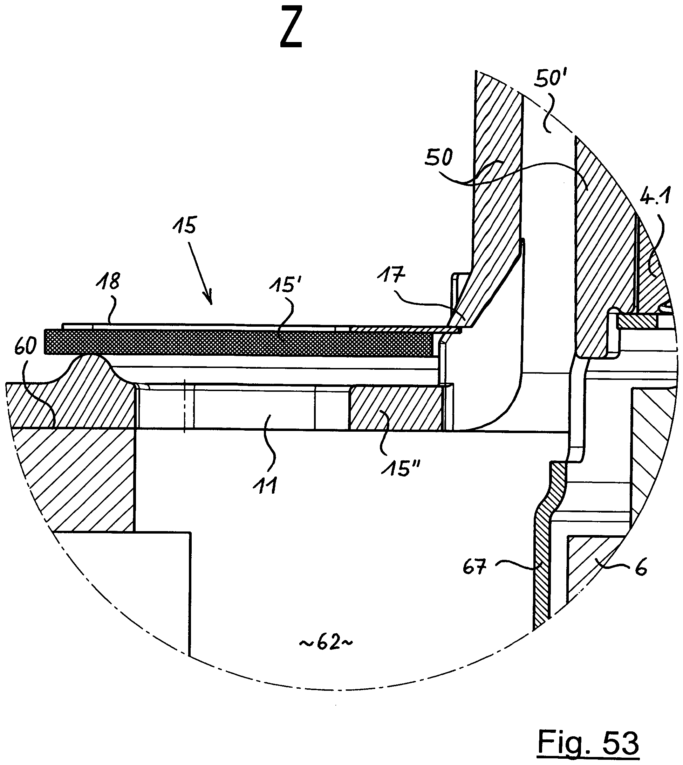

Figur 53 zeigt das Detail Z aus Figur 48 in vergrößerter Darstellung, um die Ausführung des hier verwendeten Rücklaufsperrventils 15 zu verdeutlichen. Unten in Figur 53 ist ein Teil des Anschlussflansches 60 der Vorrichtung 6 mit dem Rohflüssigkeitskanal 62 sichtbar, der zum Einlass 11 des Filters 1 führt. Der Einlass 11 ist hier in Form mehrerer in Umfangsrichtung verteilter Durchbrechungen in dem Membranträger 15" ausgebildet. Auf der Oberseite des Membranträger 15" liegt die flexible Ventilmembran 15', die oberseitig mit der Federzungenscheibe 18 belegt ist, welche eine in Schließrichtung wirkende Rückstellkraft auf die Ventilmembran 15' ausübt. Die Einheit aus Membranträger 15", Ventilmembran 15' und Federzungenscheibe 18 ist mittels der schon weiter oben erwähnten Rastverbindungen 17 mit dem Ventilsitz 50 des Filterumgehungsventils 5 verbunden.

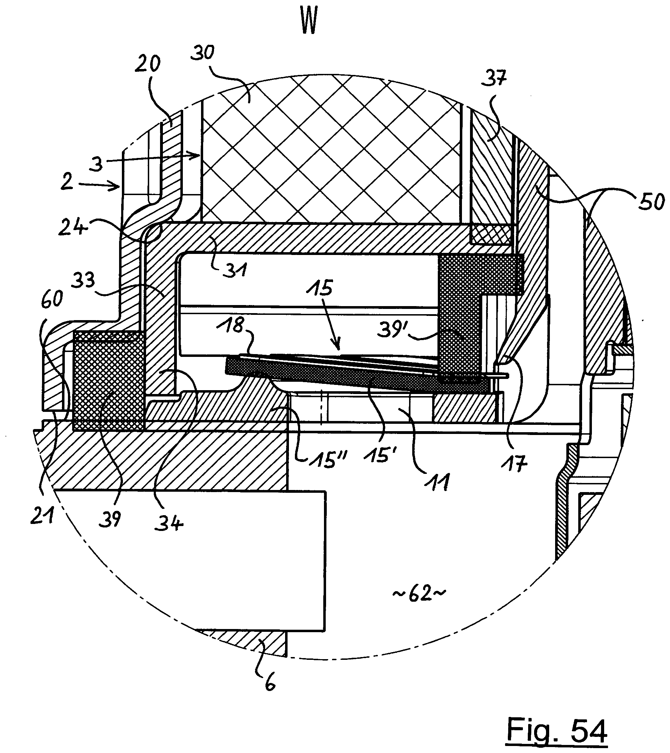

Figur 54 zeigt das Detail W aus Figur 38 in vergrößerter Darstellung, nun in einem Zustand mit eingebautem Filtereinsatz 3 und angebautem Filtergehäuse 2. Wie diese Figur veranschaulicht, drückt in diesem zusammengebautem Zustand der radial innere Dichtring 39' die Ventilmembran 15' und die zugehörige Federzungenscheibe 18 gegen den Membranträger 15" und sorgt so für einen sicheren Zusammenhalt und flüssigkeitsdichten Abschluss in diesem Bereich. Nach außen hin wird das Filtergehäuse 2 durch den radial äußeren Dichtring 39 flüssigkeitsdicht abgedichtet, der zwischen dem Filtergehäuse 2 und dem Anschlussflansch 60 liegt.

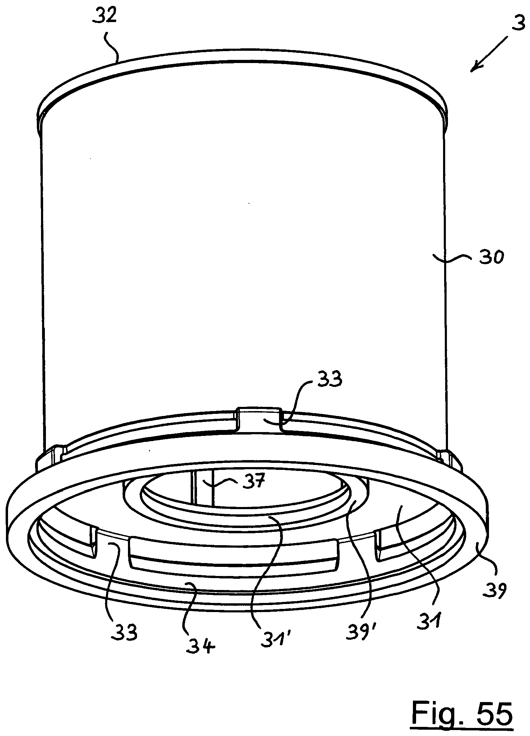

Figur 55 zeigt den Filtereinsatz 3 des Filters 1 in einer geänderten Ausführung für einen Filter 1 ohne Rücklaufsperrventil 15, in Ansicht schräg von unten. Im Unterschied zu dem Filtereinsatz 3 für den zuvor beschriebenen Filter 1 mit Rücklaufsperrventil 15 ist bei dem Filtereinsatz 3 gemäß Figur 55 der radial innere Dichtring 39' kreisrund ausgeführt, da er hier nicht die besondere Formgebung zur Berücksichtigung der Lage der Rastverbindungen 17 benötigt. In seinen übrigen Teilen entspricht der Filtereinsatz 3 gemäß Figur 55 dem zuvor erläuterten Ausführungsbeispiel.

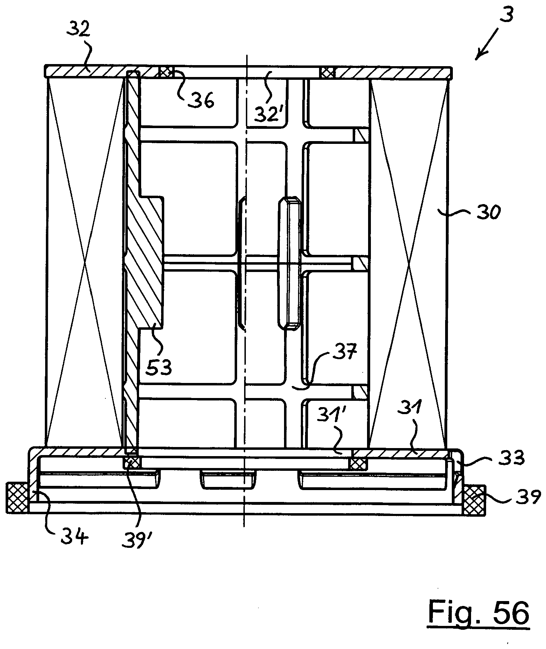

Figur 56 zeigt den Filtereinsatz 3 aus Figur 55 im Längsschnitt, wobei auch hier der durchgehend kreisrunde Verlauf des radial inneren Dichtrings 39' sichtbar ist. Hinsichtlich der weiteren Elemente des Filtereinsatzes 3 gemäß Figur 56 wird auf die vorhergehende Beschreibung verwiesen.

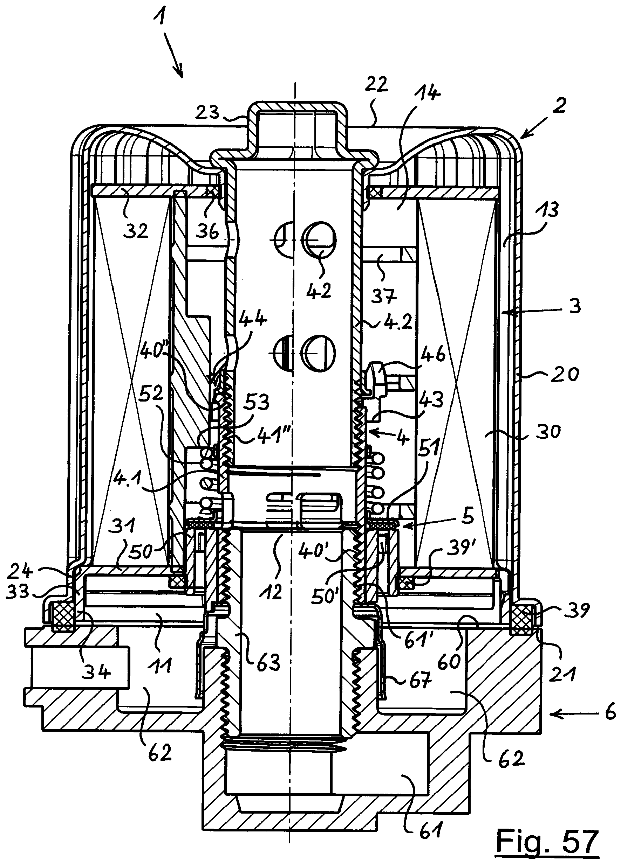

Figur 57 zeigt den Filter 1 in einer weiteren Ausführung im Längsschnitt, wobei für diese Ausführung im Unterschied zu dem Beispiel nach Figur 38 charakteristisch ist, dass kein Rücklaufsperrventil 15 vorhanden ist. Der zu filternde Flüssigkeit aus dem Rohflüssigkeitskanal 62 auf die Rohseite 13 des Filters 1 führende Einlass 11 ist hier ständig offen. Im Übrigen entspricht der Filter 1 dem anhand von Figur 38 beschriebenen Ausführungsbeispiel. Der Filter 1 nach Figur 57 ist insbesondere für Anwendungen geeignet, bei denen es nicht störend ist, wenn bei Stillstand des Flüssigkeitskreislaufs die Flüssigkeit aus dem Filter 1 abfließt.

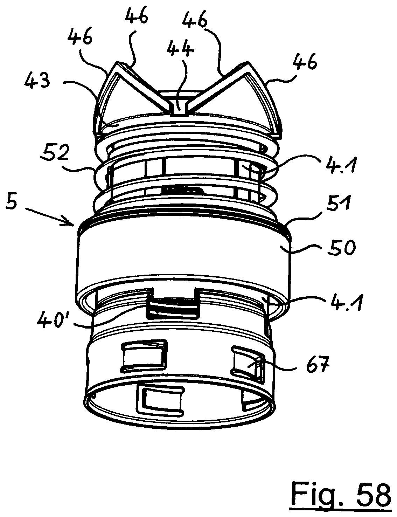

Figur 58 zeigt eine Baueinheit mit dem Filterumgehungsventil 5 als Teil des Filters 1 aus Figur 57, in Ansicht. Getragen wird das Filterumgehungsventil 5 auch hier wieder von dem flanschseitigen Rohrstutzenabschnitt 4.1, auf dessen Außenumfang von unten nach oben der Ventilsitz 50, der Ventilkörper 51, die Feder 52 und der Anschlag 43 mit den Einführschrägen 46 und den dazwischen liegenden Zwischenräumen 44 angeordnet sind. Innen im unteren Endbereich des Rohrstutzenabschnitts 4.1 ist das Schraubgewinde 40' angebracht. Im unteren Teil der Figur 58 ist die Losdrehsicherung 67 sichtbar. Wegen des Fehlens des Rücklaufsperrventils ist in Figur 58 im Vergleich zu Figur 51 kein Membranträger mit den sonstigen Teilen des Rücklaufsperrventils vorhanden.

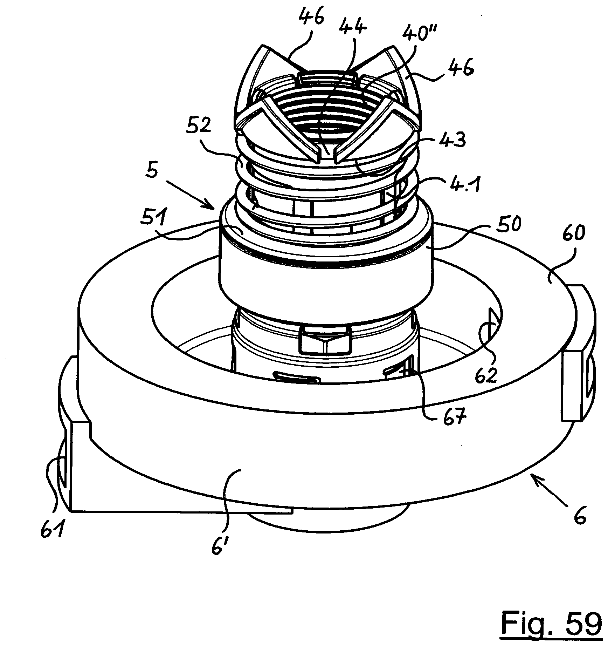

Figur 59 zeigt die Baueinheit aus Figur 58 in einem an einen Anschlussflansch 60 montierten Zustand, in Ansicht schräg von oben. Der hier sichtbare Zustand ergibt sich, wenn das Filtergehäuse 2 zusammen mit dem Filtereinsatz 3 zur Filterwartung vom Anschlussflansch 60 entfernt ist. Beim Losdrehen des Filtergehäuses 2 trennen sich die beiden Rohrstutzenabschnitten 4.1 und 4.2 voneinander, da aufgrund der Losdrehsicherung 67 der flanschseitige Rohrstutzenabschnitt 4.1 gegen ein Abschrauben vom Anschlussflansch 60 gesichert ist. Um die Losdrehsicherung 67 herum verläuft der ringförmige Rohflüssigkeitskanal 62, der zum Einlass 11 des Filters 1 führt. Links unten in Figur 59 ist der Reinflüssigkeitskanal 61 sichtbar, durch den gefilterte Flüssigkeit im Betrieb des Filters 1 abgeführt wird. Im Beispiel nach Figur 59 ist der Anschlussflansch 60 an einem Sockel 6' ausgebildet, der über weiterführende Leitungen mit der übrigen Vorrichtung 6, die den Flüssigkeitskreislauf mit dem Filter 1 aufweist, verbindbar ist.

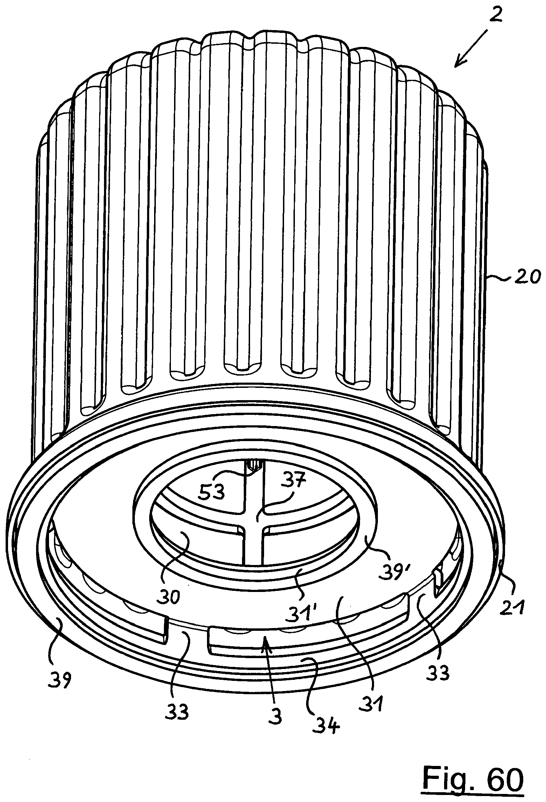

Figur 60 zeigt das Filtergehäuse 2 mit darin angeordnetem Filtereinsatz 3 des Filters 1 aus Figur 57, in Ansicht schräg von unten. Radial innen von der nach unten weisenden offenen Stirnseite 21 der Umfangswand 20 des Filtergehäuses 2 verläuft der Dichtring 39, der von dem Dichtringträger 34 getragen wird. Der Dichtringträger 34 ist mittels der Verbindungsstege 33 mit der unteren Stirnscheibe 31 des Filtereinsatzes 3 verbunden. Um die zentrale Durchbrechung 31' in der unteren Stirnscheibe 31 herum ist der kreisringförmige verlaufende innere Dichtring 39' angeordnet. Durch die Durchbrechung 31' hindurch ist ein Teil des inneren Stützkörpers 37 mit einem kurzen Abschnitt einer der Federstützen 53 sichtbar. Radial außen von dem Stützkörper 37 liegt der Filterstoffkörper 30.

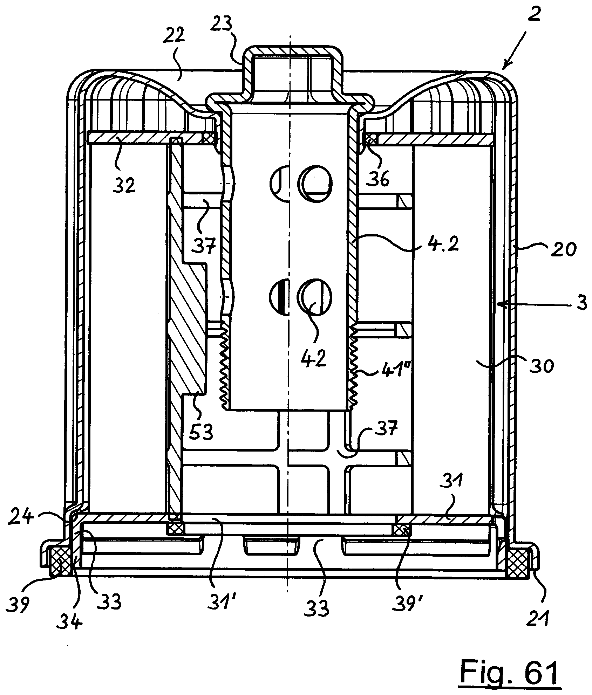

Figur 61 zeigt das Filtergehäuse 2 mit Filtereinsatz 3 aus Figur 60 im Längsschnitt. In die obere Stirnseite 22 ist der flanschferne Rohrstutzenabschnitt 4.2 dichtend eingesetzt, wobei hier sowohl das Filtergehäuse 2 als auch der Rohrstutzenabschnitt 4.2 Teile aus Metall, wie Stahlblech, sind. Zur gegenseitigen Fixierung und Abdichtung sind zweckmäßig das Filtergehäuse 2 und der Rohrstutzenabschnitt 4.2 in dem Bereich, in dem sie aneinander anliegen, miteinander verschweißt. Am unteren Endbereich des Rohrstutzenabschnitts 4.2 ist das Gewinde 41" sichtbar, dass zum Verschrauben mit dem flanschseitigen Rohrstutzenabschnitt 4.1 dient.

In Höhe der unteren Stirnscheibe 31 des Filtereinsatzes 3 besitzt die Umfangswand 20 eine Innendurchmesserstufe 24, an welcher die untere Stirnscheibe 31 mit ihrer Oberseite anliegt, wodurch der Filtereinsatz 3 relativ zum Filtergehäuse 2 in Axialrichtung eine definierte Lage erhält. Außerdem wird der Filtereinsatz 3 durch die an der unteren Stirnscheibe 31 vorhandenen Verbindungsstege einerseits und durch die Dichtung 36 am Innenumfang der oberen Stirnscheibe 32 andererseits in Radialrichtung relativ zum Filtergehäuse 2 zentriert. Der radial außen angeordnete Dichtring 39 stützt sich an einer axial nach unten weisenden umlaufenden Fläche der Umfangswand 20 ab. Um die zentrale Durchbrechung 31' in der unteren Stirnscheibe 31 herum verläuft der radial innere Dichtring 39'.

In Inneren des Filterstoffkörpers 30 ist der gitterförmige Stützkörper 37 angeordnet, mit dem hier die Federstützen 53 als radial nach innen vorragende Rippen einstückig ausgeführt sind. Aufgrund eines abgewinkelten Verlaufs des Schnitts ist nur eine der Federstützen 53 in der linken Hälfte der Figur 61 sichtbar. Der Stützkörper 37 ist hier sowohl mit der unteren Stirnscheibe 31 als auch mit der oberen Stirnscheibe 32 verbunden, beispielsweise verklebt oder verschweißt.

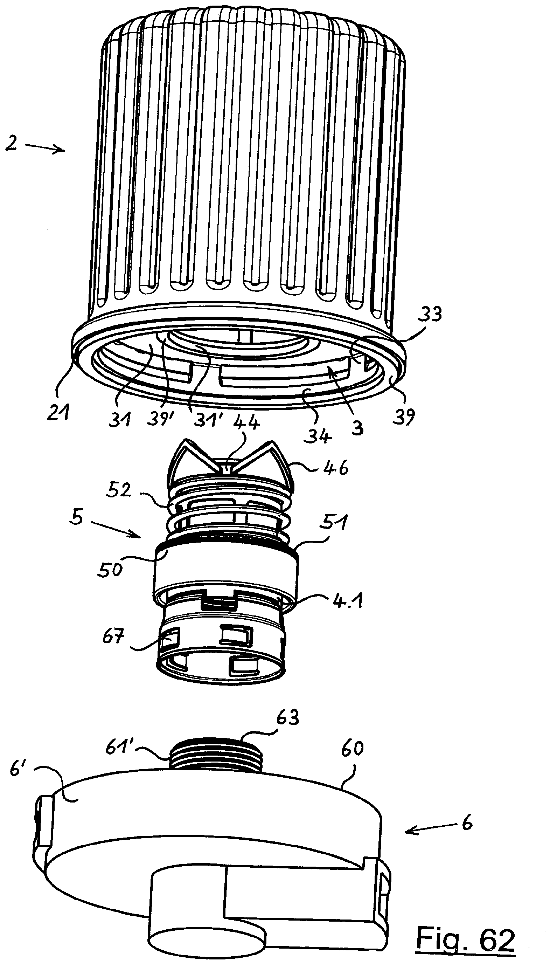

Figur 62 zeigt die Baueinheit aus Figur 58 zusammen mit einem Anschlussflansch 60 und einem Filtergehäuse 2 mit darin angeordnetem Filtereinsatz 3, in auseinandergezogener Ansicht. Der Filtereinsatz 3 ist von der offenen, flanschseitigen Stirnseite 21 des Filtergehäuses 2 her in dieses eingeschoben und hält sich im Filtergehäuse 2 aufgrund gegenseitiger Reibung oder Rastung. Die darunter sichtbare Baueinheit umfasst die anhand von Figur 58 schon erläuterten Teile, insbesondere das Filterumgehungsventil 5. Ganz unten in Figur 62 ist der Anschlussflansch 60 sichtbar, hier als Teil eines Sockels 6', der Teil einer Vorrichtung 6 ist, die einen Flüssigkeitskreislauf mit zu filternder Flüssigkeit aufweist. Aus dem Anschlussflansch 60 ragt zentral der Gewindenippel 63 mit seinem Gewinde 61' vor.

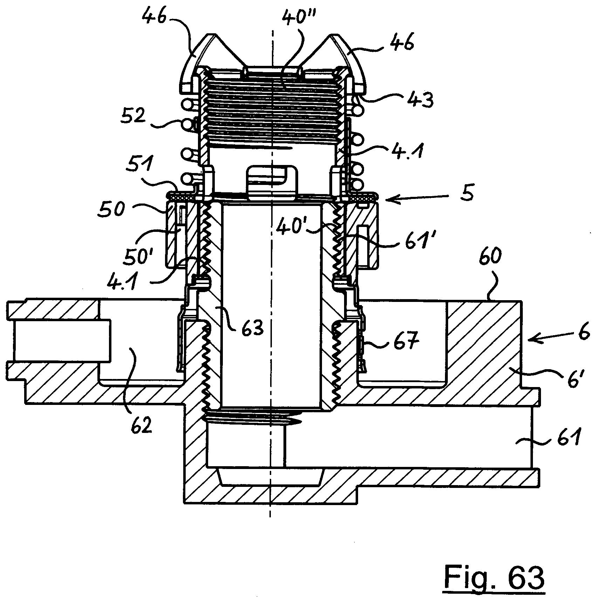

Figur 63 zeigt den Gegenstand der Figur 59 im Längsschnitt. In dem Anschlussflansch 60 ist der Gewindenippel 63 mit einem unteren Gewindeabschnitt dauerhaft und unlösbar eingeschraubt. Mit dem oberen Gewindeabschnitt 61' ist mittels seines unteren Gewindes 40' der flanschseitige Rohrstutzenabschnitt 4.1 verschraubt und gegen Lösen mittels der Losdrehsicherung 67 gesichert. Auf dem Rohrstutzenabschnitt 4.1 sind die Teile des Filterumgehungsventils 5, wie weiter oben schon erläutert, angeordnet. Da in dem in Figur 63 gezeigten Zustand, in welchem das Filtergehäuse 2 und der Filtereinsatz 3 entfernt sind, die Federstützen 53 nicht auf die Feder 52 einwirken, ist die Feder nun auf ihre maximale Länge expandiert und liegt mit ihrem oberen Ende an dem Anschlag 43 an. Ein Verlieren der Feder 52 und des Ventilkörpers 51 ist so ausgeschlossen.

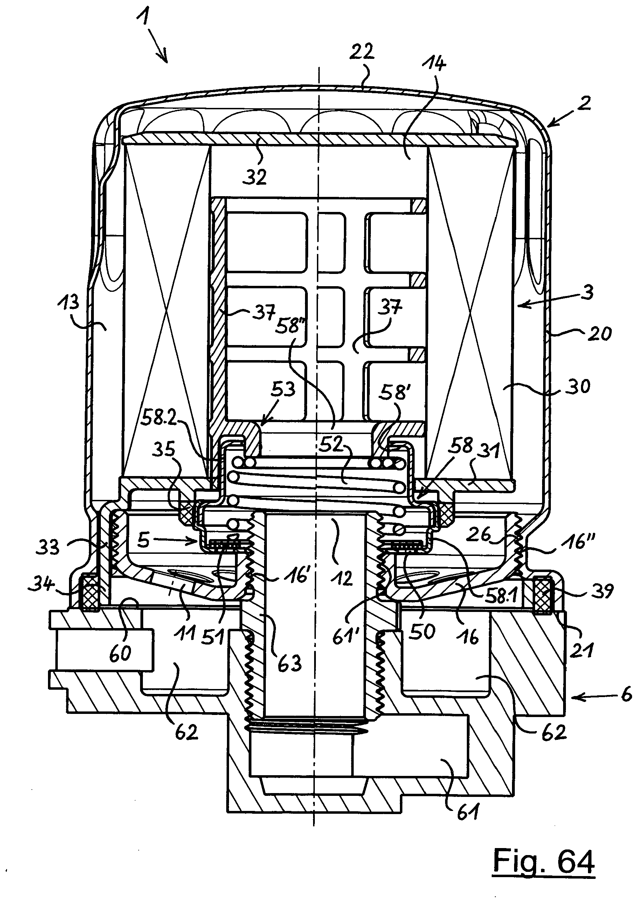

Figur 64 zeigt den Filter 1 in einer weiteren Ausführung im Längsschnitt. Auch bei diesem Filter 1 handelt es sich wieder um einen Anschraubfilter, der an einen Anschlussflansch 60 einer Vorrichtung 6 mit Flüssigkeitskreislauf angeschraubt ist. Der Anschlussflansch 60 weist hier wieder einen zentralen Gewindenippel 63 mit einem aus der Ebene des Anschlussflansches 60 vorragenden Gewinde 61' auf. Neben seinem Filtergehäuse 2 und Filtereinsatz 3 besitzt der Filter 1 eine Grundplatte 16, die radial innen ein Innengewinde 16' und radial außen ein Außengewinde 16" aufweist und die in ihrem zwischen den beiden genannten Gewinden 16', 16" liegenden Bereich mehrere in Umfangsrichtung verteilte Durchbrechungen als Einlass 11 für zu filternde Flüssigkeit aufweist. Mittels des Gewindes 16' ist die Grundplatte 16 mit dem Gewindenippel 63 verschraubt. Mit dem Außengewinde 16" ist das Filtergehäuse 2 verschraubt, welches dazu im unteren Endbereich seiner Umfangswand 20 innen das Schraubgewinde 26 aufweist.

Weiterhin ist auf dem Gewindenippel 63 über der Grundplatte 16 ein Ventilhalter 58 angebracht, an beziehungsweise in welchem die Teile des Filterumgehungsventils 5 angeordnet sind. Der Ventilhalter 58 ist hier zweiteilig mit einem unteren Halterteil 58.1 und einem damit fest verbundenen oberen Halterteil 58.2 ausgeführt. Der Ventilsitz 50 ist hier in einem Boden des unteren Halterteils 58.1 ausgebildet. Der Ventilkörper 51 ist als flache kreisringförmige Scheibe ausgeführt und liegt in seiner in Figur 64 gezeigten Schließstellung dichtend auf dem Ventilsitz 50. Mittels der im Ventilhalter 58 angeordneten Schraubendruckfeder 52 wird der Ventilkörper 51 mit einer in Schließrichtung wirkenden Kraft vorbelastet. Die Feder 52 wird auch hier wieder von dem Filtereinsatz 3 vorgespannt, indem eine mit dem zentralen Stützkörper 37 im Filterstoffkörper 30 einstückige Federstütze 53 mit einem radial nach innen und dann axial nach unten weisenden, ringförmigen Stützkragen von oben her auf die Feder 52 drückt. Der Stützkörper 37 ist hier nur mit der unteren Stirnscheibe 31 verbunden. Das obere Ende des Stützkörpers 37 liegt in einem Abstand von der Unterseite der oberen Stirnscheibe 32.

Der Filtereinsatz 3 hat hier eine untere Stirnscheibe 31, die unterseitig eine umlaufende Dichtung 35 trägt, mit welcher die untere Stirnscheibe 31 dichtend auf den Außenumfang des Ventilhalters 58 aufgesetzt ist. Vom radial äußeren Rand der unteren Stirnscheibe 31 gehen wieder Verbindungsstege 33 in Axialrichtung nach unten hin aus, die einen umlaufenden Dichtringträger 34 tragen, auf dessen Außenumfang ein radial äußerer Dichtring 39 angeordnet ist, welcher das Filtergehäuse 2 gegen den Anschlussflansch 60 abdichtet. Oberseitig besitzt der Filtereinsatz 3 eine geschlossene Stirnscheibe 32.

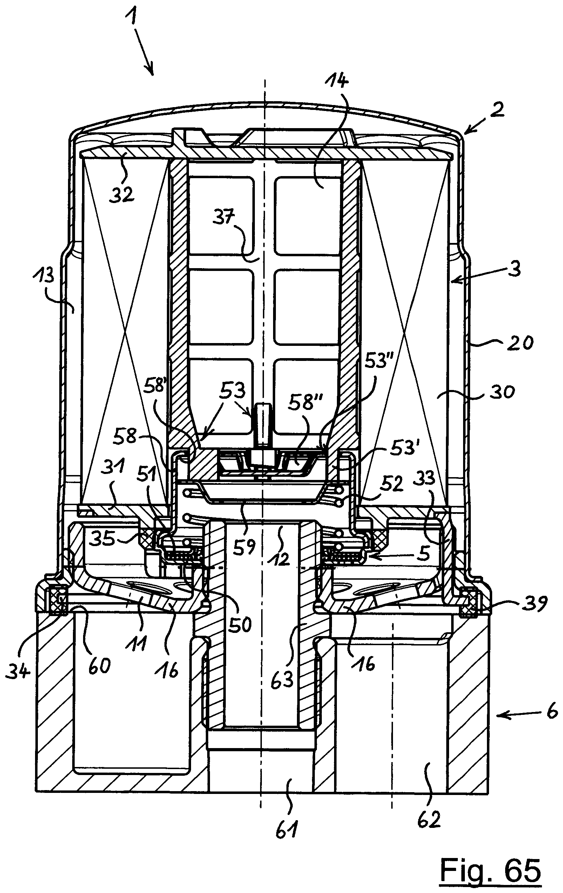

Figur 65 zeigt den Filter 1 in einer weiteren Ausführung im Längsschnitt. In vielen Teilen entspricht der Filter 1 dem Beispiel nach Figur 64. Unterschiedlich ist, dass dem Filterumgehungsventil 5 bei dem Beispiel nach Figur 65 ein Abdeckkörper 59 zugeordnet ist, welcher dafür sorgt, dass bei einer Filterwartung mit Entfernen des Filtergehäuses 2 und des Filtereinsatzes 3 der Auslass 12 für gefilterte Flüssigkeit verschlossen wird, um zu verhindern, dass aus dem Filtereinsatz 3 oder dem Filtergehäuse 2 Schmutzpartikel in den Auslass 12 und von diesem in den Reinflüssigkeitskanal 61 der Vorrichtung 6 gelangen. Der Abdeckkörper 59 ist dazu an der Oberseite der Feder 52 angeordnet und wird von der Feder 52 mit einer nach oben hin, das heißt vom Ventilkörper 51 weg weisenden Kraft vorbelastet. In dem in Figur 65 gezeigten zusammengebautem Zustand des Filters 1 drücken die Stützarme 53' der Federstütze 53 durch in der Oberseite des Ventilhalters 58 vorgesehene Einführöffnungen 53" hindurch auf die Oberseite des Abdeckkörpers 59, welcher wiederum mit seiner Unterseite auf das obere Ende der Feder 52 drückt und so die Feder 52 vorgespannt.

Wenn das Filtergehäuse 2 zusammen mit dem Filtereinsatz 3 von dem Anschlussflansch 60 entfernt wird, bleiben die Grundplatte 16 und der Ventilhalter 58 mit dem Filterumgehungsventil 5 am Anschlussflansch 60 zurück. Die Stützarme 53' werden dabei nach oben hin von dem Abdeckkörper 59 entfernt, wodurch sich dieser unter der Wirkung der Kraft der Feder 52 an die Unterseite der oberen Stirnwand des Ventilhalters 58 mit den dort vorgesehenen Durchlässen 58" für gefilterte Flüssigkeit anliegt. Auf diese Weise werden die Durchlässe 58" verschlossen und es können keine Schmutzpartikel in den Auslass 12 für gefilterte Flüssigkeit gelangen.

Damit die Stützarme 53' der am Stützkörper 37 angeordneten Federstütze 53 auf den Abdeckkörper 59 und über diesen auf die Feder 52 des Filterumgehungsventils 5 die nötige Kraft ausüben können, ist der Stützkörper 37 hier mit seinem flanschfernen, oberen Stirnende an Innenseite der flanschfernen, oberen Stirnscheibe 32 des Filtereinsatzes 3 abgestützt. Der Filtereinsatz 3 wiederum stützt sich mit seiner flanschfernen, oberen Stirnscheibe 32 innen am Filtergehäuse 2 ab.

Weiterhin ist bei diesem Filter 1 der Stützkörper 37 im Inneren des Filterstoffkörpers 30 relativ zum übrigen Filtereinsatz 3 drehbar angeordnet. Zu diesem Zweck liegt der Stützkörper 37 mit seinem oberen Ende zwar an der Unterseite der oberen Stirnscheibe 32 des Filtereinsatzes 3 an, ist aber mit dieser Stirnscheibe 32 nicht verbunden. Mit der flanschseitigen, unteren Stirnscheibe 31 des Filtereinsatzes 3 hat der Stützkörper 37 hier keinen unmittelbaren Kontakt. Diese Drehbarkeit des Stützkörpers 37 ist hier erforderlich, weil die Stützarme 53' der Federstütze 53 den Stützkörper 37 an einer Drehung hindern, sobald die Stützarme 53' in die zugehörigen Einführöffnungen 53" des Ventilhalters 58 eingetaucht sind, da der Ventilhalter 58 drehfest auf dem Gewindenippel 63 sitzt. Für das weitere Anschrauben des Filtergehäuses 2 an die Grundplatte 16 muss aber das Filtergehäuse 2 zusammen mit dem darin angeordneten Filtereinsatz 3 weiter gedreht werden, was durch die relativ zum übrigen Filtereinsatz 3 verdrehbare Anordnung des Stützkörpers 37 im Filtereinsatz 3 ermöglicht wird.

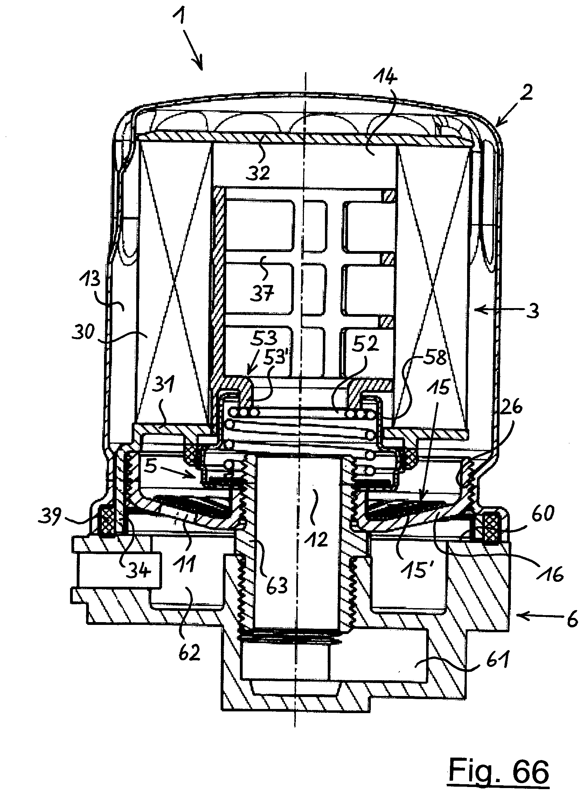

Figur 66 zeigt den Filter 1 in einer weiteren Ausführung im Längsschnitt. Der Filter 1 gemäß Figur 66 entspricht in seinen meisten Teilen dem Beispiel nach Figur 64. Unterschiedlich ist, dass bei dem Beispiel nach Figur 66 dem Einlass 11 ein Rücklaufsperrventil 15 zugeordnet ist. Das Rücklaufsperrventil 15 liegt in Form einer flexiblen Ventilmembran 15' auf der Oberseite der Grundplatte 16 und überdeckt so die den Einlass 11 bildenden Öffnungen in der Grundplatte 16. Durch vom Rohflüssigkeitskanal 62 kommende, zu filternde Flüssigkeit wird das Rücklaufsperrventil 15 selbsttätig geöffnet. Bei Stillstand des Flüssigkeitskreislaufs sorgt das Rücklaufsperrventil 15 dafür, dass der Filter 1 nicht leer läuft.

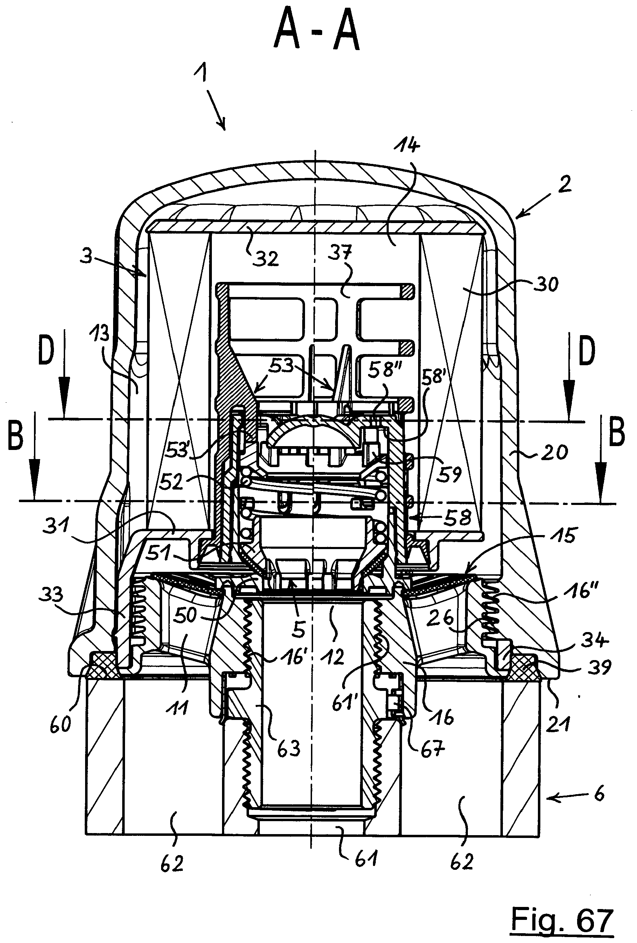

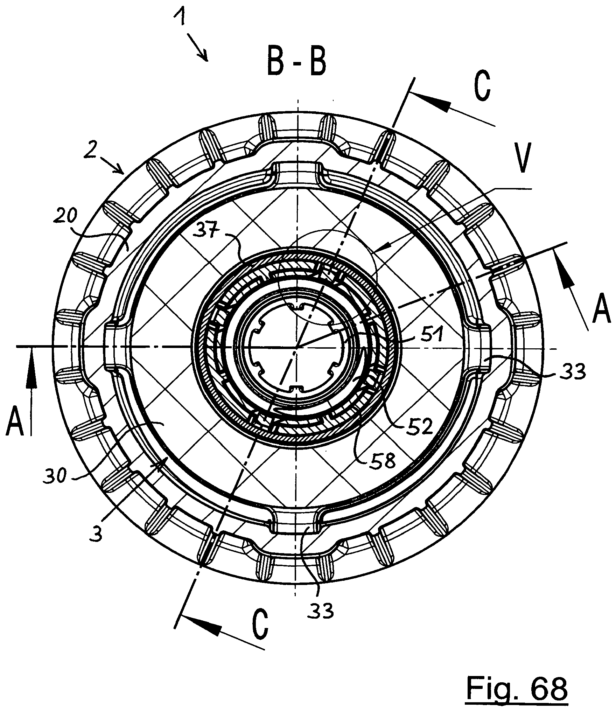

Figur 67 zeigt den Filter 1 in einer weiteren Ausführung in einem ersten, abgewinkelten Längsschnitt gemäß der Schnittlinie A - A in Figur 68, wobei der Filter 1 hier in einem an einen Anschlussflansch 60 einer Vorrichtung 6, wie Brennkraftmaschine, angebauten Zustand gezeigt ist. Ein Gewindenippel 63 mit einem oberhalb der Flanschebene liegenden Außengewinde 61' ist Teil des Anschlussflansches 60, wobei hier der Gewindenippel 63 als Doppelnippel ausgeführt ist und seinerseits mit einem unteren Außengewinde in die Vorrichtung 6 dauerhaft eingeschraubt ist.

Mit dem oben liegenden Außengewinde 61' des Gewindenippels 63 ist mittels eines Innengewindes 16' eine Grundplatte 16 des Filters 1 verschraubt, wobei diese Verschraubung bei einer Erstmontage des Filters 1 am Anschlussflansch 60 erfolgt. Durch eine Losdrehsicherung 67 ist ein späteres Lösen dieser Verschraubung unterbunden.

Weiterhin umfasst der Filter 1 ein Filtergehäuse 2, welches hier die Form eines nach unten hin offenen Bechers hat. Im unteren Randteil seiner Umfangswand 20 besitzt das Gehäuse 2 ein Innengewinde 26, welches hier in Schraubeingriff mit dem Außengewinde 16" der Grundplatte 16 steht. Sowohl die Grundplatte 16 als auch das Gehäuse 2 sind hier Teile aus Kunststoff. Die Kunststoffteile sind zweckmäßig als Spritzgussteile hergestellt, was eine formfallende Herstellung ohne nachträgliche spanende Bearbeitung erlaubt. Alternativ können die Grundplatte 16 und das Gehäuse 2 Teile aus Metall, insbesondere Druckgussteile aus Leichtmetall, wie Aluminium, sein.

Im Inneren des Gehäuses 2 ist ein Filtereinsatz 3 angeordnet, der aus einem hohlzylindrischen Filterstoffkörper 30 mit zwei diesen stirnseitig einfassenden Stirnscheiben 31 und 32 besteht. Im Filterstoffkörper 30 befindet sich ein diesen im Betrieb abstützender gitterförmiger Stützkörper 37. Mittels einer zentralen Öffnung in der unteren Stirnscheibe 32 ist der Filtereinsatz 3 unter Abdichtung durch einen Dichtkragen in den Filter 1 eingebaut.

Vom radial äußeren Rand der unteren Stirnscheibe 32 erstrecken sich mehrere über deren Umfang verteilt angeordnete Verbindungsstege 33 in Axialrichtung nach unten. Aufgrund des abgewinkelten Verlaufs der Schnittebene der Figur 67 ist hier nur einer der Verbindungsstege 33 in der linken Hälfte der Figur 67 sichtbar.

An ihrem unteren Ende gehen die Verbindungsstege 33 in einen umlaufenden, eine zylindrische Außenfläche aufweisenden Dichtringträger 34 über, auf welchem eine umlaufende Dichtung 39 in Form eines elastischen, in unbelastetem Zustand im Querschnitt etwa quadratischen Dichtrings angeordnet ist.

Der Filtereinsatz 4 ist mittels seiner Verbindungsstege 33 relativ zum Filtergehäuse 2 in einer definierten, gewünschten Position festgelegt.

In ihrem radial unteren äußeren Randbereich ragt die Grundplatte 2 mit einem äußeren Randvorsprung radial nach außen hin unter den Dichtringträger 34.

Im unteren Randteil des Filtergehäuses 2 ist eine in Axialrichtung nach unten weisende Stützfläche ausgebildet, an welcher die Dichtung 39 mit ihrer Oberseite anliegt. Im an den Anschlussflansch 60 angebauten Zustand des Filters 1, wie er in Figur 67 dargestellt ist, ist die Dichtung 39 in Axialrichtung soweit verpresst, dass sie sich radial nach außen und nach innen ausdehnt und sowohl axial als auch radial dichtet.

Durch den radial äußeren Teil der Grundplatte 16 zwischen deren Innengewinde 16' und deren Außengewinde 16" verlaufen mehrere in Umfangsrichtung der Grundplatte 16 verteilt angeordnete Öffnungen als Einlass 11 für zu filternde Flüssigkeit. Oberseitig ist der Einlass 11 mit einem Rücklaufsperrventil 15 abgedeckt. Zentral durch die Grundplatte 16 und den Gewindenippel 63 verläuft der Auslass 12 für gefilterte Flüssigkeit.

Auf der Grundplatte 16 ist oberseitig zentral ein Filterumgehungsventil 5 angeordnet, welches sich in den Stützkörper 37 hinein erstreckt. Ein einen Teil des Filterumgehungsventils 5 bildender, in seiner Grundform hohlzylindrischer Ventilhalter 58 ist an seinem unteren Ende mit der Grundplatte 16 fest verbunden, z. B. reibverschweißt. Der Ventilhalter 58 besteht hier aus zwei Teilen, nämlich einem ersten, unteren Halterteil 58.1, der fest mit der Grundplatte 16 verbunden ist, und einem zweiten, oberen Halterteil 58.2, der seinerseits mit dem ersten Halterteil 58.1 verbunden ist, hier durch eine Verrastung. Dabei bestehen hier die Halterteile 58.1 und 58.2 aus Kunststoff.

Im Ventilhalter 58 ist unten ein Ventilsitz 50 ausgebildet, der mit einem darüber im Ventilhalter 58 axial beweglich geführten Ventilkörper 51 zusammenwirkt. Über dem Ventilkörper 51 befindet sich im Ventilhalter 53 eine Feder 52, die auf den Ventilkörper 51 eine in dessen Schließrichtung wirkende Kraft ausübt, wenn der Filtereinsatz 3 in den Filter 1 eingebaut ist.

Oberhalb der Feder 52 ist hier im Ventilhalter 58 noch ein axial beweglicher Abdeckkörper 59 angeordnet, an dessen Unterseite das obere Ende der Feder 52 anliegt und an dessen Oberseite, solange der Filtereinsatz 3 in den Filter eingebaut ist, die Federstütze 53 mit ihren Stützarmen 53' anliegt, welche den Abdeckkörper 59 in einer von der Unterseite des oberen Ventilhalterendes beabstandeten Position halten. In dieser Stellung gibt der Abdeckkörper 59 einen Flüssigkeitsdurchlass 58" in einer oberen Stirnwand des Ventilhalters 58 für gefilterte Flüssigkeit in Richtung zum Auslass 12 frei. Bei dem gezeigten Beispiel ist der Flüssigkeitsdurchlass 58" durch mehrere in Umfangsrichtung verteilt angeordnete kleinere Öffnungen gebildet, die insgesamt den nötigen Strömungsquerschnitt zur Verfügung stellen.

Wenn der Filtereinsatz 3 aus dem Filter 1 entfernt ist, drückt die Feder 52 den Abdeckkörper 59 gegen die Stirnwand des Ventilhalters 58 und gegen den dortigen Flüssigkeitsdurchlass 58" und verschließt diesen. Hierdurch wird verhindert, dass Schmutzpartikel bei einer Filterwartung in den Auslass 12 für gefilterte Flüssigkeit fallen können.

Außerdem sorgt der Abdeckkörper 59 für eine günstige Verteilung der zwischen der Ventilfeder 52 und der Federstütze 53 wirkenden Kräfte.

Der Abdeckkörper 59 kann auch weggelassen werden, wenn bei der vorgesehenen Verwendung des Filters 1 die Schutzfunktion gegen Schmutzeinfall und die Funktion der Kräfteverteilung entbehrlich sind.

Am oberen Endbereich des Ventilhalters 58 ist schließlich noch ein radial nach innen weisender Anschlag 58' angeformt, der für eine Begrenzung der Bewegung des Abdeckkörpers 59 und des oberen Endes der Feder 52 nach oben hin, das heißt vom Ventilsitz 50 weg, sorgt.

Der Stützkörper 37 besitzt wieder die Federstütze 53, hier in Form mehrerer in Axialrichtung nach unten weisender Stützarme 53', die über den Innenumfang des Stützkörpers 37 verteilt sind. Aufgrund des abgewinkelten Verlaufs der Schnittebene ist in Figur 67 nur einer der Stützarme 53' in der linken Hälfte der Figur 67 sichtbar. Jeder Stützarm 53' taucht, geführt durch später noch beschriebene Positioniermittel, beim Zusammenbauen des Filters 1 von oben her durch eine passend positionierte und dimensionierte Einführöffnung 53" in der Oberseite des Ventilhalters 58 in diesen ein und gelangt so in Anlage an den Abdeckkörper 59 oder, wenn dieser nicht vorhanden ist, unmittelbar an das obere Ende der Feder 52. Dabei bilden die Stützarme 53' und die Einführöffnungen 53" eine Schlüssel-Schloss-Codierung, die nur das Einbauen eines passenden Filtereinsatzes 3 in den Filter 1 erlaubt.

Beim Anschrauben des Filtergehäuses 2, in welches zuvor der Filtereinsatz 3 eingesetzt wurde, an die Grundplatte 16 bewegt sich der Filtereinsatz 3 zusammen mit dem Gehäuse 2 in Richtung zur Grundplatte 16, wodurch die Stützarme 53' der Federstütze 53 die Feder 52 nach und nach stärker vorspannen, bis das Gehäuse 2 seine Endposition und damit die Feder 52 ihre End-Vorspannung erreicht hat. Die Feder 52 drückt nun den Ventilkörper 51 mit einer vorgebbaren Kraft in Schließrichtung gegen den Ventilsitz 50. Alle Teile des Filterumgehungsventils 5 sind dabei filterfest angeordnet, also nicht Teile des auswechselbaren Filtereinsatzes 3. Nur die Federstütze 53 ist Teil des auswechselbaren Filtereinsatzes 3.

Die Ventilmembran des Rücklaufsperrventils 15 ist an ihrem radial inneren Randbereich zwischen der Grundplatte 16 und dem unteren Halterteil 58.1 des Ventilhalters 58 eingeklemmt, was eigene Haltemittel für das Rücklaufsperrventil 15 entbehrlich macht.

Im Betrieb des Filters 1 strömt zu filternde Flüssigkeit durch einen Rohflüssigkeitskanal 62 im radial äußeren Teil des Anschlussflansches 60 und durch den Einlass 11 sowie durch das Rücklaufsperrventil 15 hindurch auf eine außen vom Filtereinsatz 3 liegende Rohseite 13 des Filters 1. Von dort strömt die Flüssigkeit unter Abscheidung von Feststoffpartikeln durch den Filterstoffkörper 30 des Filtereinsatzes 3 in Radialrichtung nach innen auf die Reinseite 14 des Filters 1. Von dort gelang die gefilterte Flüssigkeit durch das Innere des Stützkörpers 37, durch den Flüssigkeitsdurchlass 58" in den Ventilhalter 58, dann durch den zentralen Auslass 12 und durch das Innere des Gewindenippels 63 in einen Reinflüssigkeitskanal 61 im Anschlussflansch 60.

Falls die Druckdifferenz zwischen der Rohseite 13 und der Reinseite 14 des Filters 1 einen vorgebbaren Grenzwert überschreitet, wird der Ventilkörper 51 gegen die Kraft der Ventilfeder 52 von seinem Ventilsitz 50 abgehoben und es wird ein unmittelbarer Strömungsweg für die Flüssigkeit von der Rohseite 13 zur Reinseite 14 unter Umgehung des Filterstoffkörpers 30 des Filtereinsatzes 3 freigegeben.

Bei Stillstand des Flüssigkeitskreislaufs sorgt das Rücklaufsperrventil 15 dafür, dass keine Flüssigkeit aus dem Inneren des Filters 1 abfließt, so dass bei einem erneuten Start des Flüssigkeitskreislaufs eine unmittelbare Flüssigkeitsversorgung nachgeordneter Verbrauchsstellen mit gefilterter Flüssigkeit gewährleistet ist.

Figur 68 zeigt den Filter 1 aus Figur 67 im Querschnitt gemäß der Schnittlinie B - B in Figur 67. Außen ist in Figur 68 das Filtergehäuse 2 sichtbar, dessen Umfangswand 20 hier geschnitten ist. Radial innen davon liegt der Filtereinsatz 3, durch dessen Filterstoffkörper 30 der Schnitt verläuft. Über den Umfang des Filtereinsatzes 3 verteilt sind die vier Verbindungsstege 33 von oben sichtbar, die sich in Axialrichtung weiter nach unten hin erstrecken. Im Inneren des Filterstoffkörpers 30 liegt der diesen im Betrieb abstützende gitterförmige Stützkörper 37. Weiter radial innen davon ist der Ventilhalter 58 angeordnet, in welchem die Teile des Filterumgehungsventils 5 liegen, von denen hier nur ein Teil der Ventilfeder 52 sowie zentral ein Teil des Ventilkörpers 51 sichtbar sind. Mit der Schnittlinie A - A ist in Figur 68 veranschaulicht, wie der in Figur 67 gezeigte Längsschnitt durch den Filter 1 verläuft.

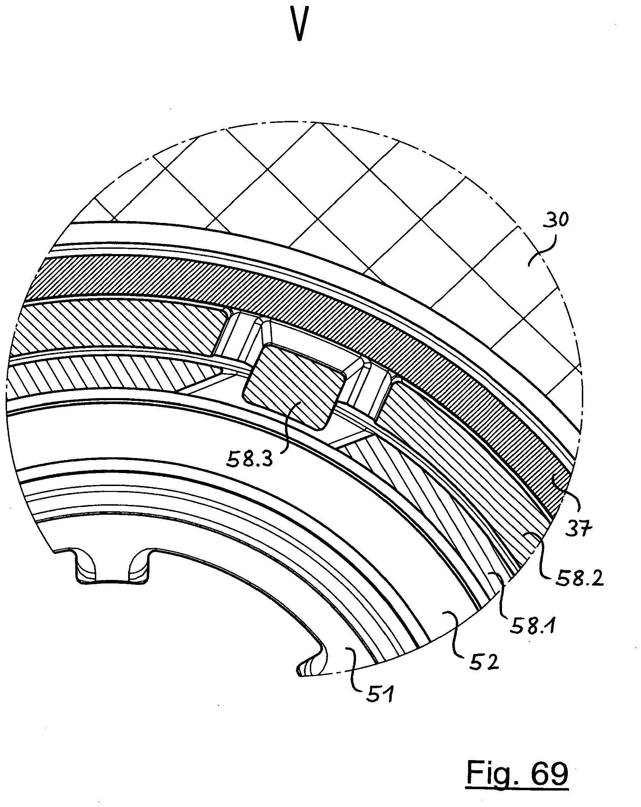

Figur 69 zeigt das Detail V des Filters 1 aus Figur 68 in vergrößerter Darstellung. Rechts oben in Figur 69 ist ein Teil des Filterstoffkörpers 30 des Filtereinsatzes 3 erkennbar. Darunter ist ein Abschnitt des Stützkörpers 37 sichtbar. Noch weiter nach unten ist dann ein Abschnitt des Ventilhalters 58 sichtbar, wobei hier erkennbar wird, dass der Ventilhalter 58 aus einem ersten Halterteil 58.1 und einen zweiten Halterteil 58.2 besteht, die über einen Teil ihrer Höhe ineinander gesteckt sind. Die beiden Halterteile 58.1 und 58.2 sind mittels Rastverbindungen 58.3 miteinander verbunden, von denen in Figur 69 eine im Schnitt sichtbar ist. Noch weiter unten ist schließlich ein Teil des Ventilkörpers 51 sichtbar.

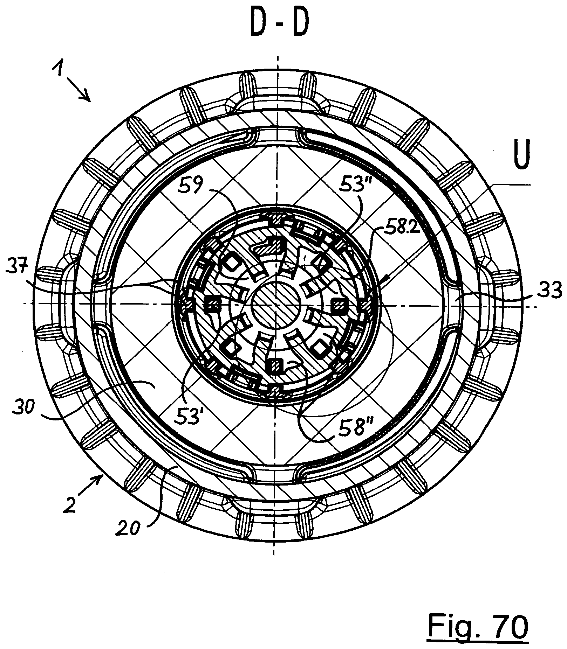

Figur 70 zeigt den Filter 1 aus Figur 67 im Querschnitt gemäß der Schnittlinie D - D in Figur 67. Auch hier ist radial außen wieder das Filtergehäuse 2 sichtbar, dessen Umfangswand 20 geschnitten ist. Radial innen davon liegt wieder der Filtereinsatz 3 mit dem Filterstoffkörper 30 und den sich axial nach unten hin erstreckenden Verbindungsstegen 33. Radial innen vom Filterstoffkörper 30 liegt der zugehörige Stützkörper 37. Wiederum radial innen davon ist der Ventilhalter 58 angeordnet. Wie die Figur 70 veranschaulicht, besitzt der Ventilhalter 58 an seiner hier sichtbaren Oberseite eine Anzahl von Einführöffnungen 53", durch welche die Stützarme 53' der Federstütze 53 des Filtereinsatzes 3 in das Innere des Ventilhalters 58 hineinragen. Außerdem ist neben den Einführöffnungen 53" in der Oberseite des Ventilhalters 58 ein Flüssigkeitsdurchlass 58" in Form mehrerer in Umfangsrichtung verteilt angeordneter Öffnungen vorhanden, durch welche im Betrieb des Filters 1 gefilterte Flüssigkeit strömt.

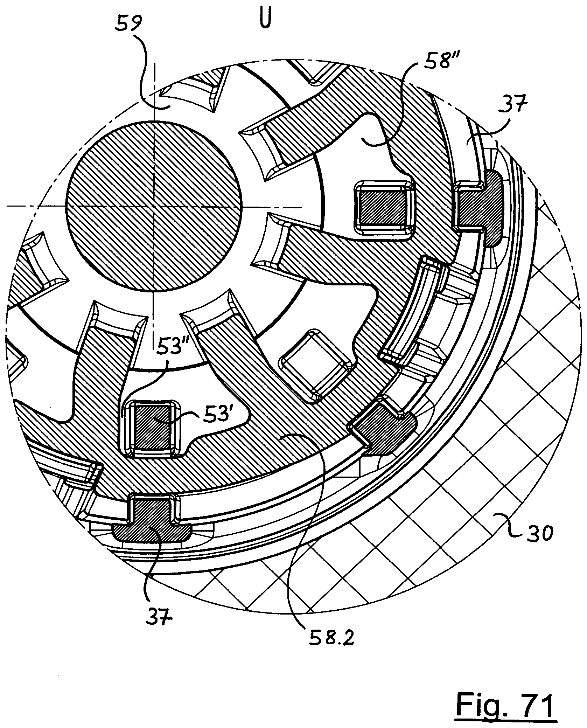

Figur 71 zeigt das Detail U des Filters 1 aus Figur 70 in vergrößerter Darstellung. Rechts unten ist ein Teil des Filterstoffkörpers 30 erkennbar. Radial innen, das heißt in Figur 71 links oben davon, ist ein Teil des Stützkörpers 37 sichtbar. Radial innen davon ist der obere Teil 58.2 des Ventilhalters 58 sichtbar, in dessen Oberseite die Einführöffnungen 53" für die Stützarme 53' und die den Flüssigkeitsdurchlass 58" bildenden Öffnungen erkennbar sind. Dabei bilden die Einführöffnungen 53" und die Stützarme 53' eine Schlüssel-Schloss-Codierung, welche nur das Einbauen eines bestimmten, die Stützarme 53' in einer passenden Anordnung, Anzahl und Formgebung aufweisenden Filtereinsatzes 3 in den Filter 1 gestattet.

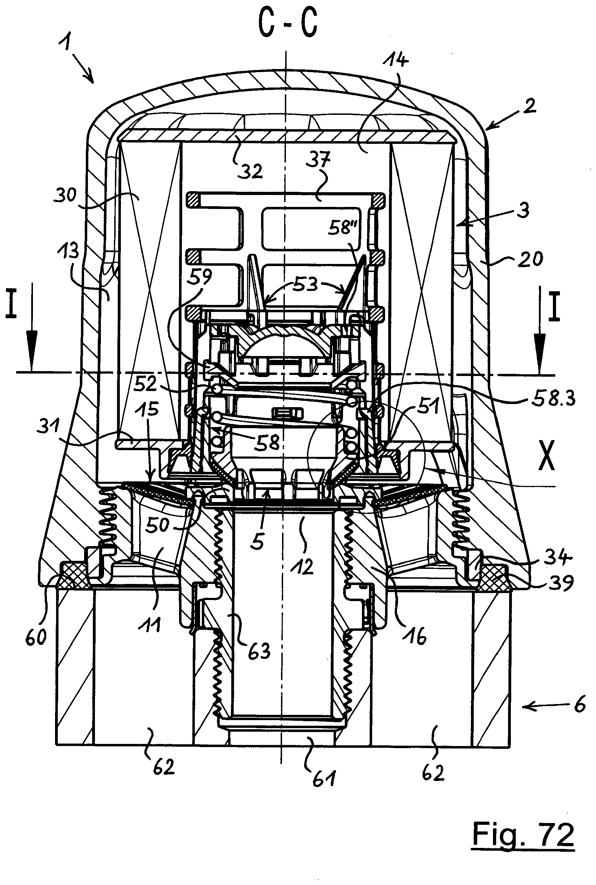

Figur 72 zeigt den Filter 1 aus Figur 67 in einem zweiten, gegenüber Figur 67 verdrehten Längsschnitt gemäß der Schnittlinie C - C in Figur 68. Im Inneren des Ventilhalters 58 sind hier der Ventilkörper 51, die Ventilfeder 52 und der Abdeckkörper 59 erkennbar. Die Stützarme 53' der Federstütze 53 des Filtereinsatzes 3 stehen in Anlage an der Oberseite des Abdeckkörpers 59 und drücken über diesen die Feder 52 zusammen. Hierdurch übt die Feder 52 eine in Schließrichtung wirkende vorgebbare Kraft auf den Ventilkörper 51 des Filterumgehungsventils 5 aus. Rechts oben am Ventilhalter 58 ist eine Öffnung des Flüssigkeitsdurchlasses 58" sichtbar, durch welche im Betrieb des Filters 1 gefilterte Flüssigkeit strömt.

Hinsichtlich der weiteren in Figur 72 erscheinenden Einzelteile und Bezugsziffern wird auf die vorhergehende Beschreibung verwiesen.

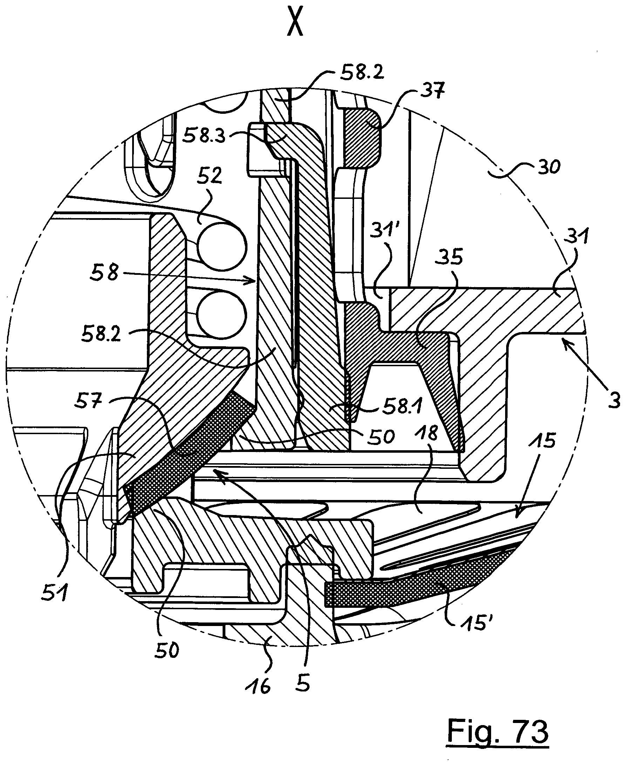

Figur 73 zeigt das Detail X des Filters 1 aus Figur 72 in vergrößerter Darstellung. Ganz unten ist ein kleiner Teil der Grundplatte 16 erkennbar, mit deren Oberseite der erste Halterteil 58.1 des Ventilhalters 58 fest verbunden, wie verschweißt, ist. Links unten in Figur 73 ist der Ventilsitz 50 sichtbar, der als Teil des ersten Halterteil 58.1 ausgebildet ist. Am Ventilsitz 50 liegt hier der in seiner Schließstellung befindlichen Ventilkörper 51 an, der an seiner dem Ventilsitz 50 zugewandten Oberfläche eine Elastomerauflage 57 zur Verbesserung der Dichtwirkung in Schließstellung trägt. Um einen oberen Teil des Ventilkörpers 51 herum verläuft die Feder 52 in Form einer Schraubendruckfeder. Radial außen, das heißt hier rechts von dem ersten Halterteil 58.1 ist ein Teil des zweiten Halterteils 58.2 erkennbar, wobei die Halterteile 58.1 und 58.2 mittels der Rastverbindungen 58.3, von denen in Figur 73 eine sichtbar ist, miteinander verbunden sind.

Radial außen vom Ventilkörper 53, das heißt in Figur 73 rechts davon, ist ein kleiner Teil des Filtereinsatzes 3 mit dem Filterstoffkörper 30, der unteren Stirnscheibe 31, dem Dichtkragen 35 und dem gitterförmigen Stützkörper 37 sichtbar. Zentral in der unteren Stirnscheibe 31 liegt die Öffnung 31', mittels welcher der Filtereinsatz 3 dichtend auf den zweiten Halterteil 58.2 des Ventilhalters 58 aufgesetzt ist.

Rechts unten in Figur 73 ist schließlich noch ein Teil des Rücklaufsperrventils 15 sichtbar, dessen Ventilmembran 15' an ihrem radial inneren Randbereich dichtend zwischen der Grundplatte 16 und dem Halterteil 58.1 des Ventilhalters 58 eingeklemmt ist.

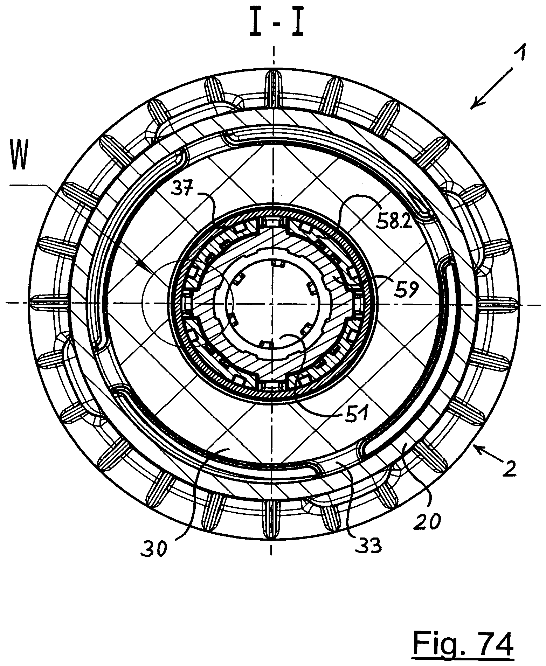

Figur 74 zeigt den Filter 1 aus Figur 72 im Querschnitt gemäß der Schnittlinie I - I in Figur 72. Radial außen liegt das Filtergehäuse 2 des Filters 1, wobei die Umfangswand 20 des Gehäuses 3 hier wieder geschnitten ist. Weiter radial innen ist der Filtereinsatz 3 mit dem hier geschnittenen Filterstoffkörper 30 sichtbar, der radial innen von dem Stützkörper 37 abgestützt ist. Radial innen vom Stützkörper 37 ist der Ventilhalter 58 sichtbar, in welchem der Abdeckkörper 59 liegt. Ganz im Zentrum der Figur 74 ist schließlich der Ventilkörper 51 teilweise von oben sichtbar.

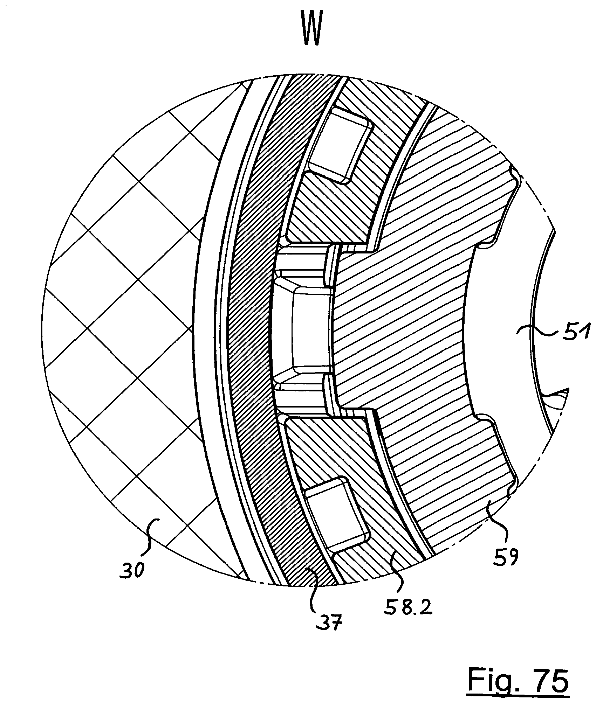

Figur 75 zeigt das Detail W des Filters 1 aus Figur 74 in vergrößerter Darstellung. Links ist ein Teil des Filterstoffkörpers 30 des Filtereinsatzes 3 sichtbar. Rechts davon verläuft der Stützkörper 37. Noch weiter nach rechts folgen dann Abschnitte des Ventilhalters 58 und des Abdeckkörpers 59, der in dem Ventilhalter 58 axial, das heißt senkrecht zur Zeichnungsebene der Figur 75, verschiebbar geführt ist, in Umfangsrichtung aber mittels ineinander greifender Konturen gegen Verdrehen gesichert ist.

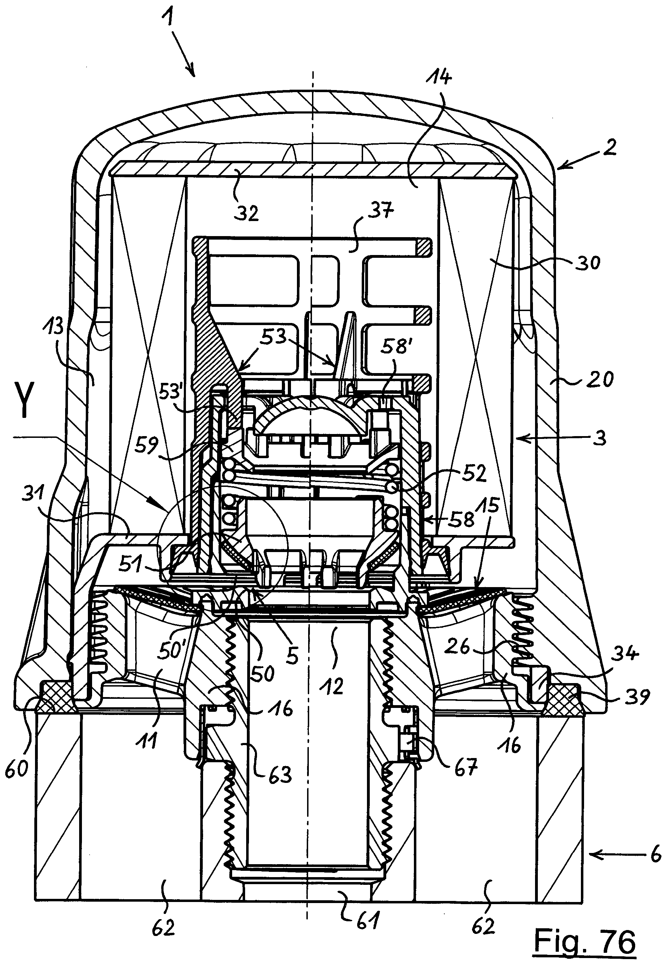

Figur 76 zeigt den Filter 1 in gleicher Darstellung wie in Figur 67, nun aber mit dem Filterumgehungsventil 5 in Öffnungsstellung. Der in Figur 76 gezeigte Zustand des Filterumgehungsventils 5 stellt sich ein, wenn im Filter 1 zwischen dessen Rohseite 13 und Reinseite 14 eine Druckdifferenz herrscht, die einen vorgebbaren Grenzwert überschreitet, beispielsweise bei Verstopfung des Filterstoffkörpers 30 des Filtereinsatzes 3 mit zuvor abgefilterten Schmutzpartikeln. In diesem Fall übt die Flüssigkeit auf der Rohseite 13 des Filters 1 auf den Ventilkörper 51 des Filterumgehungsventils 5 eine in Öffnungsrichtung wirkende Kraft aus, die größer ist als die von der Ventilfeder 52 in Schließrichtung ausgeübte Kraft. Die in Öffnungsrichtung wirkende Kraft verschiebt den Ventilkörper 51 in Richtung von seinem Ventilsitz 50 weg, wodurch eine unmittelbare Strömungsverbindung von der Rohseite 13 zur Reinseite 14 des Filters 1 durch eine Ventildurchlassöffnung 50' unter Umgehung des Filterstoffkörpers 30 freigegeben wird. Sobald die Druckdifferenz zwischen Rohseite 13 und Reinseite 14 unter den vorgebbaren Grenzwert abfällt, überwiegt wieder die Kraft der Ventilfeder 52, so dass dann der Ventilkörper 51 wieder in seine Schließstellung bewegt wird, in der er am Ventilsitz 50 dichtend anliegt.

Hinsichtlich der weiteren Einzelteile und Bezugsziffern in Figur 76 wird auf die vorhergehende Beschreibung verwiesen.

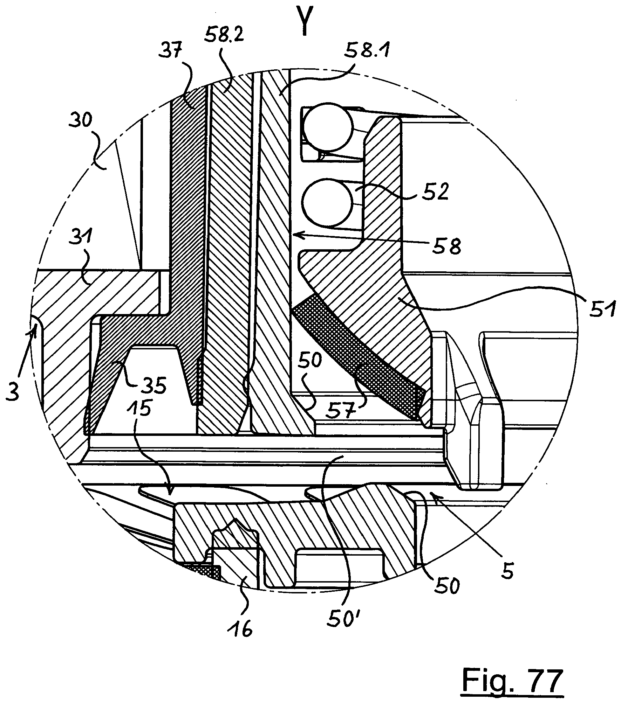

Figur 77 zeigt das Detail Y des Filters 1 aus Figur 76 in vergrößerter Darstellung. Rechts in Figur 77 ist der Ventilkörper 51 mit der Elastomerauflage 57 teilweise sichtbar, der von seinem Ventilsitz 50 Abstand aufweist, wodurch die Ventildurchlassöffnung 50' des Filterumgehungsventils 5 freigegeben ist. Somit besteht hier eine unmittelbare Strömungsverbindung von der Rohseite 13 zur Reinseite 14 des Filters 1. Oben in Figur 77 ist ein Teil der Ventilfeder 52 sichtbar, die hier durch die von der Druckdifferenz zwischen Rohseite 13 und Reinseite 14 erzeugte Kraft komprimiert ist. Links vom Ventilkörper 51 und von der Feder 52 sind die Halterteile 58.1 und 58.2 des Ventilhalters 58 sichtbar. Weiter links davon ist noch ein kleiner Teil des Filtereinsatzes 3 sichtbar. Unten in Figur 77 ist schließlich ein kleiner Teil der Grundplatte 16 sichtbar, welche oberseitig den Ventilhalter 58 mit dem Filterumgehungsventil 5 und das hier nur zu einem kleinen Teil sichtbare Rücklaufsperrventil 15 trägt.

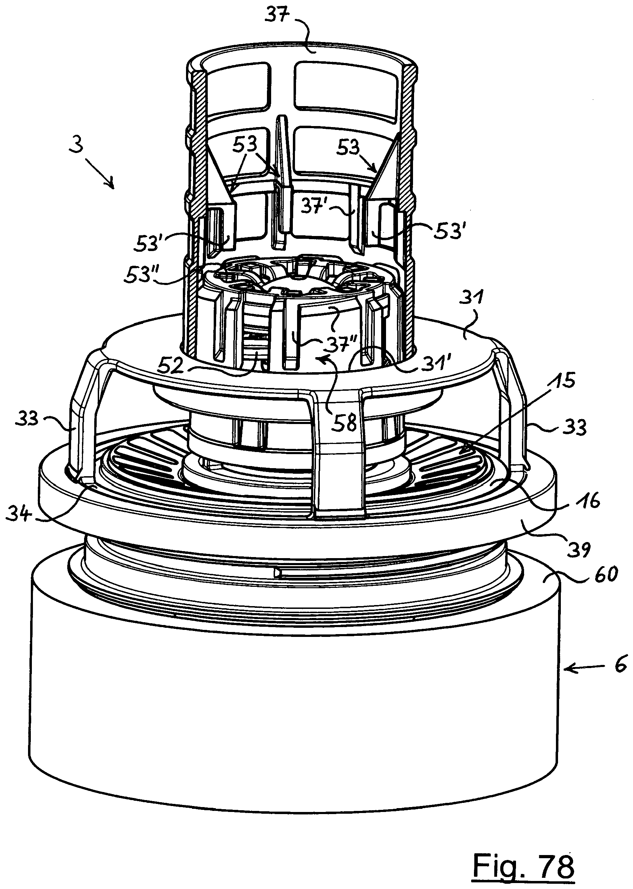

Die Figuren 78 bis 81 zeigen den Filteranschlussflansch 60 mit der daran angebrachten Grundplatte 16 zusammen mit dem Ventilhalter 58 und mit einem aus Übersichtlichkeitsgründen nur teilweise dargestellten Filtereinsatz 3 in verschiedenen Phasen des Einbauens des Filtereinsatzes 3. Dabei sind hier vom Filtereinsatz 3 jeweils nur dessen untere Stirnscheibe 31 mit den Verbindungsstegen 33, dem Dichtungsträger 34 und der Dichtung 39 in Ansicht sowie der gitterförmige Stützkörper 37 im Längsschnitt dargestellt.

Figur 78 zeigt den Filteranschlussflansch 60 mit der daran angeschraubten Grundplatte 16 des Filters 1 in Ansicht und mit dem Filtereinsatz 3 in einer ersten Phase des Einbauens des Filtereinsatzes 3 bei einer Filterwartung. Wie zuvor schon beschriebenen, weist der Filtereinsatz 3 eine Federstütze 53 mit mehreren Stützarmen 53' auf, die durch Einführöffnungen 53" im Ventilhalter 58 in dessen Inneres eintreten. Damit die Stützarme 53' zuverlässig in die in Umfangsrichtung gesehen dafür passende Position gelangen, sind am Filtereinsatz 3 zusätzlich zu den Stützarmen 53' erste Positionierelemente 37' vorgesehen, welche mit zweiten Positionierelementen 37" am Ventilhalter 58 zusammenwirken. Die ersten Positionierelemente 37' sind hier am Innenumfang des Stützkörpers 37 zwischen den Stützarmen 53' angeordnet und haben die Form von in Axialrichtung verlaufenden, radial nach innen vorstehenden länglichen Rippen oder Stegen. Die zweiten Positionierelemente 37" sind jeweils durch eine in Umfangsrichtung des Ventilhalters 58 am oberen Ende von dessen Außenumfang verlaufende abfallende Schräge, die in eine axiale Nut am Außenumfang des Ventilhalters 58 übergeht, gebildet. In Figur 78 ist der Filtereinsatz 3 gerade mittels der zentralen Öffnung 31' seiner unteren Stirnscheibe 31 in einer in Umfangsrichtung betrachtet beliebigen Stellung von oben her auf den Ventilhalter 58 aufgesetzt, wobei hier die Stützarme 53' und die ersten Positionierelemente 37' noch nicht in Kontakt mit dem Ventilhalter 58 getreten sind.

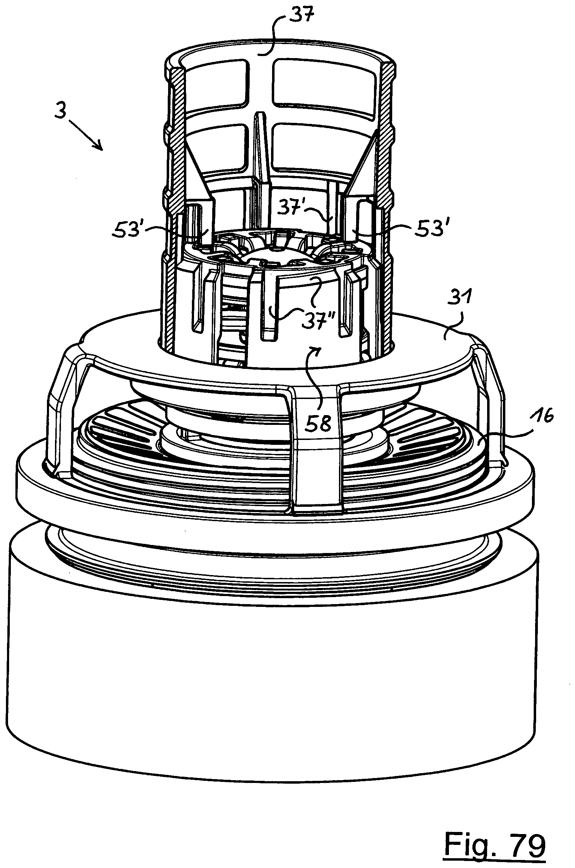

Figur 79 zeigt den Gegenstand der Figur 78 in gleicher Darstellung, nun in einer zweiten Phase des Einbauens des Filtereinsatzes 3. Der Filtereinsatz 3 ist nun relativ zum Ventilhalter 58 weiter nach unten bewegt, wodurch die ersten Positionierelemente 37' in Kontakt mit den zweiten Positionierelementen 37" gelangt sind. Dabei liegen die ersten Positionierelemente 37' mit ihrem nach unten weisenden Stirnende in Umfangsrichtung gesehen an irgendeiner Stelle der einen Teil der zweiten Positionierelemente 37" bildenden Schrägen oben am Ventilhalter 58 an.

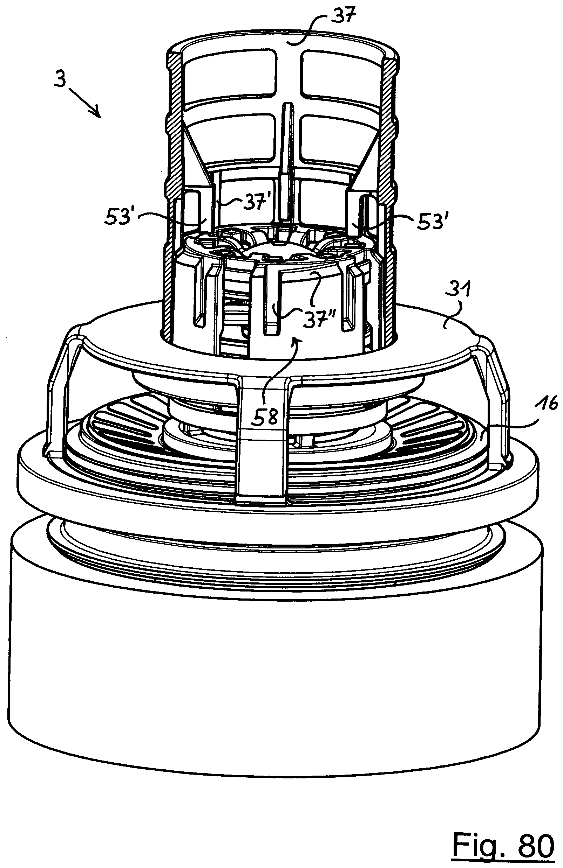

Figur 80 zeigt den Gegenstand der Figuren 78 und 79 in gleicher Darstellung, nun in einer dritten Phase des Anbauens des Filtereinsatzes 3. Der Filtereinsatz 3 ist nun infolge eines Verdrehens in Umfangsrichtung, welches zweckmäßig zusammen mit der Drehbewegung des hier nicht dargestellten Filtergehäuses 2 bei dessen Anschrauben an die Grundplatte 16 erfolgt, in eine Position gelangt, in der die ersten Positionierelemente 37' am unteren Ende der Schrägen der zweiten Positionierelemente 37" angelangt sind und nun in Axialrichtung gesehen exakt über der vertikalen Nut als zweitem Teil der zweiten Positionierelemente 37" stehen. Ein weiteres Verdrehen des Stützkörpers 37 mit den ersten Positionierelementen 37' relativ zum Ventilhalter 58 ist nun nicht mehr möglich. Aus diesem Grund ist der Stützkörper 37 hier relativ zu der unteren Stirnscheibe 31 des Filtereinsatzes 3 verdrehbar im Filtereinsatz 3 angeordnet.

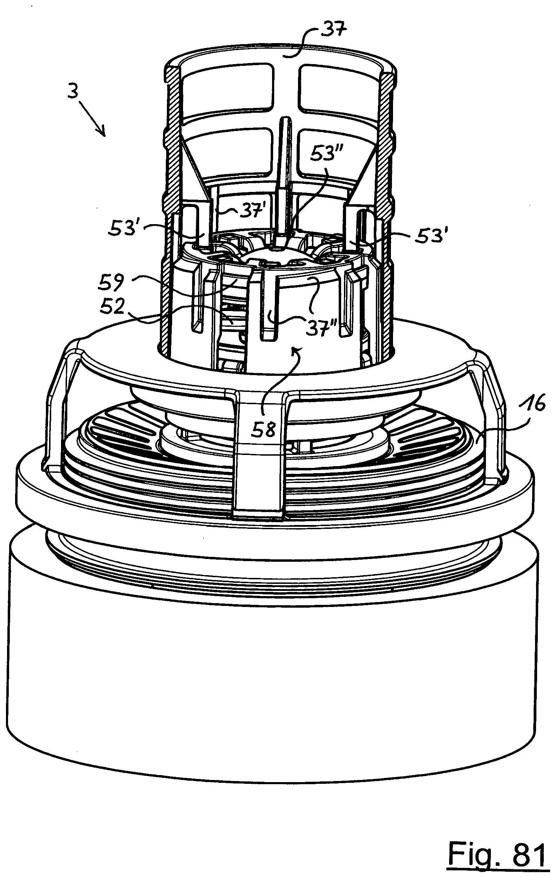

Figur 81 zeigt den Gegenstand der Figuren 78 bis 80 in gleicher Darstellung, nun in einer vierten Phase des Einbauens des Filtereinsatzes 3. Die ersten Positionierelemente 37' tauchen nun in die Teil der zweiten Positionierelemente 37" bildenden axialen Nuten am Außenumfang des Ventilhalters 58 ein. Gleichzeitig treten die Stützarme 53' der Federstütze 53 durch für diese vorgesehene Einführöffnungen 53" in das Innere des Ventilhalters 58 ein und bewegen den dort angeordneten, weiter oben schon erläuterten Abdeckkörper 59 nach unten und spannen so die Ventilfeder 52 des Filterumgehungsventils 5 vor. Die gegenseitige passende Findung von Stützkörper 37 und Ventilhalter 58 wird also selbsttätig bewirkt, ohne dass vom Wartungspersonal eine besondere Aufmerksamkeit hinsichtlich der gegenseitigen Positionierung der genannten Teile erforderlich ist.

Dadurch, dass separate Positionierelemente 37' am Filtereinsatz 3 vorgesehen sind, werden die Stützarme 53' der Federstütze 53 von allen mit der Positionierung zusammenhängenden, insbesondere in Umfangsrichtung wirkenden, Kräften entlastet.

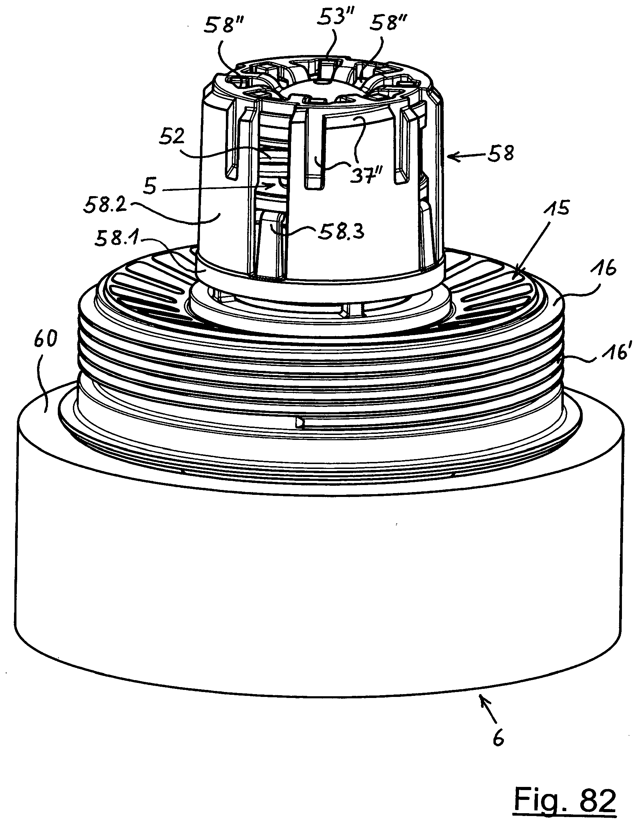

Figur 82 zeigt den Filteranschlussflansch 60 mit der daran angeschraubten Grundplatte 16 des Filters 1 und mit dem Ventilhalter 58 in Ansicht, ohne Filtereinsatz 3 und ohne Filtergehäuse 2. Unten in Figur 82 ist ein Teil der den Filter 1 aufweisenden Vorrichtung 6 mit dem Anschlussflansch 60 dargestellt, mit welchem die Grundplatte 16 des Filters 1 verbunden ist. Die Grundplatte 16 besitzt an ihrem Außenumfang das Außengewinde 16', welches zum Anschrauben des hier nicht dargestellten Filtergehäuses 2 dient. An der Oberseite der Grundplatte 16 ist radial außen das Rücklaufsperrventil 15 angeordnet. Zentral ist auf der Grundplatte 16 der Ventilhalter 58 mit dem darin untergebrachten Filterumgehungsventil 5 angebracht. Der Ventilhalter 58 ist aus den beiden Halterteilen 58.1 und 58.2 zusammengesetzt, die über die Rastverbindungen 58.3 miteinander verbunden sind. An der Oberseite des Ventilhalters 58 sind zum einen die Einführöffnungen 53" für die Stützarme 53' der Federstütze 53 und zum anderen der Flüssigkeitsdurchlass 58" für gefilterte Flüssigkeit erkennbar. Im oberen Bereich des Außenumfangs des Ventilhalters 58 befinden sich die zuvor schon beschriebenen zweiten Positionierelemente 37".

Im gezeigten Beispiel sind jeweils vier Stützarme 53' und jeweils vier erste und zweite Positionierelemente 37' und 37" vorgesehen; es ist aber auch eine kleinere oder größere Anzahl möglich.

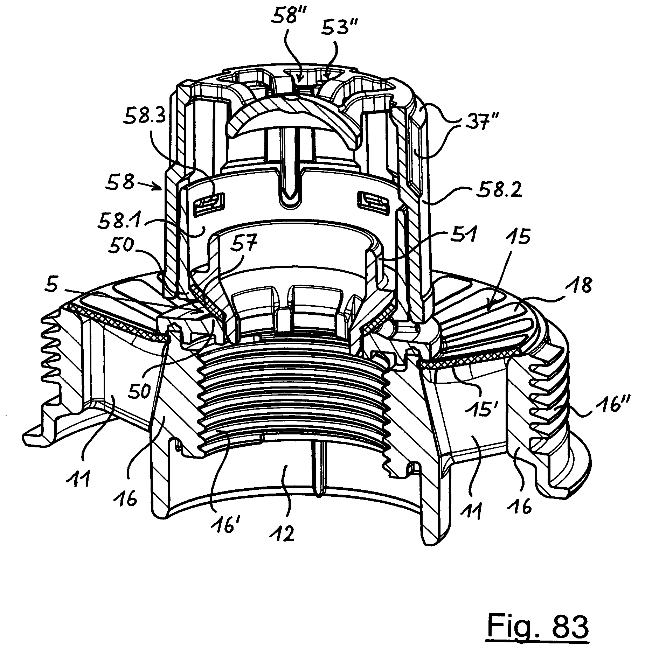

Figur 83 zeigt die Grundplatte 16 des Filters 1 mit dem Ventilhalter 58 und dem Ventilkörper 51 und mit dem Rücklaufsperrventil 15, jedoch ohne Ventilfeder 52 und Abdeckkörper 59, in einer geschnittenen Ansicht. Die unten in Figur 83 sichtbare Grundplatte 16 besitzt an ihrem Innenumfang das Innengewinde 16', welches zum Anschrauben der Grundplatte 16 an dem hier nicht dargestellten Anschlussflansch 60 dient.

An ihrem Außenumfang besitzt die Grundplatte 16 das Außengewinde 16", welches zum Anschrauben des hier ebenfalls nicht dargestellten Filtergehäuses 2 dient. Unterhalb des Außengewindes 16" verläuft ein radial nach außen vorragender äußerer Randvorsprung der Grundplatte 16.

Durch den zwischen dem Innengewinde 16' und dem Außengewinde 16" liegenden Bereich der Grundplatte 16 verlaufen die den Einlass 11 bildenden Öffnungen für die Zuführung zu filternder Flüssigkeit. Oberseitig ist der Einlass 11 durch das Rücklaufsperrventil 15 abgedeckt. Die Ventilmembran 15' des Rücklaufsperrventils 15 ist an ihrem inneren Randbereich an der Grundplatte 16 gehaltert, indem von oben her ein unterer Randbereich des Ventilhalters 58 den Randbereich einklemmt. Zentral durch die Grundplatte 16 verläuft der Auslass 12.

Mit der Oberseite der Grundplatte 16 ist der Ventilhalter 58 fest verbunden. Der Ventilhalter 58 besteht aus den beiden Halterteilen 58.1 und 58.2, die miteinander über die Rastverbindungen 58.3 verbunden sind. In Inneren des Ventilhalters 58 ist der Ventilkörper 51 des Filterumgehungsventils 5 in Axialrichtung beweglich geführt. Der Ventilkörper 51 wirkt mit dem unten am Ventilhalter 58 ausgebildeten Ventilsitz 50 zusammen.

In der oberen Stirnseite des Ventilhalters 58 sind die Einführöffnungen 53" für die Stützarme 53' und der Flüssigkeitsdurchlass 58" für gefilterte Flüssigkeit erkennbar. Am axial oberen Endbereich des Außenumfangs des Ventilhalters 58 ist rechts in Figur 83 eines der zweiten Positionierelemente 37" sichtbar.

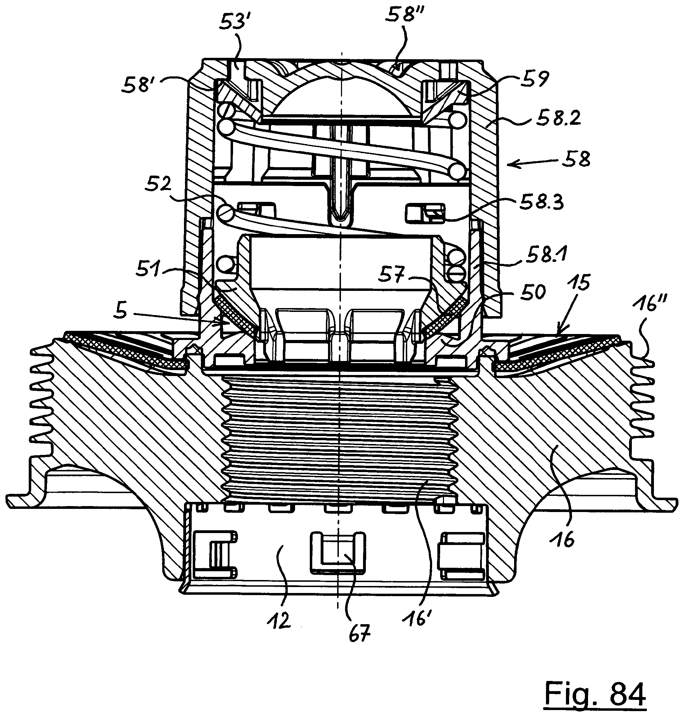

Figur 84 zeigt die Grundplatte 16 des Filters 1 mit den Teilen gemäß Figur 83 und zusätzlich mit der Ventilfeder 52 und dem Abdeckkörper 59 im Längsschnitt. Dabei ist hier ein Zustand gezeigt, der sich einstellt, wenn der Filtereinsatz 3 entfernt ist. In diesem Zustand ist die Ventilfeder 52 nicht von der Federstütze 53 mit ihren Stützarmen 53' vorgespannt, so dass sich die Ventilfeder 52 auf ihre durch den Ventilhalter 58 vorgegebene maximale Länge ausdehnen kann. Dies führt dazu, dass nun der Abdeckkörper 59 in eine nach oben verschobene Position gelangt ist, in der er an einem Anschlag 58' am oberen Ende des Ventilhalters 58 anliegt. In dieser Stellung verschließt der Abdeckkörper 59 alle den Flüssigkeitsdurchlass 58" bildenden Öffnungen in der oberen Stirnseite des Ventilhalters 58. Somit ist gewährleistet, dass in diesem Zustand ein störendes oder schädliches Hineinfallen von Schmutzpartikeln durch den Flüssigkeitsdurchlass 58" in den Auslass 12 für gefilterte Flüssigkeit bei einer Filterwartung nicht möglich ist.

Zentral in der Grundplatte 16 sind wieder der Auslass 12 und das darin angeordnete Innengewinde 16' sichtbar. Im unteren Bereich des Auslasses 12 sind Elemente der Losdrehsicherung 67 sichtbar, welche dafür sorgt, dass die Grundplatte 16 nach ihrem Anschrauben an den Gewindenippel 63 des Anschlussflansches 60 bei der Erstmontage des Filters 1 an diesem fixiert ist und nicht mehr abschraubbar ist.

Auf dem radial äußeren Teil der Oberseite der Grundplatte 16 ist wieder das Rücklaufsperrventil 15 sichtbar.

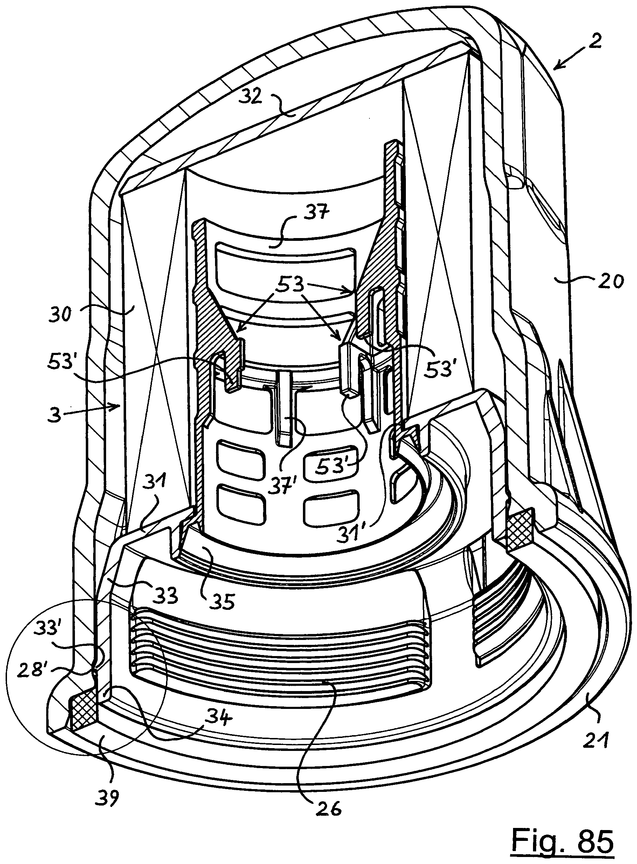

Figur 85 zeigt das Filtergehäuse 2 mit darin angeordnetem Filtereinsatz 3 in einer längs geschnittenen Ansicht. Radial außen ist das Schraubgehäuse 2 des Filters 1 mit der Umfangswand 20 erkennbar. Im Inneren des Filters 1 ist der Filtereinsatz 3 mit seinen zuvor schon beschriebenen Einzelteilen angeordnet. Im Inneren des Filterstoffkörpers 30 des Filtereinsatzes 3 ist der Stützkörper 37 angeordnet, der an seinem Innenumfang die Federstütze 53 mit den in Umfangsrichtung verteilten Stützarmen 53' und die ersten Positionierelemente 37' einstückig angeformt aufweist. Der Stützkörper 37 ist hier von unten her durch die zentrale Öffnung 31' in der unteren Stirnscheibe 31 in das Innere des Filtereinsatzes 3 und des Filterstoffkörpers 30 eingeführt und stützt den Filterstoffkörper 30 im Betrieb des Filters 1 radial innen gegen ein Zusammenfallen ab. Der Stützkörper 37 endet hier in einem Abstand von der oberen Stirnscheibe 32; er kann alternativ aber auch bis zu dieser Stirnscheibe 32 geführt sein.

Vom radial äußeren Rand der unteren Stirnscheibe 31 des Filtereinsatzes 3 gehen die vier gleichmäßig in Umfangsrichtung voneinander beabstandeten Verbindungsstege 33 in Axialrichtung nach unten hin ab. Am Innenumfang der Umfangswand 20 des Filtergehäuses 2 ist nahe deren unterer Stirnseite 21 das Innengewinde 26 vorgesehen. Auf der radial nach außen weisenden Oberfläche der Verbindungsstege 33 ist etwas oberhalb des umlaufenden Dichtungsträgers 34 jeweils ein Wulst oder Rastnocken 33' angeformt, welcher im Zusammenwirken mit einer Rasteintiefung 28' am Innenumfang der Umfangswand 20 zu einer leicht lösbaren Verrastung des Filtereinsatzes 3 im Filtergehäuse 2 dient. Der Filtereinsatz 3 ist somit mittels seiner Verbindungsstege 33 relativ zum Schraubgehäuse 3 in seiner Position definiert festgelegt.

An ihrem axial unteren Ende gehen die Verbindungsstege 33 in den hier einstückig damit ausgeführten, umlaufenden Dichtungsträger 34 über, auf dem der Dichtring 39 angeordnet ist.

Die in Figur 85 dargestellte Einheit aus Filtergehäuse 2 und Filtereinsatz 3 wird bei einer Filterwartung vom Anschlussflansch 60 beziehungsweise von der daran dauerhaft angebrachten Grundplatte 16 abgeschraubt. Alle Teile des Filterumgehungsventils 5 mit Ausnahme der Federstütze 53 verbleiben dabei an der Grundplatte 16, sind also filterfeste Elemente. Danach kann der verbrauchte Filtereinsatz 3 aus dem Gehäuse 2 herausgezogen und durch einen frischen Filtereinsatz 3 ersetzt werden. Da die Dichtung 39 Teil des Filtereinsatzes 3 ist, wird dabei auch die Dichtung 39 automatisch mit erneuert. Nach Anschrauben der Einheit aus dem Gehäuse 2 und dem frischen Filtereinsatz 3 an die Grundplatte 16 ist der Filter 1 wieder betriebsbereit.

Bezüglich der weiteren in Figur 85 dargestellten Einzelteile und Bezugsziffern wird auf die vorhergehende Beschreibung verwiesen.

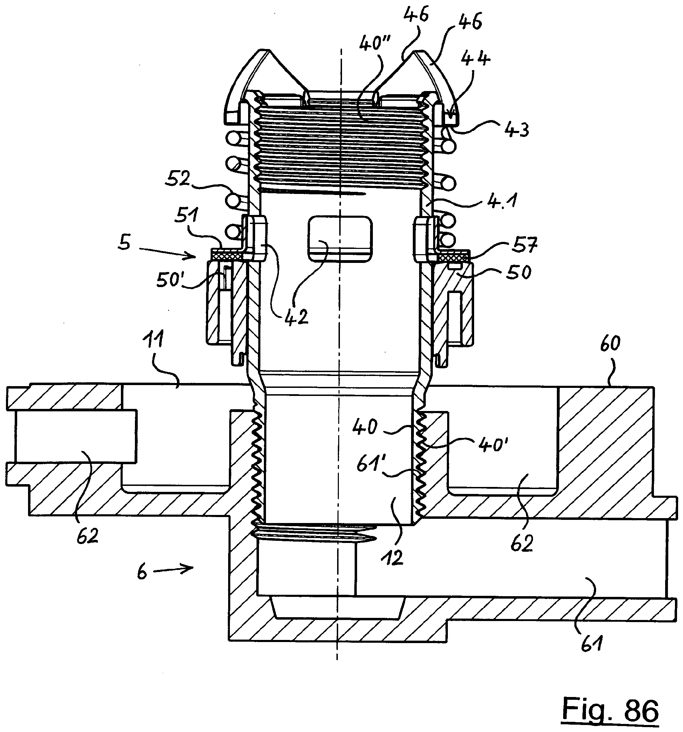

Figur 86 zeigt ein Filterumgehungsventil 5 des Filters 1 in einer geänderten Ausführung, zusammen mit einem Anschlussflansch 60, im Längsschnitt. Dieses Filterumgehungsventil 5 ist vorgesehen für einen Filter 1 mit einem aus zwei Rohrstutzenabschnitten 4.1 und 4.2 bestehenden zentralen Rohrstutzen 4, wie weiter oben schon beschrieben. Sichtbar ist in Figur 86 nur der flanschseitige Rohrstutzenabschnitt 4.1, der hier in seinem unteren Endbereich 40 mit einem äußeren Schraubgewinde 40' versehen ist, mit welchem der Rohrstutzenabschnitt 4.1 dauerhaft in ein Innengewinde 61' zentral im Anschlussflansch 60 eingeschraubt ist. Einen Gewindenippel, wie bei einigen zuvor beschriebenen Ausführungsbeispielen vorgesehen, gibt es hier also nicht.

Auf einem in Längsrichtung gesehen mittleren Bereich des Rohrstutzenabschnitts 4.1 sitzt in Axialrichtung unverschiebbar der ringförmige Ventilsitz 50 mit Durchlassöffnungen 50', die parallel zur Längsrichtung des Rohrstutzenabschnitts 4.1 verlaufen. Auf der Oberseite des Ventilsitzes 50 liegt der ebenfalls ringförmige Ventilkörper 51, der in Axialrichtung des Rohrstutzenabschnitts 4.1 auf diesem verschieblich geführt ist. An seiner dem Ventilsitz 50 zugewandten Seite trägt der Ventilkörper 51 eine Elastomerauflage 57 zur Verbesserung der Dichtwirkung im geschlossenen Zustand des Filterumgehungsventils 5. Oberhalb des Ventilkörpers 51 ist die den Rohrstutzenabschnitt 4.1 umgebende Feder 52 angeordnet, welche hier mangels Vorhandenseins des Filtereinsatzes 3 mit ihrem oberen Ende an dem Anschlag 43 anliegt. Oberseitig besitzt der Anschlag 43 mehrere dachförmige und in Umfangsrichtung des Rohrstutzenabschnitts 4.1 angeordnete Einführschrägen 46, zwischen denen jeweils Zwischenräume 44 zum Hindurchführen der Stützarme 53' der Federstütze 53 liegen.

Wie die Figur 86 weiter veranschaulicht, überdeckt der Ventilkörper 51 in seiner dargestellten Schließstellung im Rohrstutzenabschnitt 4.1 angebrachte Durchbrechungen 42. Wenn sich der Ventilkörper 51 in seiner Öffnungsstellung befindet, also relativ zum Ventilsitz 50 nach oben verschoben ist, werden die Durchbrechungen 42 zumindest teilweise freigegeben, wodurch ein sehr kurzer unmittelbarer Strömungsweg vom Einlass 11 zum Auslass 12 unter Umgehung des Filtereinsatzes 3 freigegeben wird.

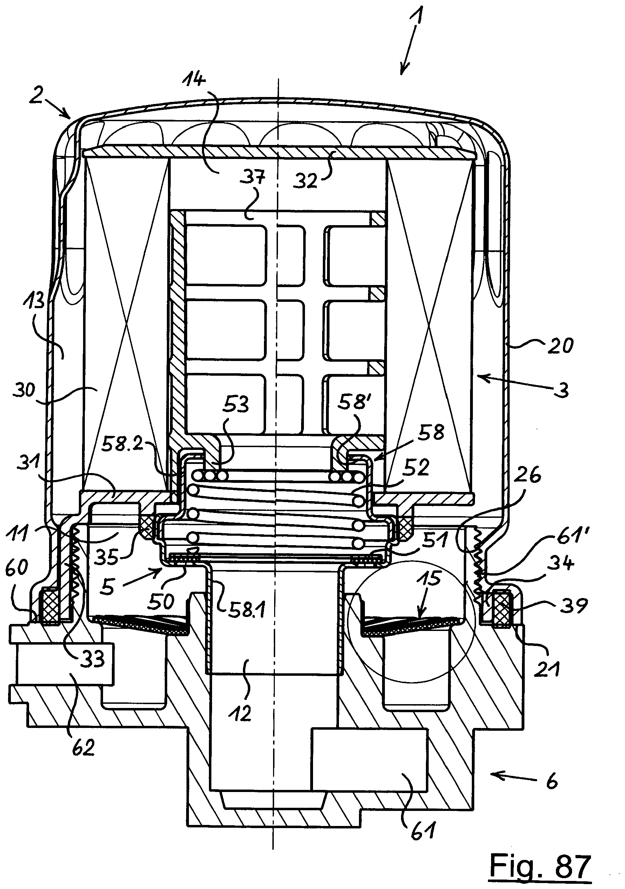

Figur 87 zeigt den Filter 1 in einer weiteren Ausführung im Längsschnitt. In weiten Teilen entspricht der Filter 1 dem Ausführungsbeispiel nach Figur 66, wobei insbesondere das Filtergehäuse 2 und der Filtereinsatz 3 bei beiden Beispielen identisch sind. Unterschiedlich ist bei den beiden Ausführungsbeispielen, dass der Filter 1 nach Figur 87 keine Grundplatte aufweist und für einen Anschlussflansch 60 ohne zentralen Gewindenippel ausgelegt ist. Statt des zentralen Gewindenippels hat der Anschlussflansch 60 in Figur 87 radial außen einen Kragen mit einem Außengewinde 61', mit welchem ein Innengewinde 26 am Filtergehäuse 2 verschraubbar ist. Abgedichtet wird diese Schraubverbindung durch den Dichtring 39.

Wie alle anderen Ausführungsbeispiele besitzt auch der Filter 1 nach Figur 87 ein Filterumgehungsventil 5, welches hier wieder in einem Ventilhalter 58 angeordnet ist. Der Ventilhalter 58 ist hier wieder zweiteilig mit einem ersten, unteren Halterteil 58.1 und einem zweiten, oberen Halterteil 58.2 ausgeführt, die hier beispielsweise Blechteile sind. Der unteren Halterteil 58.1 besitzt einen nach unten vorragenden hohlzylindrischen Abschnitt, welcher den Auslass 12 bildet und in eine passend geformte und bemaßte Öffnung im Zentrum des Anschlussflansches 60 eingepresst ist. Nach der Erstmontage sitzt also der Ventilhalter 58 im Presssitz im Anschlussflansch 60, aus dem er im normalen Betrieb des Filters 1 nicht mehr gelöst wird. In seinen übrigen Teilen und Funktionen entspricht das Filterumgehungsventil 5 in Figur 87 dem Filterumgehungsventil 5, welches in Figur 64 schon beschrieben wurde. Hinsichtlich der sonstigen in Figur 87 dargestellten Teile und eingetragenen Bezugsziffern wird auf die vorhergehende Beschreibung verwiesen.

Ein Rücklaufsperrventil 15 ist hier unmittelbar am Anschlussflansch 60 angebracht und somit hier nicht integraler Bestandteil des Filters 1.

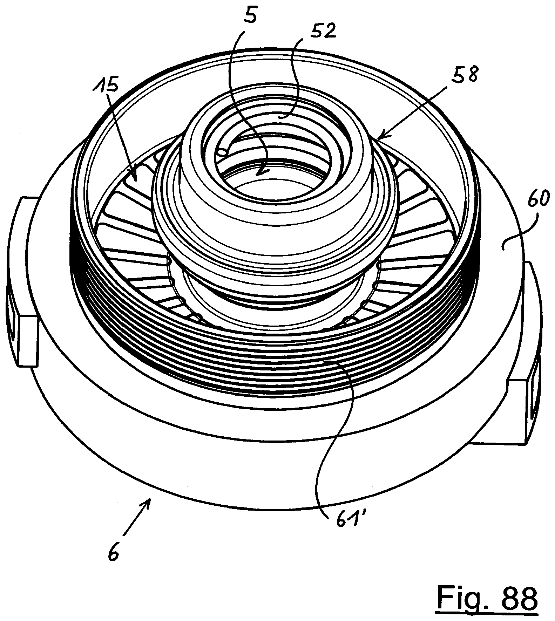

Figur 88 zeigt das Filterumgehungsventil 5 und das Rücklaufsperrventil 15 aus Figur 87 im mit dem Anschlussflansch 60 verbundenen Zustand in Ansicht schräg von oben, wobei hier das Filtergehäuse 2 und der Filtereinsatz 3 vom Anschlussflansch 60 abgeschraubt sind. Auf der Oberseite des Anschlussflansches 60 ist radial außen dessen Kragen mit dem Außengewinde 61' sichtbar. Radial innen davon ist das hier unmittelbar am Anschlussflansch 60 angebrachte Rücklaufsperrventil 15 sichtbar. Im Zentrum des Anschlussflansches 60 ist der Ventilhalter 58 mit dem darin angeordneten Filterumgehungsventil 5 angebracht, von dem nur die Feder 52 unmittelbar sichtbar ist.

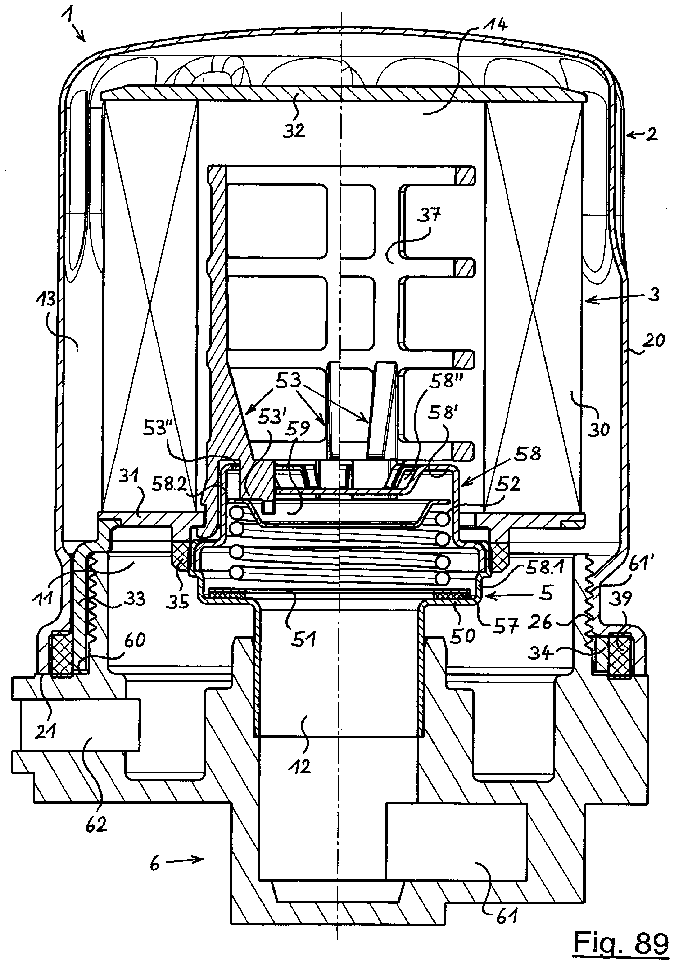

Figur 89 zeigt den Filter 1 in einer weiteren Ausführung im Längsschnitt, wobei dieser Filter 1 in weiten Teilen dem Ausführungsbeispiel nach Figur 87 entspricht. Unterschiedlich zu dem Beispiel nach Figur 87 ist bei dem Beispiel nach Figur 89, dass im Ventilhalter 58 zusätzlich ein Abdeckkörper 59 angeordnet ist. Der Abdeckkörper 59 liegt zwischen dem oberen Ende der Feder 52 des Filterumgehungsventils 5 und der Unterseite des oberen Stirnendes des Ventilhalters 58. Im zusammengebauten, betriebsbereiten Zustand des Filters 1, wie ihn die Figur 89 zeigt, greifen die Stützarme 53' der Federstütze 53 des Filtereinsatzes 3 von oben her durch die Einführöffnungen 53" des Ventilhalters 58 in diesen hinein und drücken über den Abdeckkörper 59 auf die Feder 52. Hierdurch wird die Feder 52 vorgespannt und übt auf den Ventilkörper 51 des Filterumgehungsventils 5 eine vorgebbare Vorbelastungskraft aus. Gleichzeitig wird so der Abdeckkörper 59 in einem axialen Abstand von den Durchlässen 58" in der Oberseite des Ventilhalters 58 gehalten, wodurch eine Strömung von gefilterter Flüssigkeit aus dem Inneren des Filtereinsatzes 3 durch den Auslass 12 zum Reinflüssigkeitskanal 61 im Anschlussflansch 60 der Vorrichtung 6 möglich ist.

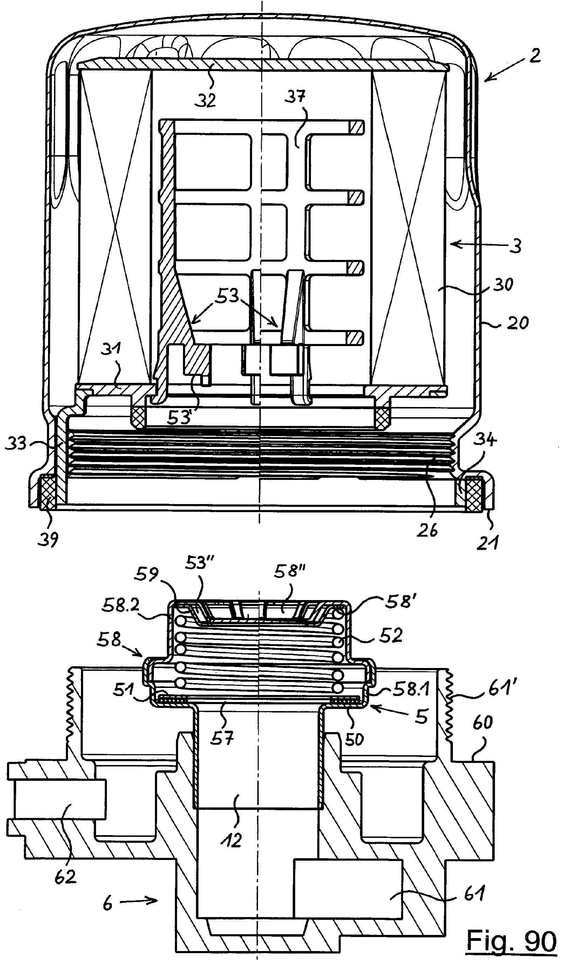

Wenn, wie in Figur 90 gezeigt, das Filtergehäuse 2 zusammen mit dem Filtereinsatz 3 vom Anschlussflansch 60 abgeschraubt ist, drückt die Feder 52 den Abdeckkörper 59 nach oben gegen die Unterseite des oberen Stirnendes des Ventilhalters 58 und verschließt dann die dort angeordneten Durchlässen 58". Auf diese Weise wird ein Hineinfallen von Schmutzpartikeln in den Auslass 12 und in den Reinflüssigkeitskanal 61 sicher vermieden.

Hinsichtlich der weiteren Einzelteile und Funktionen des Filters 1 nach Figur 89 und 90 wird auf die vorhergehende Beschreibung, insbesondere der Figur 87, verwiesen.

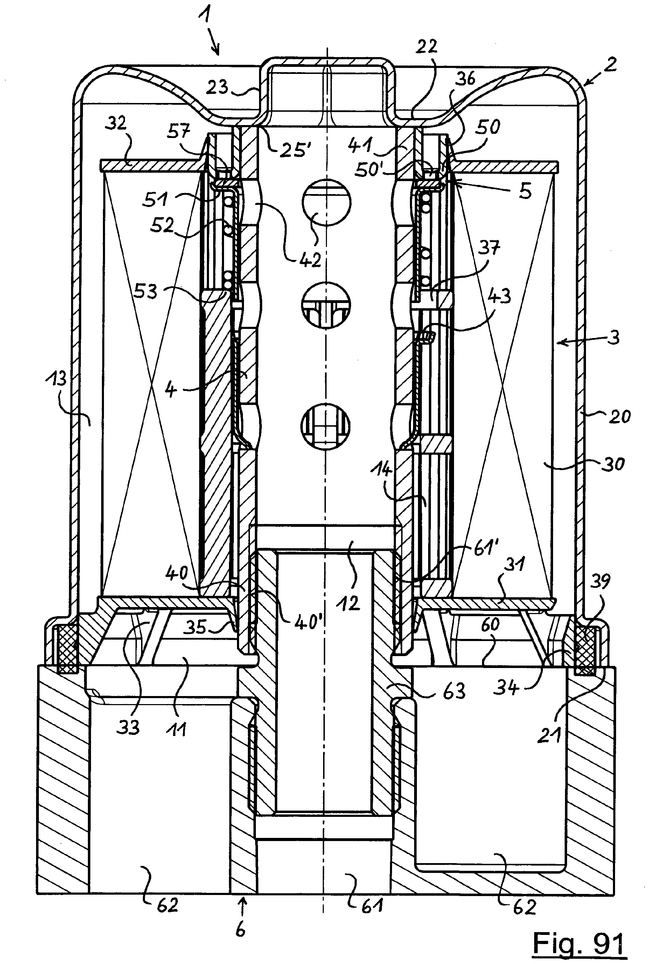

Figur 91 zeigt den Filter 1 in einer weiteren Ausführung, in einem an einen Anschlussflansch 60 angebauten Zustand, im Längsschnitt. Der Filter 1 besitzt einen einteiligen zentralen Rohrstutzen 4, der an seinem oberen Endbereich 41 fest mit der flanschfernen Stirnseite 22 des Filtergehäuses 2 verbunden, beispielsweise verschweißt, ist. Charakteristisch für dieses Ausführungsbeispiel ist, dass der zentrale Rohrstutzen 4 in seinem unteren, flanschseitigen Endbereich 40 ein Innengewinde 40' besitzt, mittels welchem das Filtergehäuse 2 auf ein passendes Außengewinde 61' an einem zentral im Anschlussflansch 60 angebrachten Gewindenippel 63 geschraubt ist.

Das Filterumgehungsventil 5 des Filters 1 gemäß Figur 91 ist im oberen Bereich des zentralen Rohrstutzens 4 angeordnet und entspricht der Ausführung, wie sie in den Figuren 1 und 4 bis 6 schon beschrieben wurde, auf welche diesbezüglich verwiesen wird.

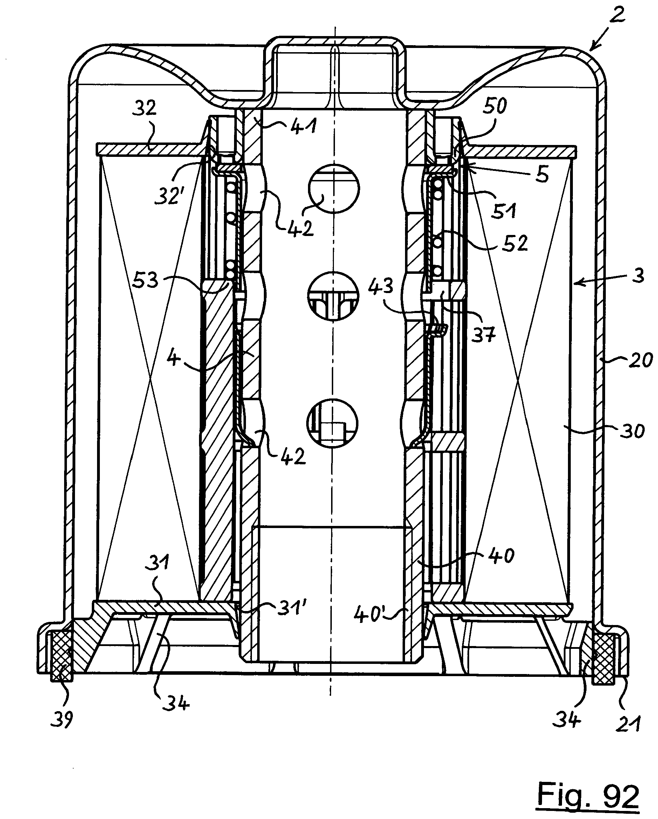

Figur 92 der Zeichnung schließlich zeigt den Filter 1 aus Figur 91 in einem vom Anschlussflansch 60 abgebautem Zustand im Längsschnitt. Der Filtereinsatz 3 sitzt reibschlüssig auf dem zentralen Rohrstutzen 4 im Inneren des Filtergehäuses 2, so dass beim Abschrauben des Filtergehäuses 2 vom Gewindenippel 63 der Filtereinsatz 3 mitgenommen wird. In dem in Figur 92 gezeigten Zustand kann der Filtereinsatz 3 nach unten hin aus dem Filtergehäuse 2 herausgezogen und durch einen neuen, frischen Filtereinsatz 3 ersetzt werden. Die Federstütze 53, die die Feder 52 des Filterumgehungsventils 5 vorgespannt, ist auch hier am Filtereinsatz 3, konkret an dessen zentralem Stützkörper 37, vorgesehen. Beim Herausziehen des Filtereinsatzes 3 aus dem Filtergehäuse 2 wird die Feder 52 so weit entspannt, bis sie sich mit ihrem unteren Ende an den Anschlag 43 anlegt. Der Anschlag 43 ist hier in Form einer Blechhülse ausgeführt, die auf dem Außenumfang des Rohrstutzens 4 axial unverschieblich angebracht ist und die sich an ihrem unteren Ende in einigen der im Rohrstutzen 4 angebrachten Durchbrechungen 42 axial abstützt. Somit sind die Feder 52 und der Ventilkörper 51 des Filterumgehungsventils 5 auch hier gegen Verlieren gesichert.

Die Dichtung 39 ist auch hier wieder Teil des Filtereinsatzes 3 und auf einem umlaufenden Dichtringträger 34 angeordnet, welcher wieder über Verbindungsstege 33 mit der unteren, flanschseitigen Stirnscheibe 31 des Filtereinsatzes 3 verbunden oder einstückig ausgeführt ist.

**Bezugszeichenliste:**

| Zeichen | Bezeichnung |
|---|---|
| 1 | Filter |
| 10 | Verbindungsflansch |
| 11 | Einlass |
| 12 | Auslass |
| 13 | Rohseite |
| 14 | Reinseite |
| 15 | Rücklaufsperrventil |
| 15' | Ventilmembran |
| 15" | Membranträger |
| 16 | Grundplatte |
| 16' | Schraubgewinde innen an 16 |
| 16" | Schraubgewinde außen an 16 |
| 17 | Rastverbindung zwischen 15" und 50 |
| 18 | Federzungenscheibe |
| | |
| 2 | Filtergehäuse |
| 20 | Umfangswand |
| 20' | Schraubdeckel |
| 21 | flanschseitige Stirnseite |
| 22 | flanschferne Stirnseite |
| 23 | Werkzeugansatz |
| 24 | Innendurchmesserstufe |
| 25 | Gewindestutzen an 22 |
| 25' | Schweißnaht |
| 26 | Schraubgewinde |
| 28 | Eintiefungen in 25 |
| 28' | Rasteintiefungen innen in 20 |
| | |
| 3 | Filtereinsatz |
| 30 | Filterstoffkörper |
| 31 | flanschseitige Stirnscheibe |
| 31' | zentrale Durchbrechung in 31 |
| 31" | Fortsatz |
| 32 | flanschferne Stirnscheibe |
| 32' | zentrale Durchbrechung in 32 |
| 33 | Verbindungsstege |
| 33' | Rastnocken an 33 |
| 34 | Dichtringträger |
| 35 | Dichtung/Dichtlippe an 31 |
| 36 | Dichtung/Dichtlippe an 32 |
| 37 | innerer Stützkörper |
| 37' | erste Positioniermittel an 3 |
| 37" | zweite Positioniermittel an 58 |
| 38 | axiale Streben von 37 |
| 39 | erster Dichtring (außen) |
| 39' | zweiter Dichtring (innen) |
| | |
| 4 | zentraler Rohrstutzen |
| 4.1 | erster, flanschseitiger Rohrstutzenabschnitt |
| 4.2 | zweiter, flanschferner Rohrstutzenabschnitt |
| 40 | äußerer Endbereich |
| 40' | Schraubgewinde an 40 |
| 40" | Gewinde an 4.1 für 4.2 |
| 41 | innerer Endbereich |
| 41' | Gewinde an 41 |
| 41" | Gewinde an 4.2 für 4.1 |
| 42 | Durchbrechungen |
| 43 | Anschlag |
| 43.1 | Anschlagkragen |
| 43.2 | Anschlagzungen |
| 43.3 | Anschlaglasche |
| 44 | Zwischenräume |
| 45 | Längsrippe auf 4 |
| 46 | Einführschrägen |
| 47 | Losdrehsicherung |
| 47' | Losdrehsicherungsring |
| 48 | Nocken auf 47' |
| 49 | Längsführung für 37 |
| | |
| 5 | Filterumgehungsventil |
| 50 | Ventilsitz |
| 50' | Durchlassöffnung(en) |
| 51 | Ventilkörper |
| 52 | Feder |
| 53 | Federstütze |
| 53' | Stützarme |
| 53" | Einführöffnung(en) für 53' in 58 |
| 54 | Zwischenring |
| 55 | Längsnut in 51 |
| 56 | Innengewinde in 50 |
| 57 | Elastomerauflage an 50, 51 |
| 58 | Ventilhalter |
| 58.1 | erster, unterer Halterteil |
| 58.2 | zweiter, oberer Halterteil |
| 58.3 | Rastverbindung zwischen 58.1 und 58.2 |
| 58' | Anschlag für 52 in 58 |
| 58" | Durchlass |
| 59 | Abdeckkörper |
| | |
| 6 | Vorrichtung mit Flüssigkeitskreislauf |
| 6' | Sockel |
| 60 | Anschlussflansch |
| 61 | Reinflüssigkeitskanal |
| 61' | Gegengewinde in/an 61 |
| 62 | Rohflüssigkeitskanal |
| 63 | Gewindenippel |
| 65 | Anschlag für 50 |
| 67 | Losdrehsicherung |

## Patentansprüche

1. Filter (1) mit einem Filtergehäuse (2), mit einem Einlass (11) für zu filternde Flüssigkeit und mit einem Auslass (12) für gefilterte Flüssigkeit, mit einem eine Rohseite (13) und eine Reinseite (14) des Filters (1) voneinander trennenden austauschbaren Filtereinsatz (3) und mit einem Filterumgehungsventil (5), das aus einem Ventilsitz (50) und aus einem relativ dazu beweglich geführten, in Schließrichtung vorbelasteten Ventilkörper (51) besteht, **dadurch gekennzeichnet,**
- **dass** der Ventilsitz (50) filterfest im Filter (1) angeordnet ist,
- **dass** der Ventilkörper (51) filterfest im Filter (1) geführt ist,
- **dass** eine den Ventilkörper (51) in Schließrichtung vorbelastende Feder (52) filterfest im Filter (1) geführt ist und
- **dass** der Filtereinsatz (3) eine in dessen in das Filtergehäuse (2) eingebautem Zustand die Feder (52) an ihrem vom Ventilkörper (51) abgewandten Ende abstützende und vorspannende Federstütze (53) aufweist.

2. Filter nach Anspruch 1, **dadurch gekennzeichnet, dass** das Filtergehäuse (2) in seinem Inneren einen zentralen Rohrstutzen (4) aufweist, dass der Ventilsitz (50) an dem Rohrstutzen (4) ausgebildet oder angebracht ist und dass der Ventilkörper (51) und die Feder (52) an dem Rohrstutzen (4) geführt sind.

3. Filter nach Anspruch 2, **dadurch gekennzeichnet, dass** der Ventilsitz (50) durch einen am Außenumfang des Rohrstutzens (4) axial fest sowie dicht angeordneten Ringkörper mit mindestens einer in seiner Axialrichtung verlaufenden Durchlassöffnung (50') gebildet ist und dass der Ventilkörper (51) durch einen auf dem Außenumfang des Rohrstutzens (4) geführten und axial verschiebbaren Ringventilkörper gebildet ist.

4. Filter nach Anspruch 3, **dadurch gekennzeichnet, dass** in dem durch den Ringkörper gebildeten Ventilsitz (50) in dessen Umfangsrichtung voneinander beabstandet mehrere Durchlassöffnungen (50') angebracht sind.

5. Filter nach einem der Ansprüche 2 bis 4, **dadurch gekennzeichnet, dass** eine den Ventilkörper (51) auf dem Außenumfang des Rohrstutzens (4) axial verschiebbar führende Führung (45, 55) eine Sperre gegen ein Verdrehen des Ventilkörpers (51) in Umfangsrichtung relativ zu dem Rohrstutzen (4) bildet.

6. Filter nach einem der Ansprüche 1 bis 5, **dadurch gekennzeichnet, dass** die Federstütze (53) durch einen oder an einem einen Teil des Filtereinsatzes (3) bildenden Stützkörper (37) oder durch eine oder an einer Stirnscheibe (31, 32) des Filtereinsatzes (3) ausgebildet ist.

7. Filter nach einem der Ansprüche 1 bis 6, **dadurch gekennzeichnet, dass** zwischen dem freien Ende der Federstütze (53) und dem diesem zugewandten Ende der Feder (52) ein Zwischenring (54) angeordnet ist, der auf dem Außenumfang des Rohrstutzens (4) axial verschiebbar geführt ist und an dessen von der Federstütze (53) abgewandter Seite die Feder (52) und an dessen von der Feder (52) abgewandter Seite bei eingebautem Filtereinsatz (3) die Federstütze (53) anliegt.

8. Filter nach einem der Ansprüche 2 bis 7, **dadurch gekennzeichnet, dass** auf der Seite der Feder (52), die vom Ventilkörper (51) abgewandt ist, auf dem Rohrstutzen (4) ein einen oder mehrere über dessen Umfang verteilte offene Zwischenräume (44) aufweisender Anschlag (43) angeordnet ist, von dem bei in das Filtergehäuse (2) eingebautem Filtereinsatz (3) das ventilkörperferne Ende der Feder (52) einen axialen Abstand aufweist und an dem bei aus dem Filtergehäuse (2) ausgebauten Filtereinsatz (3) das ventilkörperferne Ende der Feder (52) unmittelbar oder mittelbar anliegt.

9. Filter nach Anspruch 8, **dadurch gekennzeichnet, dass** die Federstütze (53) einen oder mehrere Stützarme (53') aufweist, die entsprechend der Form und Anordnung der offenen Zwischenräume (44) geformt und angeordnet sind und die beim Einbauen des Filtereinsatzes (3) in das Filtergehäuse (2) durch die offenen Zwischenräume (44) hindurch verlaufen und mit dem Anschlag (43) eine Schlüssel-Schloss-Codierung bilden.

10. Filter nach Anspruch 9, **dadurch gekennzeichnet, dass** der Anschlag (43) an seiner federabgewandten Seite zwischen je zwei einander benachbarten Zwischenräumen (44) jeweils eine einzelne Einführschräge (46) oder zwei dachförmig verlaufende Einführschrägen (46) aufweist, mittels welchen bei einem Einbauen des Filtereinsatzes (3) die daran angeordneten Stützarme (53') der Federstütze (53) selbsttätig in die Zwischenräume (44) führbar sind.

11. Filter nach einem der Ansprüche 2 bis 10, **dadurch gekennzeichnet, dass** er als Anschraubwechselfilter ausgeführt ist, wobei eine Stirnseite (21) des Filters (1) als Verbindungsflansch (10) zum Verbinden des Filters (1) mit einem Anschlussflansch (60) einer einen Kreislauf mit zu filternder Flüssigkeit besitzenden Vorrichtung (6) ausgebildet ist und wobei ein Endbereich (40) des Rohrstutzens (4) im Bereich des Verbindungsflansches (10) ein Schraubgewinde (40') aufweist, welches mit einem Gegengewinde (61') im oder am Anschlussflansch (60) verschraubbar ist.

12. Filter nach Anspruch 11, **dadurch gekennzeichnet, dass** das Schraubgewinde (40') am Endbereich (40) des Rohrstutzens (4) ein Außengewinde ist und dass das Gegengewinde (61') ein Innengewinde im Anschlussflansch (60) ist oder dass das Schraubgewinde (40') am Endbereich (40) des Rohrstutzens (4) ein Innengewinde ist und dass das Gegengewinde (61') ein Außengewinde an einem am Anschlussflansch (60) angeordneten Gewindenippel (63) ist.

13. Filter nach Anspruch 11 oder 12, **dadurch gekennzeichnet, dass** der Rohrstutzen (4) fest und unlösbar mit dem Filtergehäuse (2) verbunden ist und dass das Filtergehäuse (2) zusammen mit dem Rohrstutzen (4) als Einheit von dem Anschlussflansch (60) abschraubbar ist.

14. Filter nach Anspruch 11 oder 12, **dadurch gekennzeichnet, dass** der Rohrstutzen (4) lösbar mit dem Filtergehäuse (2) verschraubt ist, dass nach einem ersten Anschrauben des Filters (1) an den Anschlussflansch (60) der Rohrstutzen (4) dauerhaft mit diesem verbunden bleibt und dass danach das Filtergehäuse (2) ohne den Rohrstutzen (4) von dem Anschlussflansch (60) abschraubbar ist.

15. Filter nach einem der Ansprüche 11 bis 13, **dadurch gekennzeichnet, dass** der Rohrstutzen (4) aus zwei miteinander lösbar verbundenen, insbesondere miteinander verschraubten, Rohrstutzenabschnitten (4.1, 4.2) gebildet ist.

16. Filter nach Anspruch 15, **dadurch gekennzeichnet, dass** ein erster, flanschseitiger Rohrstutzenabschnitt (4.1) den Ventilsitz (50), den Ventilkörper (51) und die Feder (52) aufweist oder trägt und nach einem ersten Anschrauben des Filters (1) an den Anschlussflansch (60) dauerhaft mit diesem verbunden bleibt und dass ein zweiter, flanschferner Rohrstutzenabschnitt (4.2) fest und unlösbar mit dem Filtergehäuse (2) verbunden ist.

17. Filter nach Anspruch 16, **dadurch gekennzeichnet, dass** der erste, flanschseitige Rohrstutzenabschnitt (4.1) ein den Einlass (11) des Filters (1) überdeckendes Rücklaufsperrventil (15) aufweist oder trägt.

18. Filter nach Anspruch 17, **dadurch gekennzeichnet, dass** das Rücklaufsperrventil (15) eine flexible Ventilmembran (15') und einen starren Membranträger (15") aufweist, die jeweils den flanschseitigen Rohrstutzenabschnitt (4.1) umgeben, dass der Membranträger (15") mit dem ersten Rohrstutzenabschnitt (4.1) einstückig ausgebildet oder lagefest verbunden, vorzugsweise verrastet, ist und dass bei in den Filter (1) eingebautem Filtereinsatz (3) die Ventilmembran (15') an ihrem radial inneren Randbereich mittels des Filtereinsatzes (3), insbesondere mittels eines radial innen daran angeordneten Dichtrings (39'), gegen den Membranträger (15") eingeklemmt ist.

19. Filter nach einem der Ansprüche 2 bis 18, **dadurch gekennzeichnet, dass** das Filtergehäuse (2) als Anschraubgehäuse ausgebildet ist oder einen Schraubdeckel (20') umfasst.

20. Filter nach Anspruch 19, **dadurch gekennzeichnet, dass** das Filtergehäuse (2) mit einer Losdrehsicherung (47) versehen ist, wobei im Filtergehäuse (2) auf dem Rohrstutzen (4) ein Losdrehsicherungsring (47') axial verschiebbar geführt ist und bei in das Filtergehäuse (2) eingebautem Filtereinsatz (3) die Feder (52) den Losdrehsicherungsring (47') mit seiner von der Feder (52) abgewandte Stirnseite gegen eine Gegenfläche des Filtergehäuses (2) andrückt.

21. Filter nach Anspruch 19 oder 20, **dadurch gekennzeichnet, dass** das Filtergehäuse (2) in seiner Umfangswand (20) eine Innendurchmesserstufe (24) aufweist, an welche der Filtereinsatz (3) bei seinem Einführen in das Filtergehäuse (2) zur axialen Positionierung mit seiner flanschseitigen Stirnscheibe (31) anlegbar ist.

22. Filter nach einem der Ansprüche 11 bis 21, **dadurch gekennzeichnet, dass** mit einer flanschseitigen Stirnscheibe (31) des Filtereinsatzes (3) radial außen ein Dichtringträger (34) verbunden oder einstückig ausgeführt ist, auf dem ein den Filter (1) gegen den Anschlussflansch (60) der einen Kreislauf mit zu filternder Flüssigkeit besitzenden Vorrichtung (6) abdichtender Dichtring (39) angebracht oder anbringbar ist.

23. Filter nach einem der Ansprüche 1 bis 22, **dadurch gekennzeichnet, dass** das Filterumgehungsventil (5) in Höhe eines ersten axialen Stirnendes des Filtereinsatzes (3) angeordnet ist oder dass das Filterumgehungsventil (5) in Höhe eines zweiten axialen Stirnendes des Filtereinsatzes (3) angeordnet ist.

24. Filter nach Anspruch 1, **dadurch gekennzeichnet, dass** er als Anschraubwechselfilter ausgeführt ist, wobei der Filter (1) zum Verbinden mit einem Anschlussflansch (60) einer einen Kreislauf mit zu filternder Flüssigkeit besitzenden Vorrichtung (6) ausgebildet ist, wobei der Filter (1) eine flanschseitige Grundplatte (16) mit einem Schraubgewinde (16') aufweist, welches mit einem Gegengewinde (61') im oder am Anschlussflansch (60) verschraubbar ist und wobei das Filterumgehungsventil (5) in einem einen Teil der Grundplatte (16) bildenden oder mit der Grundplatte (16) verbundenen Ventilhalter (58) angeordnet ist.

25. Filter nach Anspruch 24, **dadurch gekennzeichnet, dass** das Filtergehäuse (2) als Schraubgehäuse ausgeführt ist, welches an seinem flanschseitigen Endbereich ein Schraubgewinde (26) besitzt, mittels welchem das Filtergehäuse (2) mit einem radial außen an der Grundplatte (16) angeordneten Schraubgewinde (16") verschraubbar ist.

26. Filter nach Anspruch 24 oder 25, **dadurch gekennzeichnet, dass** nach einer erstmaligen Montage des Filters (1) an dem Anschlussflansch (60) das Filtergehäuse (2) zusammen mit dem Filtereinsatz (3) für eine Filterwartung von der Grundplatte (16) abschraubbar ist und dass die Grundplatte (16) mit dem Ventilhalter (58) und dem Filterumgehungsventil (5) am Anschlussflansch verbleibende Teile des Filters (1) sind.

27. Filter nach einem der Ansprüche 24 bis 26, **dadurch gekennzeichnet, dass** der Ventilhalter (58) umfangsseitig geschlossen ausgeführt ist und an seiner flanschfernen Stirnseite wenigstens einen Anschlag (58') für die Feder (52) in deren von der Federstütze (53) des Filtereinsatzes (3) entlasteten Zustand und wenigstens einen Durchlass (58") für gefilterte Flüssigkeit aufweist.

28. Filter nach Anspruch 27, **dadurch gekennzeichnet, dass** zwischen der Feder (52) und dem Durchlass (58") ein von der Feder (52) in Richtung zum Durchlass (58") beaufschlagter Abdeckkörper (59) angeordnet ist, wobei im zusammengebauten Zustand des Filters (1) die am Filtereinsatz (3) befindliche Federstütze (53) über den Abdeckkörper (59) die Feder (52) abstützt und wobei der Abdeckkörper (59) bei entferntem Filtereinsatz (3) den Durchlass (58") verschließt.

29. Filter nach einem der Ansprüche 24 bis 28, **dadurch gekennzeichnet, dass** in der Grundplatte (16) wenigstens eine den Einlass (10) des Filters (1) bildende dezentrale Durchbrechung angebracht ist und dass an der flanschfernen Seite der Grundplatte (16) ein den Einlass (10) überdeckendes Rücklaufsperrventil (15) angeordnet ist, wobei das Rücklaufsperrventil (24) eine den Einlass (10) überdeckende, kreisringförmige Ventilmembran (15') aufweist, die an ihrem radial inneren Randbereich zwischen der Grundplatte (16) und dem mit der Grundplatte (16) verbundenen Ventilhalter (58) eingeklemmt ist.

30. Filter nach einem der Ansprüche 24 bis 29, **dadurch gekennzeichnet, dass** die Federstütze (53) durch mehrere mit einem zentralen Stützkörper (37) des Filtereinsatzes (3) verbundene oder einstückige, im in den Filter (1) eingebauten Zustand des Filtereinsatzes (3) in den Ventilhalter (58) hineinragende Stützarme (53') gebildet ist.

31. Filter nach einem der Ansprüche 24 bis 30, **dadurch gekennzeichnet, dass** der Ventilhalter (58) für jeden Stützarm (53') eine positions- und formangepasste Einführöffnung (53") aufweist und dass die Stützarme (53') und die Einführöffnungen (53") miteinander eine Schlüssel-Schloss-Codierung bilden, welche nur ein Einbauen eines Filtereinsatzes (3) mit den zu den Einführöffnungen (53") passend positionierten und geformten Stützarmen (53') erlaubt.

32. Filter nach Anspruch 30 oder 31, **dadurch gekennzeichnet, dass** der Filtereinsatz (3) zusätzlich zu den die Federstütze (53) bildenden Stützarmen (53') erste Positionierelemente (37') aufweist, dass der Ventilhalter (58) zusätzlich zu den Einführöffnungen (53") zweite Positionierelemente (37") aufweist und dass mittels der ersten und zweiten Positionierelemente (37' und 37") der Filtereinsatz (3) bei seinem Einbauen in den Filter (1) in eine in Umfangsrichtung eingriffsgerechte Stellung seiner Stützarme (53') relativ zu den Einführöffnungen (53") des Ventilhalters (58) führbar ist.

33. Filter nach einem der Ansprüche 24 bis 32, **dadurch gekennzeichnet, dass** das Gegengewinde (61') im oder am Anschlussflansch (60) an einem aus der Ebene des Anschlussflansches (60) vorragenden, einen Teil des Anschlussflansches (60) bildenden Gewindenippel (63) als Außengewinde angeordnet ist

34. Filter nach Anspruch 1, **dadurch gekennzeichnet, dass** er als Anschraubwechselfilter ausgeführt ist, wobei der Filter (1) zum Verbinden mit einem Anschlussflansch (60) einer einen Kreislauf mit zu filternder Flüssigkeit besitzenden Vorrichtung (6) ausgebildet ist, wobei das Filtergehäuse (2) flanschseitig ein Schraubgewinde (26) aufweist, welches mit einem Gegengewinde (61') im oder am Anschlussflansch (60) verschraubbar ist, wobei das Filterumgehungsventil (5) in einem Ventilhalter (58) mit einem flanschseitigen hohlzylindrischen Endstück angeordnet ist und wobei das Endstück vor oder bei einer Erstmontage des Filters (1) an dem Anschlussflansch (60) in einen Reinflüssigkeitskanal (61) des Anschlussflansches (60) einpressbar ist.

35. Filter nach Anspruch 34, **dadurch gekennzeichnet, dass** der Ventilhalter (58) umfangsseitig geschlossen ausgeführt ist und an seiner flanschfernen Stirnseite wenigstens einen Anschlag (58') für die Feder (52) in deren von der Federstütze (53) des Filtereinsatzes (3) entlasteten Zustand und wenigstens einen Durchlass (58") für gefilterte Flüssigkeit aufweist.

36. Filter nach Anspruch 35, **dadurch gekennzeichnet, dass** zwischen der Feder (52) und dem Durchlass (58") ein von der Feder (52) in Richtung zum Durchlass (58") beaufschlagter Abdeckkörper (59) angeordnet ist, wobei über den Abdeckkörper (59) im zusammengebauten Zustand des Filters (1) die am Filtereinsatz (3) befindliche Federstütze (53) die Feder (52) abstützt und wobei der Abdeckkörper (59) bei entferntem Filtereinsatz (3) den Durchlass (58") verschließt.

## Claims

1. A filter (1) with a filter housing (2), comprising an inlet (11) for liquid to be filtered and an outlet (12) for filtered liquid, also comprising a replaceable filter insert (3) that separates a raw side (13) from a pure side (14) of the filter (1), and further comprising a filter bypass valve (5) consisting of a valve seat (50) and a valve body (51) that is movable relative to the valve seat (50) and that is pre-loaded in the direction of closure, **characterised in that**
- the valve seat (50) is arranged firmly in the filter (1),
- the valve body (51) is guided firmly in the filter (1),
- a spring (52) that pre-loads the valve body (51) in the direction of closure is guided firmly in the filter (1), and
- the filter insert (3) has a spring support (53) which supports and pre-loads the spring (52) at its end that faces away from the valve body (51) when the filter insert is installed in the filter housing (2).

2. The filter according to Claim 1, **characterised in that** the filter housing (2) has in its interior a central pipe connector (4), that the valve seat (50) is formed or attached to the pipe connector (4), and that the valve body (51) and the spring (52) are guided on the pipe connector (4).

3. The filter according to Claim 2, **characterised in that** the valve seat (50) is formed by an annular body which is axially affixed and tightly arranged on the outer circumference of the pipe connector (4) and has one or more outlet openings (50') extending in its axial direction, and that the valve body (51) is formed by an axially displaceable annular valve body guided on the outer circumference of the pipe connector (4).

4. The filter according to Claim 3, **characterised in that** several outlet openings (50') are provided in spaced circumferential relationship in the valve seat (50) formed by the annular body.

5. The filter according to one of Claims 2 to 4, **characterised in that** guide means (45, 55) guiding the valve body (51) axially displaceable on the outer periphery of the pipe connector (4) form a block against twisting the valve body (51) in a circumferential direction relative to the pipe connector (4).

6. The filter according to one of Claims 1 to 5, **characterised in that** the spring support (53) is formed by or on a support body (37) forming a part of the filter insert (3), or it is formed by or on an end disc (31, 32) of the filter insert (3).

7. The filter according to one of Claims 1 to 6, **characterised in that** an intermediate ring (54) is situated between the free end of the spring support (53) and the end of the spring (52) which faces the same, the intermediate ring being guided for axial displacement on the outer circumference of the pipe connector (4), with the spring (52) abutting the side thereof which faces away from the spring support (53) and with the spring support (53) abutting on the side thereof which faces away from the spring (52) when the filter insert (3) is installed.

8. The filter according to one of Claims 2 to 7, **characterised in that** on the side of the spring (52) which faces away from the valve body (51) a stop (43) is arranged on the pipe connector (4) and has one or more open spaces (44) distributed along the circumference thereof, and that the stop (43) is axially spaced apart from that end of the filter insert (3) which is remote from the valve body when the filter insert (3) is installed into the filter housing (2), and which that end of the spring (52) directly or indirectly abuts which is remote from the valve body when the filter insert (3) has been removed from the filter housing (2).

9. The filter according to Claim 8, **characterised in that** the spring support (53) has one or more brackets (53') designed to match the shape and arrangement of the open spaces (44) and which extend through the open spaces (44) when the filter insert (3) is installed in the filter housing (2), forming a lock-and-key coding together with the stop means (43).

10. The filter according to Claim 9, **characterised in that** the stop means (43) has a single insertion slope (46) or two roof-shaped insertion slopes (46) on its side facing away from the spring, between each two adjacent spaces (44), whereby during installation of the filter insert (3) the brackets (53') of the spring support (53) that are arranged thereupon can automatically be guided into the spaces (44).

11. The filter according to one of Claims 2 to 10, **characterised in that** the filter is designed as a replaceable screw-on filter, wherein an end face (21) of the filter (1) is embodied as a connecting flange (10) to connect the filter (1) to a mounting flange (60) of a device (6) having a circuit with liquid to be filtered, and wherein an end section (40) of the pipe connector (4) has a screw thread (40') in the area of the connecting flange (10) which is designed to be screwed together with a mating thread (61') in or on the mounting flange (60).

12. The filter according to Claim 11, **characterised in that** the screw thread (40') at the end area (40) of the pipe connector (4) is a male thread and that the mating thread (61') is a female thread in the mounting flange (60) or that the screw thread (40') is a female thread at the end area (40) of the pipe connector (4) and that the mating thread (61') is a male thread on a thread nipple (63) arranged on the mounting flange (60).

13. The filter according to Claim 11 or 12, **characterised in that** the pipe connector (4) is securely and non-releasably connected to the filter housing (2) and that the filter housing (2) together with the pipe connector (4) can be unscrewed from the mounting flange (60) as a unit.

14. The filter according to Claim 11 or 12, **characterised in that** the pipe connector (4) is releasably screwed to the filter housing (2), that the pipe connector (4) remains permanently connected to the mounting flange (60) after the filter (1) is initially screwed onto it, and that the filter housing (2) can then be unscrewed without the pipe connector (4) from the mounting flange (60).

15. The filter according to one of Claims 11 to 13, **characterised in that** the pipe connector (4) is made of two releasably interconnected, particularly screwedtogether, pipe connector sections (4.1, 4.2).

16. The filter according to Claim 15, **characterised in that** a first, flange-side pipe connector section (4.1) has or supports the valve seat (50), the valve body (51) and the spring (52) and remains permanently connected to the mounting flange (60) after the filter (1) is initially screwed onto it, and that a second pipe connector section (4.2) remote from the flange is securely and non-releasably connected to the filter housing (2).

17. The filter according to Claim 16, **characterised in that** the first, flange-side pipe connector section (4.1) has or supports a non-return valve (15) covering the inlet (11) of the filter (1).

18. The filter according to Claim 17, **characterised in that** the non-return valve (15) has a flexible diaphragm (15') and a rigid diaphragm support (15"), each surrounding the flange-side pipe connector section (4.1), that the diaphragm support (15") is integrally formed with the first pipe connector section (4.1) or is affixed to it, preferably locked, and that when the filter insert (3) is installed in the filter (1) the radially inner peripheral area of the valve diaphragm (15') is clamped against the diaphragm support (15") by means of the filter insert (3), particularly by means of a sealing ring (39') arranged radially inwardly thereupon.

19. The filter according to one of Claims 2 to 18, **characterised in that** the filter housing (2) is designed as a screw-on housing or includes a screw-on top (20').

20. The filter according to Claim 19, **characterised in that** the filter housing (2) is provided with a locking device (47), wherein a locking ring (47') is guided in the filter housing (2) for axial displacement on the pipe connector (4), and that, when the filter insert (3) is installed in the filter housing (2), the spring (52) urges the face of the locking ring (47') that is turned away from the spring (52) against a counter-surface of the filter housing (2).

21. The filter according to Claim 19 or 20, **characterised in that** the filter housing (2) has an inner diameter step (24) in its circumferential wall (20), with which the flange-side face (31) of the filter insert (3), on being inserted into the filter housing (2), can be brought into abutment for axial positioning.

22. The filter according to one of Claims 11 to 21, **characterised in that** a sealing ring support (34) is radially outwardly connected to or integral with a flange-side end disc (31) of the filter insert (3), on which sealing ring support (34) a sealing ring (39) is or may be attached to seal the filter (1) against the mounting flange (60) of the device (6) having a circuit with liquid to be filtered.

23. The filter according to one of Claims 1 to 22, **characterised in that** the filter bypass valve (5) is arranged at the level of a first axial end face of the filter insert (3) or on the level of a second axial end face of the filter insert (3).

24. The filter according to Claim 1, **characterised in that** it is designed as a replaceable screw-on filter, wherein the filter (1) is designed for connection to a mounting flange (60) of a device (6) having a circuit with liquid to be filtered, wherein the filter (1) has a flange-side baseplate (16) with a screw thread (16') which can be screwed together with a mating thread (61') in or on the mounting flange (60), and wherein the filter bypass valve (5) is arranged in a valve holder (58) forming a part of or being connected to the baseplate (16).

25. The filter according to Claim 24, **characterised in that** the filter housing (2) is designed as a screw housing having a screw thread (26) on its flange-side end area, by means of which the filter housing (2) can be screwed to a screw thread (16") arranged radially externally on the baseplate (16).

26. The filter according to Claim 24 or 25, **characterised in that** following the initial installation of the filter (1) on the mounting flange (60) the filter housing (2) can be unscrewed from the baseplate (16) together with the filter insert (3) for maintenance of the filter, and that the baseplate (16) together with the valve holder (58) and the filter bypass valve (5) are parts of the filter (1) left on the mounting flange (60).

27. The filter according to one of Claims 24 to 26, **characterised in that** the valve holder (58) is closed circumferentially and has one or more stop means (58') on its face that is remote from the flange, for the spring (52) in its state of relaxation from the spring support (53) of the filter insert (3), and at least one passage (58") for filtered liquid.

28. The filter according to Claim 27, **characterised in that** a cover body (59) stressed by the spring (52) in the direction of the passage (58") is arranged between the spring (52) and the passage (58"), wherein the spring support (53), which is situated on the filter insert (3) when the filter (1) is in the installed state, supports the spring (52) via the cover body (59), and wherein the cover body (59) closes the passage (58") when the filter insert (3) is removed.

29. The filter according to one of Claims 24 to 28, **characterised in that** at least one decentralised opening forming the inlet (10) of the filter (1) is provided in the baseplate (16) and that a non-return valve (15) covering the inlet (10) is provided on the side of the baseplate (16) that is remote from the flange, wherein the non-return valve (24) has a diaphragm (15') in the form of a circular ring that covers the inlet (10) and that is clamped with its radially inner peripheral area between the baseplate (16) and the valve holder (58) connected to the baseplate (16).

30. The filter according to one of Claims 24 to 29 **characterised in that** the spring support (53) is formed by a plurality of brackets (53') connected to or integral with a central support body (37) of the filter insert (3) and projecting into the valve holder (58) when the filter insert (3) is installed into the filter (1).

31. The filter according to Claims 24 to 30, **characterised in that in that** the valve holder (58) has an insertion opening (53") for each bracket (53'), the opening being adapted in shape and position, and that the brackets (53') and the insertion openings (53") together form a lock-and-key coding that permits only one installation of a filter insert (3) with the brackets (53') positioned and shaped to fit the insertion openings (53").

32. The filter according to Claim 30 or 31, **characterised in that** the filter insert (3) has first positioning elements (37') in addition to the brackets (53') forming the spring support (53), that the valve holder (58) has second positioning elements (37") in addition to the insertion openings (53"), and that the filter insert (3), upon being installed in the filter (1), may be guided by means of the first and second positioning elements (37' and 37") into a circumferential position of its brackets (53'), relative to the insertion openings (53") of the valve holder (58), that is suitable for engagement.

33. The filter according to one of Claims 24 to 32, **characterised in that** the mating thread (61') is arranged as an external thread in or on the mounting flange (60) on a thread nipple (63) projecting from the plane of the mounting flange (60) and forming a part of the same.

34. The filter according to Claim 1, **characterised in that** the filter is designed as a replaceable screw-on filter, wherein the filter (1) is designed for connection to a mounting flange (60) of a device (6) having a circuit with liquid to be filtered, wherein the filter housing (2) has a flange-side screw thread (26) which can be screwed together with a mating thread (61') in or on the mounting flange (60), and wherein the filter bypass valve (5) is arranged in a valve holder (58) with a flange-side hollow-cylindrical end piece, and wherein the end piece may be pressed into a pure-liquid duct (61) before or during an initial installation of the filter (1) on the mounting flange (60).

35. The filter according to Claim 34, **characterised in that** the valve holder (58) is closed circumferentially and has at least one stop (58') on its face that is remote from the flange, for the spring (52) in its state of relaxation from the spring support (53) of the filter insert (3), and at least one passage (58") for filtered liquid.

36. The filter according to Claim 35, **characterised in that** a cover body (59) stressed by the spring (52) in the direction of the passage (58") is arranged between the spring (52) and the passage (58"), wherein the spring support (53), which is situated on the filter insert (3) when the filter (1) is in the installed state, supports the spring (52) via the cover body (59), and wherein the cover body (59) closes the passage (58") when the filter insert (3) is removed.

## Revendications

1. Filtre (1) doté d'un boîtier de filtre (2), d'une admission (11) pour tout liquide à filtrer et d'une évacuation (12) pour tout liquide filtré, d'une cartouche filtrante (3) interchangeable séparant l'une de l'autre une face brute (13) et une face pure (14) du filtre (1), et d'une soupape de contournement (5) constituée d'un siège de soupape (50) et d'un corps de soupape (51) précontraint dans le sens de fermeture et mobile par rapport audit siège de soupape (50), **caractérisé en ce**
- **que** le siège de soupape (50) est agencé de manière fixe dans le filtre (1),
- **que** le corps de soupape (51) est fixe dans le filtre (1),
- **qu'**un ressort (52) appliquant dans le sens de fermeture une précontrainte sur le corps de soupape (51) est fixe dans le filtre (1) et
- **que** la cartouche filtrante (3) présente un support de ressort (53) qui précontraint et soutient le ressort (52), lorsqu'il est monté dans le boîtier de filtre (2), au niveau de son extrémité opposée au corps de soupape (51).

2. Filtre selon la revendication 1, **caractérisé en ce que** le boîtier de filtre (2) présente, à l'intérieur, un embout tubulaire central (4), que le siège de soupape (50) est conçu ou fixé à l'embout tubulaire (4) et que le siège de soupape (51) et le ressort (52) sont au niveau de l'embout tubulaire (4).

3. Filtre selon la revendication 2, **caractérisé en ce que** le siège de soupape (50) est formé par un corps annulaire agencé de manière axialement fixe ainsi qu'étanche à la circonférence extérieure de l'embout tubulaire (4) avec au moins une ouverture de passage (50') s'étendant dans le sens axial, et que le corps de soupape (51) est formé par un corps de soupape annulaire se trouvant sur la circonférence extérieure de l'embout tubulaire (4) et déplaçable dans le sens axial.

4. Filtre selon la revendication 3, **caractérisé en ce que** sont fixées plusieurs ouvertures de passage (50') dans le siège de soupape (50) formé par le corps annulaire, espacées les unes des autres dans le sens de la circonférence dudit siège de soupape (50).

5. Filtre selon l'une quelconque des revendications 2 à 4, **caractérisé en ce qu'**un guidage (45, 55) dirigeant le corps de soupape (51) de manière axialement déplaçable sur la circonférence extérieure de l'embout tubulaire (4) forme un verrouillage contre une torsion du corps de soupape (51) dans le sens de la circonférence par rapport à l'embout tubulaire (4).

6. Filtre selon l'une quelconque des revendications 1 à 5, **caractérisé en ce que** le support de ressort (53) est constitué soit d'un corps de support (37) ou à un corps de support (37) formant une partie de la cartouche filtrante (3), soit d'un disque frontal (31, 32) de la cartouche filtrante (3) ou à un disque frontal (31, 32) de la cartouche filtrante (3).

7. Filtre selon l'une quelconque des revendications 1 à 6, **caractérisé en ce qu'**est agencée une bague intermédiaire (54) entre l'extrémité libre du support de ressort (53) et l'extrémité du ressort (52) tournée vers ledit support de ressort (53), laquelle bague intermédiaire (54) est déplaçable axialement sur la circonférence extérieure de l'embout tubulaire (4) et sur la face, opposée au support de ressort (53), de laquelle est accolé le ressort (52) et sur la face, opposée au ressort (52), de laquelle est accolé le support de ressort (53) lorsque la cartouche filtrante (3) est montée.

8. Filtre selon l'une quelconque des revendications 2 à 7, **caractérisé en ce que** sur la face du ressort (52) qui est opposée au corps de soupape (51), est agencée sur l'embout tubulaire (4) une butée (43) présentant un interstice (44) ou plusieurs interstices (44) ouverts répartis sur sa circonférence, butée (43) dont l'extrémité du ressort (52) éloignée du corps de soupape présente une distance axiale, lorsque la cartouche filtrante (3) est montée dans le boîtier de filtre (2), et à laquelle est accolée directement ou indirectement l'extrémité du ressort (52) éloignée du corps de soupape lorsque la cartouche filtrante (3) est sortie du boîtier de filtre (2).

9. Filtre selon la revendication 8, **caractérisé en ce que** le support de ressort (53) présente un ou plusieurs bras d'appui (53') qui sont formés et agencés en fonction de la forme et de l'agencement des interstices ouverts (44), qui traversent les interstices ouverts (44) au moment où la cartouche filtrante (3) est montée dans le boîtier de filtre (2) et qui forment, avec la butée (43), un codage clef et serrure.

10. Filtre selon la revendication 9, **caractérisé en ce que** la butée (43) présente sur son côté opposé au ressort entre respectivement deux interstices (44) voisins l'un de l'autre respectivement une rampe d'introduction (46) unique ou deux rampes d'introduction (46) en forme de toit, au moyen desquelles, lors d'un montage de la cartouche filtrante (3) les bras d'appui (53') du support de ressort (53) qui y sont agencés peuvent être dirigés d'eux-mêmes dans les interstices (44).

11. Filtre selon l'une quelconque des revendications 2 à 10, **caractérisé en ce qu'**il est réalisé sous la forme d'un filtre interchangeable à visser, une face frontale (21) du filtre (1) étant conçue comme bride de raccordement (10) destinée à raccorder le filtre (1) à une bride de connexion (60) d'un dispositif (6) possédant un circuit de liquide à filtrer, et une zone d'extrémité (40) de l'embout tubulaire (4) présentant, dans la zone de la bride de raccordement (10), un filetage (40') qui peut être vissé avec un contre-filetage (61') sur ou à la bride de connexion (60).

12. Filtre selon la revendication 11, **caractérisé en ce que** le filetage (40') dans la zone d'extrémité (40) de l'embout tubulaire (4) est un filetage extérieur et que le contre-filetage (61') est un filetage intérieur dans la bride de connexion (60), ou que le filetage (40') dans la zone d'extrémité (40) de l'embout tubulaire (4) est un filetage intérieur et que le contre-filetage (61') est un filetage extérieur sur une nipple filetée (63) agencée sur la bride de connexion (60).

13. Filtre selon la revendication 11 ou 12, **caractérisé en ce que** l'embout tubulaire (4) est relié de manière fixe et non détachable au boîtier du filtre (2) et que le boîtier du filtre (2) peut être, avec l'embout tubulaire (4) et en tant qu'unité, dévissé de la bride de connexion (60).

14. Filtre selon la revendication 11 ou 12, **caractérisé en ce que** l'embout tubulaire (4) est vissé détachable au boîtier de filtre (2), qu'après un premier vissage du filtre (1) à la bride de connexion (60), l'embout tubulaire (4) reste relié de manière permanente avec celle-ci et qu'ensuite, le boîtier de filtre (2) peut être dévissé de la bride de connexion (60) sans l'embout tubulaire (4).

15. Filtre selon l'une quelconque des revendications 11 à 13, **caractérisé en ce que** l'embout tubulaire (4) est formé de deux sections d'embout tubulaire (4.1, 4.2) reliées l'une à l'autre de manière détachable, notamment vissées l'une à l'autre.

16. Filtre selon la revendication 15, **caractérisé en ce qu'**une première section d'embout tubulaire (4.1) côté bride présente ou porte le siège de soupape (50), le corps de soupape (51) et le ressort (52), et qu'elle reste liée de manière permanente à la bride de connexion (60) après un premier vissage du filtre (1) sur celle-ci, et qu'une deuxième section d'embout tubulaire (4.2) éloignée de la bride est reliée de manière fixe et non détachable au boîtier du filtre (2).

17. Filtre selon la revendication 16, **caractérisé en ce que** la première section d'embout tubulaire (4.1) côté bride présente ou porte un clapet anti-retour (15) recouvrant l'admission (11) du filtre (1).

18. Filtre selon la revendication 17, **caractérisé en ce que** le clapet anti-retour (15) présente une membrane de clapet (15') souple et un support de membrane (15") rigide, lesquels entourent chacun la section d'embout tubulaire (4.1) côté bride, que le support de membrane (15") est agencé d'un seul tenant avec la première section d'embout tubulaire (4.1) ou relié en position fixe avec celle-ci, de préférence encliqueté, et que lorsque la cartouche filtrante (3) est montée dans le filtre (1), la membrane de clapet (15') est coincée contre le support de membrane (15") en sa périphérie intérieure radiale au moyen de la cartouche filtrante (3), notamment au moyen d'une bague d'étanchéité (39') qui y est agencée radialement à l'intérieur.

19. Filtre selon l'une quelconque des revendications 2 à 18, **caractérisé en ce que** le boîtier de filtre (2) est conçu en tant que boîtier vissable ou qu'il comprend un couvercle à visser (20').

20. Filtre selon la revendication 19, **caractérisé en ce que** le boîtier de filtre (2) est pourvu d'une sécurité antirotation (47), une bague de sécurité antirotation (47') étant déplaçable axialement dans le boîtier de filtre (2) sur l'embout tubulaire (4) et, lorsque la cartouche filtrante (3) est montée dans le boîtier de filtre (2), le ressort (52) presse la bague de sécurité antirotation (47') contre une contre-surface du boîtier de filtre (2) avec sa face frontale opposée au ressort (52).

21. Filtre selon la revendication 19 ou 20, **caractérisé en ce que** le boîtier de filtre (2) présente dans sa paroi circonférentielle (20) un échelon de diamètre intérieur (24) auquel la cartouche filtrante (3) peut être accolée lorsqu'elle est introduite dans le boîtier de filtre (2) pour être positionnée dans l'axe avec son disque frontal (31) côté bride.

22. Filtre selon l'une quelconque des revendications 11 à 21, **caractérisé en ce qu'**un support de bague d'étanchéité (34) est relié radialement à l'extérieur ou réalisé d'un seul tenant avec un disque frontal (31), côté bride, de la cartouche filtrante (3), support (34) sur lequel est fixée ou peut être fixée une bague d'étanchéité (39) réalisant l'étanchéité du filtre (1) contre la bride de connexion (60) d'un dispositif (6) possédant un circuit de liquide à filtrer.

23. Filtre selon l'une quelconque des revendications 1 à 22, **caractérisé en ce que** la soupape de contournement (5) est agencée à hauteur d'une première extrémité frontale axiale de la cartouche filtrante (3) ou que la soupape de contournement (5) est agencée à hauteur d'une deuxième extrémité frontale axiale de la cartouche filtrante (3).

24. Filtre selon la revendication 1, **caractérisé en ce qu'**il est réalisé sous la forme d'un filtre interchangeable à visser, le filtre (1) étant conçu pour être relié à une bride de connexion (60) d'un dispositif (6) possédant un circuit avec liquide à filtrer, le filtre (1) présentant côté bride un socle (16) avec un filetage (16') qui peut être vissé avec un contre-filetage (61') dans ou à la bride de connexion (60) et la soupape de contournement (5) étant agencée dans un support de soupape (58) formant une partie du socle (16) ou relié au socle (16).

25. Filtre selon la revendication 24, **caractérisé en ce que** le boîtier du filtre (2) est réalisé en tant que boîtier vissable qui possède en sa zone d'extrémité, côté bride, un filetage (26) au moyen duquel le boîtier du filtre (2) peut être vissé à un filetage (16") agencé axialement à l'extérieur sur le socle (16).

26. Filtre selon la revendication 24 ou 25, **caractérisé en ce qu'**après un premier montage du filtre (1) à la bride de connexion (60), le boîtier de filtre (2) peut être dévissé du socle (16) avec la cartouche filtrante (3) pour un entretien du filtre, et que le socle (16) avec le support de soupape (58) et la soupape de contournement (5) sont des pièces du filtre (1) qui restent à la bride de connexion (60).

27. Filtre selon l'une quelconque des revendications 24 à 26, **caractérisé en ce que** le support de soupape (58) est, côté circonférence, réalisé fermé et qu'il présente, sur sa face frontale éloignée de la bride, au moins une butée (58') pour le ressort (52) dans son état détendu par le support de ressort (53) de la cartouche filtrante (3) et au moins un passage (58") pour liquide filtré.

28. Filtre selon la revendication 27, **caractérisé en ce qu'**est agencé, entre le ressort (52) et le passage (58"), un corps de couverture (59) soumis au ressort (52) dans la direction du passage (58"), le support de ressort (53) qui, lorsque le filtre (1) est monté, se trouve à la cartouche filtrante (3), soutenant le ressort (52) par le biais du corps de couverture (59) et le corps de couverture (59) obturant le passage (58") lorsque la cartouche filtrante (3) est retirée.

29. Filtre selon l'une quelconque des revendications 24 à 28, **caractérisé en ce qu'**au moins une perforation décentralisée formant l'admission (10) du filtre (1) est fixée dans le socle (16) et qu'un clapet anti-retour (15) recouvrant l'admission (10) est agencé sur la face du socle (16) éloignée de la bride, le clapet anti-retour (24) présentant une membrane de clapet (15') de forme annulaire et recouvrant l'admission (10) qui est coincée en sa périphérie intérieure radiale entre le socle (16) et le support de soupape (58) relié au socle (16).

30. Filtre selon l'une quelconque des revendications 24 à 29, **caractérisé en ce que** le support de ressort (53) est formé par plusieurs bras d'appui (53') reliés à un corps de support (37) central de la cartouche filtrante (3) ou d'un seul tenant avec celui-ci, en saillie rentrante dans le support de soupape (58) lorsque la cartouche filtrante (3) est montée dans le filtre (1).

31. Filtre selon l'une quelconque des revendications 24 à 30, **caractérisé en ce que** le support de soupape (58) présente pour chaque bras d'appui (53') une ouverture d'introduction (53") adaptée en forme et en position, et que les bras d'appui (53') et les ouvertures d'introduction (53") forment ensemble un codage clef et serrure qui n'autorise un montage d'une cartouche filtrante (3) que quand les bras d'appui (53') ont une forme et une position correspondant aux ouvertures d'introduction (53").

32. Filtre selon la revendication 30 ou 31, **caractérisé en ce que** la cartouche filtrante (3) présente, outre les bras d'appui (53') formant les supports de ressort (53), des premiers éléments de positionnement (37'), que le support de soupape (58) présente, outre les ouvertures d'introduction (53"), des deuxièmes éléments de positionnement (37") et que, au moyen des premiers et des deuxièmes éléments de positionnement (37' et 37") la cartouche filtrante (3), lors de son montage dans le filtre (1), peut être mise dans une position où ses bras d'appui (53') sont susceptibles d'intervenir dans le sens de la circonférence par rapport aux ouvertures d'ouverture (53") du support de soupape (58).

33. Filtre selon l'une quelconque des revendications 24 à 32, **caractérisé en ce que** le contre-filetage (61') est agencé en tant que filetage extérieur dans ou à la bride de connexion (60) à une nipple filetée (63) saillant du plan de la bride de connexion (60) et formant une partie de la bride de connexion (60).

34. Filtre selon la revendication 1, **caractérisé en ce qu'**il est réalisé en tant que filtre interchangeable à visser, le filtre (1) étant conçu pour relier à une bride de connexion (60) un dispositif (6) possédant un circuit de liquide à filtrer, le boîtier de filtre (2) présentant, côté bride, un filetage (26) qui peut être vissé avec un contre-filetage (61') dans ou à la bride de connexion (60), la soupape de contournement (5) étant agencée dans un support à soupape (58) doté d'un embout creux cylindrique côté bride, et l'embout pouvant être emmanché avant ou lors d'un premier montage du filtre (1) à la bride de connexion (60) dans un canal de liquide pur (61) de la bride de connexion (60).

35. Filtre selon la revendication 34, **caractérisé en ce que** le support de soupape (58) est, côté circonférence, réalisé fermé et qu'il présente, sur sa face frontale éloignée de la bride, au moins une butée (58') pour le ressort dans son état détendu par le support de ressort (53) de la cartouche filtrante (3) et au moins un passage (58") pour liquide filtré.

36. Filtre selon la revendication 35, **caractérisé en ce qu'**est agencé, entre le ressort (52) et le passage (58"), un corps de couverture (59) soumis au ressort (52) dans la direction du passage (58"), le support de ressort (53) qui se trouve à la cartouche filtrante (3) soutenant le ressort (52) par le biais du corps de couverture (59), lorsque le filtre (1) est monté, et le corps de couverture (59) obturant le passage (58") lorsque la cartouche filtrante (3) est retirée.
